(19) Europäisches Patentamt / European Patent Office / Office européen des brevets

(11) **EP 3 784 036 B1**

(12) **EUROPÄISCHE PATENTSCHRIFT**

(45) Veröffentlichungstag und Bekanntmachung des Hinweises auf die Patenterteilung:
**20.07.2022   Patentblatt 2022/29**

(21) Anmeldenummer: **20737099.0**

(22) Anmeldetag: **25.06.2020**

(51) Internationale Patentklassifikation (IPC):
*A01M 29/28* (2011.01)   *G06F 30/00* (2020.01)
*G16B 40/00* (2019.01)

(52) Gemeinsame Patentklassifikation (CPC):
**A01M 29/28**

(86) Internationale Anmeldenummer:
**PCT/EP2020/067905**

(87) Internationale Veröffentlichungsnummer:
**WO 2020/260501 (30.12.2020 Gazette 2020/53)**

(54) **VERFAHREN ZUM BEEINFLUSSEN VON GLIEDERFÜSSERN**

METHOD FOR INFLUENCING ARTHROPODS

PROCÉDÉ POUR INFLUENCER DES ARTHROPODES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2019   DE 102019117088
13.08.2019   DE 102019121833**

(43) Veröffentlichungstag der Anmeldung:
**03.03.2021   Patentblatt 2021/09**

(73) Patentinhaber: **Rutronik Elektronische Bauelemente GmbH
75228 Ispringen (DE)**

(72) Erfinder: **MANGLER, Andreas
76228 Karlsruhe (DE)**

(74) Vertreter: **RPK Patentanwälte
Reinhardt, Pohlmann und Kaufmann
Partnerschaft mbB
Grünstraße 1
75172 Pforzheim (DE)**

(56) Entgegenhaltungen:
**WO-A1-2012/094768     WO-A1-2016/165035
WO-A1-2018/104135**

- **COOPER SAMUEL J ET AL: "Simulated impedance of diffusion in porous media", ELECTROCHIMICA ACTA, Bd. 251, 27. Juli 2017 (2017-07-27), Seiten 681-689, XP085232015, ISSN: 0013-4686, DOI: 10.1016/J.ELECTACTA.2017.07.152**

**Beschreibung**

Der vorliegenden Erfindung liegt folgende Arbeit zugrunde: Verfahren zur substituierenden Modellierung von Sensorstrukturen von Gliederfüßern auf der Basis von Equivalent-Circuit-Modellen mit Mehrfrequenzanregung für Deep-Learning-Verhaltensmuster von Gliederfüßern (Arthropoden)

Inhalt

- Zieldefinition
- Einführung und Motivation
- Sensorische Funktionen der Gliederfüßer
- Scoring Modelle der Sensorischen Funktionen von Gliederfüßern
- Grundlegendes Funktionsprinzip des Systems
- Parameter zur Beeinflussung der Verhaltensmuster
- Stimulationssignalgenerator, der ein Frequency-Division-Multiplexing-Signal (FDM) und ein Time-Division-Multiplexing-Signal (TDM) miteinander kombiniert
- Equivalent-Circuit-Modelle (ECM) für das Multisensorsystem von Gliederfüßern
- Transformation in Transmission Line Modelle (TLM)
- Einteilung der TLM und Zuordnung der sensorischen Eigenschaften
- Mathematische Grundlagen zur Berechnung des Impedanzspektrums
- Topographische und tomographische Analyse mittels Taufaktorberechnung
- Parameterextraktion des Sensormodells
- Maschinelles Lernen durch modellbasiertes adaptives Regelungssystem
- Anwendung von neuronalen Funktionen
- Deep Learning mithilfe eines Feedback-Loops zu extrahierten Parametern und Anpassung der Parameter

Abstract:
Die Impedanzspektroskopie ist ein anerkanntes, nicht-invasives Messverfahren insbesondere zur Charakterisierung und Analyse elektrochemischer und biochemischer Systeme. Derzeit wird die Impedanzspektroskopie erfolgreich unter Laborbedingungen eingesetzt; eine breite industrielle und kommerzielle Anwendung in eingebetteten Systemen ist noch nicht erfolgt. Die Anwendung dieser Methode in biochemischen Systemen wie Menschen, Tieren und insbesondere Gliederfüßern ist anspruchsvoll. Eine der Herausforderungen besteht darin, skalierbare Modellierungsalgorithmen und auf künstlicher Intelligenz basierende Deep-Learning-Algorithmen zu finden, die universell einsetzbar sind, aber dennoch für autonome eingebettete Echtzeitsysteme mit geringerem Speicherbedarf geeignet sind. Dieses Dokument beschreibt ein Verfahren zur substituierenden Modellierung von Sensorstrukturen von Gliederfüßern auf der Grundlage von Equivalent-Circuit-Modellen mit Mehrfrequenzanregung für Deep-Learning-Verhaltensmuster von Gliederfüßern [7].

Das Verfahren beschreibt eine robuste und universell angewandte Methodik zur parametrischen und nichtparametrischen Darstellung des nichtlinearen Impedanzmodells und des korrelierten Verhaltens von Gliederfüßern.

Zur Industrialisierung von Software und Hardware ist es wichtig, dass die Implementierung des Signalgenerators zur Anregung von Gliederfüßern in einem mikrocontrollergestützten System realisiert werden kann. Die Etablierung der Impedanzspektroskopie und deren Signalgeneratoren zur Anregung in kommerziellen Anwendungsbereichen mit oder ohne Online-/Cloud-Verbindung erfordert Algorithmen, die idealerweise nach einer Reihe identischer mathematischer Algorithmen und Verfahren funktionieren.

Universell verwendbare Modellierungen sind gerade bei der Vielzahl von Gliederfüßern enorm wichtig. Eine dreidimensionale Darstellung wird typischerweise verwendet, um die Impedanz biochemischer Systeme zu veranschaulichen. Ein zielführender Algorithmus sollte jede Art von parametrischer Darstellung unterstützen, z.B. abhängig von Z real, Z imaginär, Frequenz, Zeit, Einschwingzeit, Relaxationszeit, Temperatur, Luftdruck und Luftfeuchtigkeit. Das Verfahren ermöglicht es, Gliederfüßer zu beeinflussen und zu stimulieren und die Algorithmen durch eine begrenzte Anzahl von Parametern anzupassen, um den Einsatz auf verschiedene Klassen von Gliederfüßern auszudehnen [7].

Diese Methode ist aus einem so genannten Big-Data-Ansatz hervorgegangen, der darauf abzielt, beliebig viele verschiedener nichtlinearer Modelle mit nur einem Algorithmus zu beschreiben.

Durch die spezielle Kombination verschiedener Ansätze aus anerkannten mathematischen Methoden und physikalischen Methoden ist es gelungen, einen neuen optimierten Algorithmus zu entwickeln, mit dem das spezifische Verhalten von Gliederfüßern beeinflusst und stimuliert werden kann.

Biochemische Sensoren von Gliederfüßern

Stellvertretend für Gliederfüßer werden am Beispiel von Mosquitos die Sensoreigenschaften erklärt. Die Geruchsreaktionen werden durch die Aktivierung von olfaktorischen sensorischen Neuronen (OSNs) ausgelöst, die hauptsächlich an Antennen, Oberkieferpalpen, Mundwerkzeugen (bestehend aus Rüssel und Labellum) und Tarsen lokalisiert sind. Diese sensorischen Anhänge können sehr unterschiedliche extrinsische Reize wahrnehmen, wie z.B. flüchtige und nichtflüchtige Gerüche oder Pheromone, Temperatur, Luftfeuchtigkeit, unschädliche oder schädliche Berührung sowie Schwerkraft, um eine komplexe Zusammenstellung von unterschiedlichen Wegen der Wahrnehmung von Gliederfüßern zu aktivieren.

Die Modellierung der elektrischen und biochemischen Eigenschaften, sowie die Anregung von Gliederfüßern stellt eine große Herausforderung dar. Die Definition der nichtlinearen dynamischen Eigenschaften auf der Grundlage definierter Parameter ist ein hochkomplexer Prozess. Um experimentell ermittelte Ergebnisse mit dem aktuellen Modell zu vergleichen, müssen die Gliederfüßer in einem definierten und möglichst stabilen Betriebszustand gehalten werden. Unter Laborbedingungen ist dies mit einem gewissen technischen Aufwand weitestgehend möglich, in der Praxis jedoch, innerhalb von eingebetteten Systemen, wie z.B. mobilen oder tragbaren Geräten, nur bis zu einem bestimmten Punkt. Vier Merkmale beschreiben in Bezug auf die Herausforderungen die typische Aktivität von Gliederfüßern unter realen Bedingungen.

Da ist zunächst die Volatilität, d.h. die Aktivität und die dynamischen Veränderungen, die Geschwindigkeit der Veränderungen und die äußeren Einflüsse, in der das Umfeld der Gliederfüßer sich verändert. Die zweite Herausforderung ist die Unsicherheit der Messung und der damit verbundenen Daten, die mangelnde Vorhersehbarkeit der Ereignisse, die mangelnde Kenntnis und das mangelnde Verständnis der Ereignisse und ihrer Auswirkungen auf die Gliederfüßer. Drittens ist die Komplexität ein reales Problem, da eine Reihe von Parametern gleichzeitig die Gliederfüßer beeinflusst und es unmöglich macht, Abweichungen direkt definierten Ursachen zuzuordnen. Das vierte und letzte Merkmal ist die Mehrdeutigkeit, das zu Fehlinterpretationen und mangelnder Definition der verschiedenen Zustände der Gliederfüßer führen kann. Vor diesem Hintergrund wurde das Forschungsprojekt gestartet, um einen allgemein anerkannten und anwendbaren Algorithmus zu entwickeln, der robust ist und das Problem implizit vereinfacht und in definierte Schritte zerlegt.

Folgende Inhalte sind Gegenstand und Inhalt des Verfahrens und des Verfahrenschutzes

- Ein Software-Framework, das es uns ermöglicht, Daten und das Verhaltensmuster der Gliederfüßer zu verstehen, was zu verwertbaren Erkenntnissen führt, die automatisch die Algorithmen des Frequenzmusters verbessern
- Verwendung von maschinellem Lernen und Deep-Learning-Algorithmen in eingebetteten Systemen
- Korrelation zwischen Gliederfüßerverhalten und Frequenzmuster des Anregesignals
- Parametrisierung des Verhaltens des Nervensystems basierend auf äquivalenten Ersatzschaltbildmodellen (Equivalent-Circuit-Modellen, ECM)
- Insbesondere die Verwendung von Transmission Line Modellen TLM zur Modellierung von äquivalenten Ersatzschaltbilder
- Verwendung von vereinfachten Ersatzschaltbildern wie z.B. Infinite Voigt Modelle zur Bestimmung von Impedanzspektren aus empirischen ermittelten Daten
- Non-invasive Ganglion-Stimulation mit adaptiven Frequenzpattern
- Non-invasive Stimulation mit adaptiven Frequenzpattern, die die Eigenresonanz der sensorischen Rezeptoren der Gliederfüßer beeinflussen
- Verwendung von verdichteten ECMs und Modellparametern durch Normalisierung von Parametern wie konstante Phasenelemente CPE und Infinite Voigt Schaltkreise
- Vereinfachung der Sensorstruktur und des Nervensystems von Gliederfüßern durch Zerlegung der chemischen, biologischen und physikalischen Eigenschaften. Die fusionierten Sensoreigenschaften der Gliederfüßer werden aufgespalten zur Entflechtung der komplexen Sensor-Strukturen
- Analyse und Darstellung der sensorischen Eigenschaften der Gliederfüßer im Impedanzspektrum
- Verwendung von unterschiedlichen Impedanzdarstellungen zur Entflechtung der komplexen Vorgänge mit Hilfe von Nyquist-Diagramm, DRT-Distribution Relaxation Time Methode, Impedanz in Abhängigkeit von Phasenwinkel und Frequenz
- Verwendung der Fourier-Transformation und der Fast Fourier Transformation (FFT) und insbesondere der Inversen Fourier-Transformation (Rücktransformation) zur Analyse der Bildfunktion $Y(\omega)$ und der Originalfunktion $y(t)$
- Verwendung der Diskreten Fourier-Transformation DFT zur speichereffizienten Nutzung der Algorithmen auf Basis eines Microcontrollers unter Einbindung eines Goertzel-Algorithmus für die Signalauswertung, insbesondere bei Verwendung von mehr als einer Anregefrequenz
- Verwendung der Laplace-Transformation zur Analyse von zeitkontinuierlichen Signalen und der Analyse der Bild-Unterfunktion $F(s)$ und der Original- oder Oberfunktion $f(t)$ und insbesondere der Rücktransformation, der inverse Laplace-Transformation
- Verwendung der z-Transformation zur Analyse von zeitdiskreten Signalen und deren inverse Z-Transformation
- Verwendung von Vektoranalysis als ebene oder räumliche Analyse von Zeitfunktionen, Frequenzfunktionen und insbesondere Impedanzspektren zur Beschreibung von signifikanten Extrempunkten im Spektrum

- Beschreibung eines Verfahrens zur Implementierung in MCU-basierten Systemen ohne oder mit Cloud-Konnektivität
- Generierung eines Referenzmodells zur Anregung der Gliederfüßer mittels Frequenz-Pattern, um ein definiertes Verhaltensmuster der Gliederfüßer zu erzwingen (z.B. Relax- oder Schlafmodus) oder die Funktion der sensorischen Rezeptoren zu beeinflussen
- Aktualisierung und Anpassung des Frequenzmusters mittels Funkübertragung oder ein durch den intern im Gerät verbauten Microcontroller selbst berechnetes Frequenzmuster
- Trichelpulsgenerierung zur Simulation von Corona-Entladung Entladungspulssimulation
- Generierung von Trichelpulssequenzen und Burstpulssequenzen mit einem Microcontroller basierenden PWM - Modulator
- Erzeugung von Frequenzpattern zur Simulation von Ionisationsvorgängen und deren zeitlichen Verläufe
- Anpassung der Frequenzmuster auf Basis der graphischen Funktion des Impedanzspektrums mit Hilfe von Vektoranalyse
- Universelle anpassbare Generierung von Frequenz-Pattern und Nutzung in einem Funkbasierten Netzwerk
- Bestimmung der Parameter zur Beeinflussung der Verhaltensmuster und der umweltbezogenen und physikalischen Abhängigkeiten
- Verwendung von äquivalenten Ersatzschaltbildmodellen (Equivalent-Circuit-Modelle (ECMs)) für das Multisensorsystem von Gliederfüßern, insbesondere Transmission Line Modelle TLM
- Parameterextraktion der aufgespalteten Sensormodelle
- Verwendung des Tortuositätsfaktor zur Beschreibung und Auswertung von tomographischen und topgraphischen Bild-Daten
- Kombination aus Time Division Multiplexing (TDM), Frequenz Division Multiplexing (FDM) und Dither-Signalen zur Anregung der segmentierten und verdichteten ECM-Sensormodelle der Gliederfüßer
- Erweiterung der Algorithmen für maschinelles Lernen, um unterschiedliche Arten von Gliederfüßern in unterschiedlichen Regionen abzudecken
- Analyse der Kurvenscharen im Impedanzspektrum und Anpassung der Kurven über Gradienten und Vektoren
- Erweiterung von Algorithmen für Deep Learning zur automatischen Anpassung der Algorithmen bei veränderten Umweltbedingungen und unterschiedlichen Arten von Gliederfüßern
- Daraus ergeben sich umsetzbare Erkenntnisse, die die Softwarealgorithmen verbessern, um daraus sog. Referenzmodelle und Referenzmodellierung zu definieren
- Verwendung von Infinite Voigt-Modellen zur empirischen Bestimmung von Zeitkonstanten und Anregefrequenzpattern und insbesondere bei der DRT (Distribution Relaxation Time) - Analyse

Die Verhaltensanalyse von Gliederfüßern ist komplex. Um sie effektiv zu betreiben, benötigt man einen vollständigen Überblick über die reale Umgebung, über Messungen und Parameter, die die Gliederfüßer beeinflussen. Auf Basis KI-basierender Algorithmen und dem beschriebenen Verfahren ist es möglich, ohne spezifische kontinuierliche Programmänderung kognitive Funktionen auszuführen, die das Sensorsystem und Nervensystem von Gliederfüßern gezielt beeinflussen.

Hieraus ergeben sich weitere Erkenntnisse wie:

- Verstehen der Gliederfüßer in ihrer jeweiligen Umgebung
- Empfinden wie Gliederfüßer
- Effektiverer und anpassungsfähiger Schutz gegen Krankheiten
- Funktionsfähige Algorithmen aus allen Bereichen in allen Ländern

**Abb. 1:** Ziel ist eine vorausschauende Analyse bzw. Analytik, um im Vorfeld von Ereignissen Algorithmen anzupassen

**Abb. 2:** Die drei Schritte von der deskriptiven Analyse über prädiktive Daten bis hin zu Deep Learning

**Motivation**

**Motivation des Projekts:**

Die asiatische Tigermücke Aedes albopictus ist eine hochinvasive Art und potenzieller Überträger mehrerer Arboviren (z.B. Denguefieber, Chikungunya, Zika) und Parasiten (z.B. Dirofilaria), die für die Weltgesundheit enorme Bedeutung haben. **[1 Lombardo et al.]** Im Vergleich zu anderen Spezies zeigen die Weibchen von Ae. albopictus ein für Mensch und Tiere besonderes gefährliches Verhalten, nämlich die generelle Suche nach Wirten sowie ein sehr aggressives Beißverhalten. Mehrere komplexe Verhaltensweisen wie Wirtssuche, Fütterung, Paarung oder Eiablage beruhen auf olfaktorischen Reizen, die auf eine Reihe von sensorischen Neuronen beruhen und stimuliert werden, die sich hauptsächlich auf speziellen Kopfanhangsgebilden wie Antennen, Oberkieferpalpen und Mundwerkzeugen befinden.

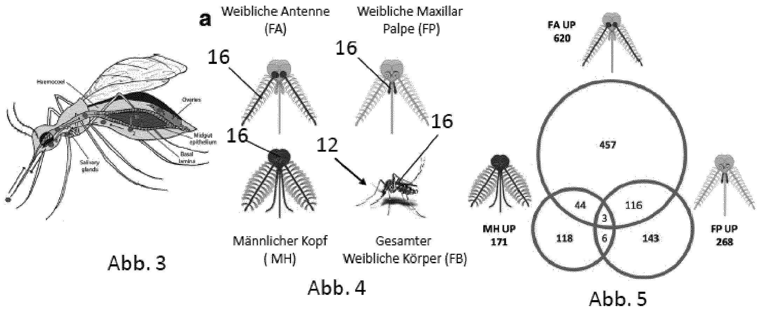

**Abb.3:** Beispiel eines Arthropoden/Gliederfüßers

Die asiatische Tigermücke ist ein aggressiver, tagsüber beißender Überträger mehrerer menschenpathogener Arboviren. [1] Ae. albopictus wurde als eine der 100 schlimmsten invasiven Arten der Welt beschrieben (Global Invasive Species Database, http://www.issg.org/database/). Die Auswirkungen auf die menschliche Gesundheit hängen in der Tat von der schnellen und aggressiven weltweiten Ausbreitung aus dem heimischen Verbreitungsgebiet (Südostasien) ab, ebenso wie von der ökologischen Anpassungsfähigkeit durch verschiedene Merkmale, darunter vor allem das Ernährungsverhalten, die Diapause und die Überträgerkompetenz. Biologische Signale, die aus der Umwelt aufgenommen und durch den Geruchssinn und andere chemosensorische Modalitäten wahrgenommen werden, spielen eine zentrale Rolle bei der Anpassung der Verhaltensweisen wie Wirtssuche, Fütterung, Paarung, Eiablage und Aufnahme von Abwehrmitteln. Die Geruchsreaktionen werden durch die Aktivierung von olfaktorischen sensorischen Neuronen (OSNs) ausgelöst, die hauptsächlich an Antennen, Oberkieferpalpen, Mundwerkzeugen (bestehend aus Rüssel und Labellum) und Tarsen zu finden sind. Diese sensorischen Anhänge können sehr unterschiedliche extrinsische Reize wahrnehmen, wie z.B. flüchtige und nichtflüchtige Gerüche oder Pheromone, Temperatur, Luftfeuchtigkeit, unschädliche oder schädliche Berührung und Schwerkraft, um eine komplexe Zusammenstellung von unterschiedlichen Wegen der Wahrnehmung der Mücke zu aktivieren. Die Wahrnehmung chemischer Reize, d.h. die Chemosensorik, beruht auf chemosensorischen Neuronen, die selektiv durch verschiedene flüchtige Verbindungen, wie z.B. Duftstoffmoleküle und Pheromone, aktiviert werden. Die molekularen Komponenten, die der peripheren olfaktorischen Signalübertragung zugrunde liegen, umfassen eine Reihe von intrazellulären und extrazellulären Zusammenhängen. Die Komplexität der olfaktorischen Faktoren zusammen mit den unterschiedlichen Auswirkungen und/oder Vielfältigkeit trägt direkt zur Anregung des spezifischen Verhaltens der Mückenarten bei. Aus rezeptorzentrierter Sicht beruht die Chemosensorik bei Gliederfüßern weitgehend auf verschiedenen Vertretern dreier Genfamilien, die hauptsächlich in OSNs exprimiert werden, welche sich wiederum in speziellen Sensillen auf olfaktorischen Anhängen befinden: Geruchsrezeptoren (ORs), Geschmacksrezeptoren (GRs) und ionotrope Rezeptoren (IRs). Geruchsstoffe und chemische Verbindungen durchqueren die Kutikula durch Sensillarporen und erreichen so die wässrige Sensillarlymphe.

Damit werden sie erkannt und zu ihren entsprechend spezifischen Rezeptoren auf OSNdendritischen Membranen transportiert. Dies geschieht durch eine vielfältige Anzahl von extrazellulären Riechstoffbindungsproteinen (OBPs) und Pheromonbindungsproteinen (PBPs), die von einem Netzwerk von Nebenzellen abgesondert werden und sich an der Basis der Gliederfüßersensilla befinden. Es gibt verschiedene Arten von chemosensorischen Sensillen, die die OSNs und andere sensorische Neuronen sowie die dazugehörigen Nebenzellen beherbergen, die wiederum sind verteilt auf die sensorischen Anhänge des Gliederfüßers.

**Abb. 4:** Schematische Darstellung eines weiblichen Kopfes mit hervorgehobenen Antennen (FA, rot markiert) und Palpen (FP, oberer Teil der Grafik) [1 Lombardo et al.], männlicher Kopf (MH), kompletter Körper des weiblichen Gliederfüßers (FB, unterer Teil der Grafik).

**Abb. 5:** Paarweise Probenvergleiche. Proportionales Venn-Diagramm, das paarweise Vergleiche zwischen Antennen und Palpen eines Weibchens und Köpfen eines Männchens zeigt. Gen-Subsets, die in jeder Probe im Vergleich zum weiblichen Körper gemäß dem edgeR-Schwellenwert bei einer Signifikanz von P < 0,001 (siehe Tabelle) hervorgehoben sind, wurden miteinander verglichen. Überlappungen (und relative Zahlen) stellen Subsets von Genen dar, die in mehr als einem Gewebe unterschiedlich verteilt sind.

## Übersicht über die Antennen einer weiblichen Ae. aegypti

Aedes aegypti ist eine stark anthropophile Mücke, die für die Übertragung von Denguefieber und Gelbfieber auf der ganzen Welt verantwortlich ist. Wie bei anderen Mücken wird das Beiß- und Wirtspräferenzverhalten dieses Krankheitsüberträgers weitgehend durch den Geruchssinn beeinflusst, der vermutlich durch G-Protein-gekoppelte Rezeptor-Signalkaskaden verbessert wird. Hier spricht man von der Identifizierung und Charakterisierung von AaOr7 Protein, dem ersten bzw. wichtigsten Geruchsrezeptor bei Ae. aegypti. Dieser Rezeptor zeigt eine extrem hohe primäre Aminosäurekonservierung mit AgOr7, einem weiteren Geruchsrezeptor, der in Anopheles gambiae (Malariaüberträger der Afrotropis) identifiziert wurde, sowie mehrere zuvor identifizierte Geruchsrezeptoren in Drosophila melanogaster und anderen Gliederfüßern. Dies zeigt sich bei ausgewachsenen chemosensorischen Geweben und in mehreren Lebens- und Entwicklungsphasen der Ae. aegypti. Innerhalb des ausgewachsenen Geruchssystems ist das AaOr7-Protein speziell in den meisten Antennen- und Oberkieferpalpen-Sensillen sowie in einem Subset von Rüssel-Sensillen enthalten. Die stimmt mit der Rolle von AaOr7 als Geruchs- und Geschmackssensor überein, was die Hypothese unterstützt, dass AaOr7 und seine Orthologie für chemosensorische Prozesse während des gesamten Lebenszyklus eines Gliederfüßers von allgemeiner Bedeutung sein können [4].

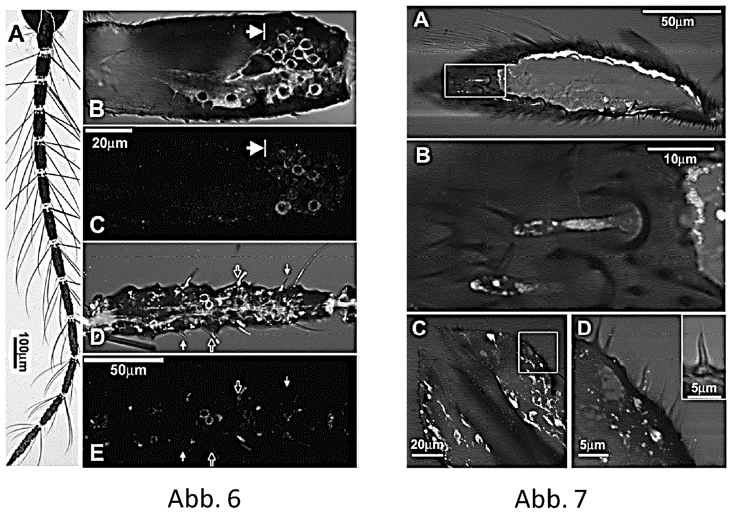

**Abb. 6:**     **Abbildung einer Antenne eines Weibchens der Ae. aegypti [4].**

(A). Im ersten Flagellarsegment der weiblichen Antennen beschränkt sich die AaOr7-spezifische Markierung auf das distale Drittel (rechts, durch Pfeil gekennzeichnet), in dem eine Reihe von markierten neuronalen Zellkörpern und projizierenden Dendriten zu sehen ist.

(B, C) AaOr7-spezifische Markierung wurde entlang der gesamten Antenne beobachtet, ein Beispiel für ein distales Segment, vermutlich 9-11,

(D, E) ist dargestellt. AaOr7-Markierung ist in Dendriten sichtbar, die trichodische (leere Pfeile) anregen, aber nicht in Rillenzapfen-Sensillen (gefüllte Pfeile). Kombination aus lichtmikroskopischem Bild, AaOr7 (magenta in [4]), neuronaler (grün in [4]) und nuklearer (blau in [4]) spezifischer Markierung (B, D) und entsprechendem Einzelbild der AaOr7-spezifischen Markierung (C, E). Farben gekennzeichnet, siehe [4].

**Abb.7:**     AaOr7-spezifische Markierung auf der weiblichen Oberkiefer-Palpe (Capitate-Peg-Sensilla, A, B) und der Labial-Palpen-T2-Sensilla (C, D). (A) Zusammengesetztes Bild, AaOr7 (magenta in [4]), neuronale (grün in [4]) und nukleare (blau in [4]) Markierung. (B) Vergrößerte Ansicht des Rahmens in (A). (C) Zusammengesetztes Bild eines optischen Abschnittes (2μm) der Spitze einer weiblichen Labialpalpe, wo die Markierung, die an dendritische Strukturen in diesen Sensilla erinnert, sehr schwach ist, aber reproduzierbar zu beobachten ist, AaOr7 (magenta in [4]), neuronale (grün in [4]) und nukleare (blau in [4]) Markierung. (D) Vergrößerte Ansicht des Rahmens in (C). Farben gekennzeichnet, siehe [4].

## Transkript-Häufigkeits-Verteilung in chemosensorischen Geweben

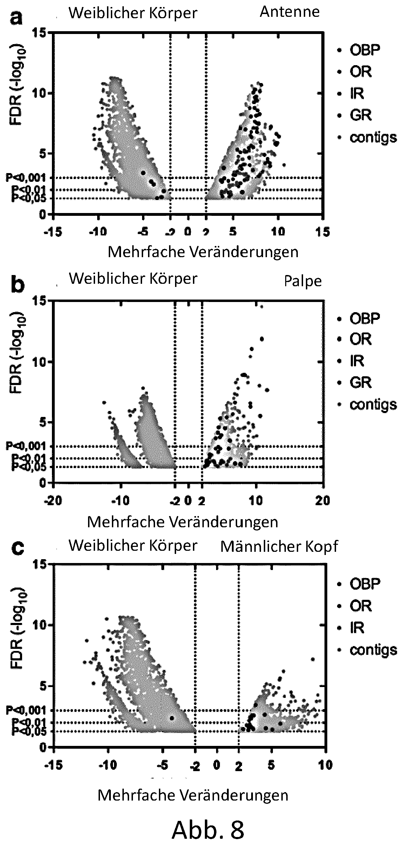

Die gewebespezifische Transkript-Zuordnung wurde durch paarweise Vergleiche zwischen den Proben bewertet. **Fold Change (FC),** logarithmische Werte und **Falscherkennungsraten (FDR)** wurden mit edgeR berechnet, um eine statistische Validierung durchzuführen. In der Tabelle sind Transkripte (im Folgenden als Gene dargestellt) ausgewählt, die eine erhöhte Häufigkeit an chemosensorischem Gewebe (weibliche Antennen, weibliche Palpen und männliche Köpfe) im Vergleich zum weiblichen Ganzkörper zeigen, und diese miteinander verglichen. Ein definierter statistischer FDR-Schwellenwert ($P < 0,001$) wurde verwendet, um Subsets hochverstärkter Gene in weiblichen Antennen (620 Contigs) und in weiblichen Palpen (268 Contigs, Tabelle 1 und Abb. 8) zu definieren. Innerhalb dieser Kriterien wurden 171 Contigs in männlichen Köpfen im Vergleich zum weiblichen Körper angereichert, was auf ein geschlechtsspezifisches Häufigkeitsprofil hinweist (Abb. 8).

## Genexprimierungs-Verteilung mit edgeR

Tabelle 1: . Genexprimierung-Verteilung mit edgeR. Paarweise Vergleiche (FA vs. FB, FP vs. FB und MH vs. FB) heben Gene hervor, die in jeder Probe nach unterschiedlichen Wahrscheinlichkeitsschwellen ($P < 0,05$, $P < 0,01$ und $P < 0,001$) auftauchen.

|  |  | $P < 0.05$ | $P < 0.01$ | $P < 0.001$ |
|---|---|---|---|---|
| FA vs FB | **FA UP:** | **1992** | **1129** | **620** |
|  | FB UP: | 3068 | 1962 | 1207 |
|  | Total: | 5060 | 3091 | 1827 |
| FP vs FB | **FP UP** | **1752** | **731** | **268** |
|  | FB UP | 3445 | 1755 | 807 |
|  | Total: | 5197 | 2486 | 1075 |
| MH vs FB | **MH UP** | **2137** | **819** | **171** |
|  | FB UP | 2918 | 1768 | 1091 |
|  | Total: | 5055 | 2587 | 1262 |

**Abb. 8**     Differenzierte Analyse der Exprimierung (DE) chemosensorischer Gene. Die Vulkandiagramme zeigen die relative Exprimierung von Contigs in Paarvergleichen.

Die x-Achse repräsentiert den logFC (Fold Change) zwischen den Geweben. Die y-Achse stellt den negativen log10 des p-Wertes (Falscherkennungsrate) dar, wie er durch den Fisher's Exact Test berechnet wurde.

a. weibliche Körper vs. Antennen.

b. weibliche Körper vs. Palpen.

c. weibliche Körper vs. männliche Köpfe. Im Plot werden nur unterschiedlich exprimierte Contigs (P < 0,05, logFC <-2 und >2) dargestellt (graue Punkte in [1]), OBP schwarz, OR rot (in [1]), GR grün (in [1]) und IR blau (in [1]). Farben markiert.

## Chemosensorische Genfamilien

Tabelle 2: Chemosensorische Genfamilien. In der Spalte Transkriptome wird die Anzahl der Gene angegeben, die zu jeder chemosensorischen Familie gehören, die im Transkriptom durch die manuelle und automatisierte (in Klammern) BLAST-Analyse identifiziert wurden. Die anderen Spalten (Antennen, Palpen und männliche Köpfe) zeigen die Anzahl der chemosensorischen Gene in jedem angereicherten Subset (siehe Tabelle x Genexprimierungsprofiling mit edgeR), Schwellenwert bei FDR < 0,05).

|  | Transcriptome (33,846) | Antennae (5060) | Palps (5197) | Male Heads (5055) |
| --- | --- | --- | --- | --- |
| OBP | 77 (68) | 30 | 26 | 15 |
| OR | 82 (59) | 52 | 11 | 3 |
| IR | 60 (43) | 25 | 6 | 6 |
| GR | 30 (28) | 2 | 4 | 0 |
| **Tot.** | **249** | **109** | **47** | **24** |

Mit Hilfe eines Scoring-Modells lassen sich Geruchsbindende Proteine (OBPs, Geruchsrezeptoren (OR), Ionotrope Rezeptoren (IR) analysieren, gruppieren und die Datenmodelle vereinfachen. Mit hohen TPM-Werten ist die Zuordnung die für die Chemosensorik verantwortlichen Proteine und Rezeptoren analysierbar.

**Geruchsbindende Proteine (OBPs)** und die Verteilung in weiblichen Antennen (FA), weiblichen Palpen (FP), männlichem Kopf (MH), weiblichem Körper (FB)

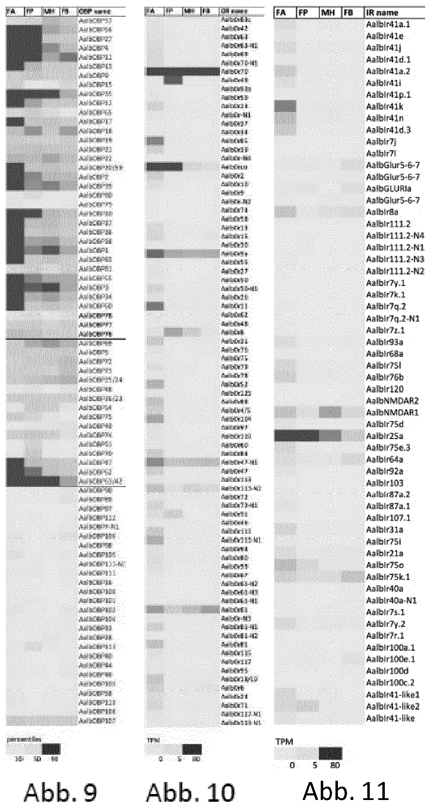

**Abb. 9 Geruchsbindende Proteine (OBPs)** in Transkriptomen von Ae. albopictus. Linker Bereich, Häufigkeitsprofil: Intensitätsskala (Farbverlauf von blau nach gelb, siehe [1], zeigt Pegel von hohen bis niedrigen TPM-Werten), (Farben werden in grau dargestellt von schwarz über grau nach weiß) wie unten angegeben. FA, weibliche Antennen; FP, weibliche Palpen; MH männliche Köpfe und FB, weiblicher Körper. Zugewiesene OBP-Namen, ID in Ae. albopictus (VectorBase ID AALFxxxxxxxx wenn vorhanden oder Contig-ID im Transkriptom), Anzahl der Cysteine, OBP-Unterfamilie, Name und ID des vermuteten Orthologs von Ae. aegypti und Prozentsatz der Identität sind zu erkennen.

**Geruchsrezeptoren (OR)** und die Verteilung in weiblichen Antennen (FA), weiblichen Palpen (FP), männlichem Kopf (MH), weiblichem Körper (FB)

**Abb. 10** Geruchsrezeptoren (OR) im Ae. albopictus Transkriptom. Linker Bereich, Häufigkeitsprofil: Intensitätsskala (Farbverlauf von blau nach gelb, siehe [1], zeigt Pegel von hohen bis niedrigen TPM-Werten), (Farben werden in grau dargestellt von Schwarz über grau nach weiß) wie unten angegeben. FA, weibliche Antennen; FP, weibliche Palpen; MH männliche Köpfe und FB, weiblicher Körper.

**Ionotrope Rezeptoren (IR)** und die Verteilung in weiblichen Antennen (FA), weiblichen Palpen (FP), männlichem Kopf (MH), weiblichem Körper (FB)

**Abb.11** Ionotrope Rezeptoren (IR) im Ae. albopictus Transkriptom. Linker Bereich, Häufigkeitsprofil: Intensitätsskala (Farbverlauf von blau nach gelb, siehe [1], zeigt Pegel von hohen bis niedrigen TPM-Werten), (Farben werden in grau dargestellt von Schwarz über grau nach weiß) wie unten angegeben. FA, weibliche Antennen; FP, weibliche Palpen; MH männliche Köpfe und FB, weiblicher Körper.

**Ionotrope Rezeptoren** (IRs) sind eine große, divergente Unterfamilie von ionotropen Glutamatrezeptoren (iGluRs), **[2][Abuin et.al]** Sie spielen eine wichtige Rolle in der Chemosensorik, Thermosensorik und Hygrosensorik. Analog zu den synaptischen Targeting-Mechanismen ihrer iGluR-Stammfamilie wird vermutet, dass IRs Komplexe aus breit exprimierten Co-Rezeptoren und selektiv exprimierten "Tuning"-Rezeptoren zur Lokalisierung an sensorischen Wimpern bilden. Während die extrazelluläre ligandenbindende Domäne (LBD) der Rezeptoren die sensorische Spezifität definiert, ist die Rolle dieser Domäne bei Co-Rezeptoren unklar. Eine corezeptorspezifische Sequenz in der LBD wurde identifiziert, die eine N-Glykosylierungsstelle enthält. Durch die Kombination molekulargenetischer und zellbiologischer Analysen zeigen wir, dass diese Stelle für den Aufbau von IR-Komplexen in olfaktorischen sensorischen Neuronen entbehrlich ist, jedoch unerlässlich ist für den endoplasmatischen Retikulumaustritt einiger, aber nicht aller IR-Komplexe. Die Daten zeigen die wichtige Rolle des IR-Co-Rezeptors LBD bei der Steuerung des intrazellulären Transports. Sie liefern neue Erkenntnisse über die Stöchiometrie und den Aufbau von IR-Komplexen und decken eine unerwartete Heterogenität in der Regulierung des Transports dieser sensorischen Rezeptorfamilie auf.

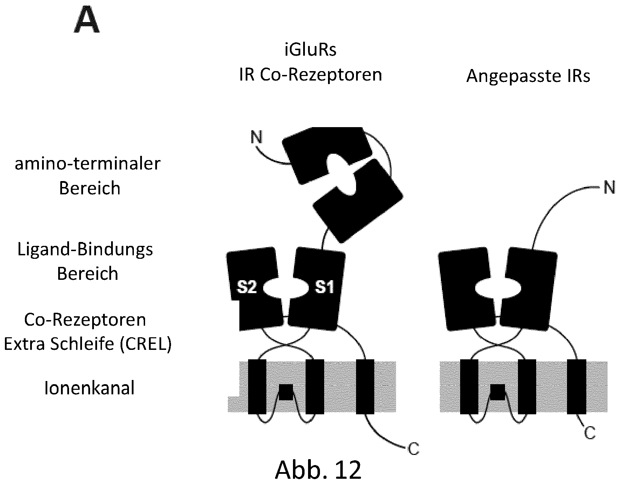

**Abb. 12.** Der IR-Co-Rezeptor CREL hat die Aufgabe im subzellulären Transport (A) Schema der Domänenorganisation von iGluRs, IR-Co-Rezeptoren und Tuning-IRs. [2][Abuin et.al.]

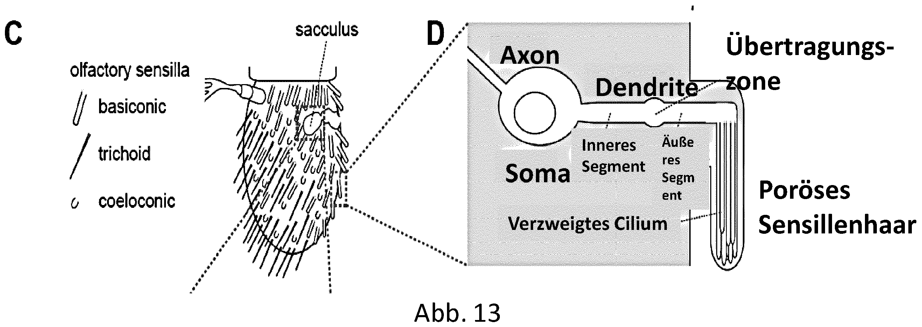

**Abb.13** (C) Schema eines dritten Antennensegments der Drosophila, das die Verteilung verschiedener olfaktorischer Sensillen und anderer sensorischer Strukturen zeigt. Das orangefarbene Kästchen hebt ein einzelnes Sensilla hervor, das in (D) detaillierter zu sehen ist. Das rosa Kästchen zeigt das ungefähre Sichtfeld, das in E-F dargestellt ist, und umfasst die IR8a-Neuronen im Sakkulus, die den Abstimmungsrezeptor IR64a[12] exprimieren. (Sensilla im Sakkulus - die eine ähnliche Gesamtstruktur wie die Oberflächensensillen wie in (D) haben - sind nicht dargestellt.) (D) Schematische Darstellung der anatomischen Hauptmerkmale eines olfaktorischen sensorischen Neurons (OSN); die Morphologie der kutikulären Haare und die Verzweigungen der Wimpern variieren zwischen den verschiedenen Sensillumklassen (Hinweis: Die meisten Sensillen enthalten mehr als ein Neuron pro Haar.) [2][Abuin et.al]

**Geschmacksrezeptoren (GR)** und die Verteilung in weiblichen Antennen (FA), weiblichen Palpen (FP), männlichem Kopf (MH), weiblichem Körper (FB)

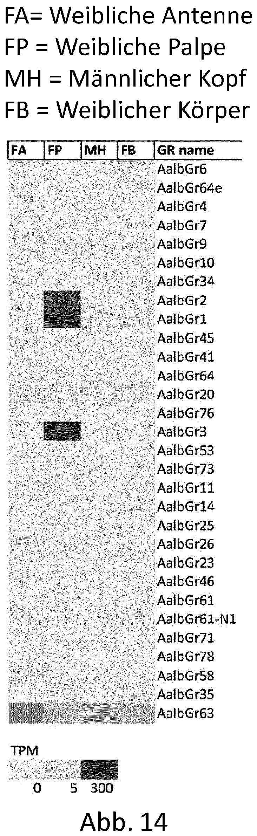

**Abb. 14:** **Geschmacksrezeptoren (GR)** im Ae. albopictus Transkriptom. Linker Bereich, Häufigkeitsprofil: Intensitätsskala (Farbverlauf von blau nach gelb, siehe [1], zeigt Pegel von hohen bis niedrigen TPM-Werten), (Farben werden in grau dargestellt von Schwarz über grau nach weiß) wie unten angegeben. FA, weibliche Antennen; FP, weibliche Palpen; MH männliche Köpfe und FB, weiblicher Körper.

**Häufigkeitsprofile sensorischer Gene und Verteilung zwischen weiblich und männlich**

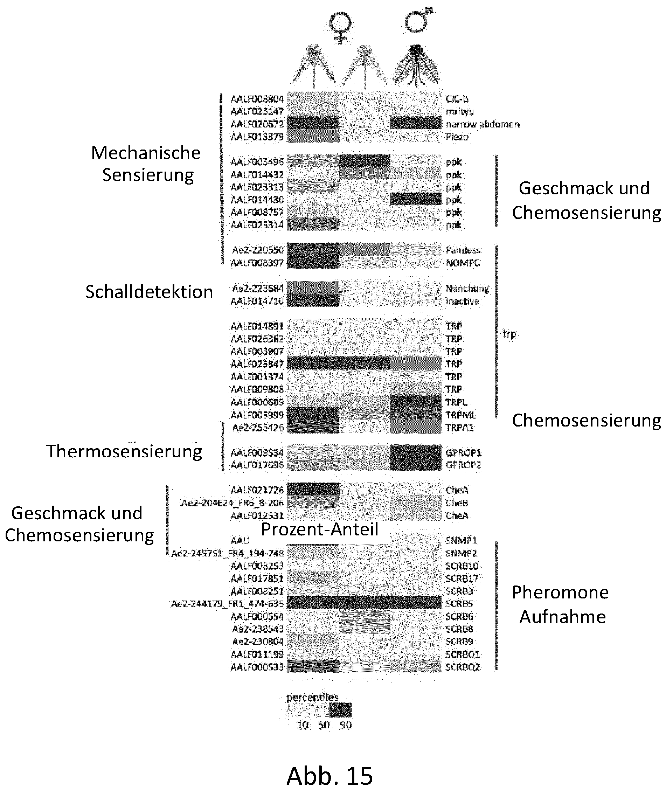

**Abb. 15** Häufigkeitsprofile sensorischer Gene bei Ae. albopictus. Häufigkeitsprofil: Intensitätsskala (Farbverlauf von blau nach gelb, siehe [1], zeigt Pegel von hohen bis niedrigen TPM-Werten), (Farben werden in grau dargestellt von schwarz über grau nach weiß) wie unten angegeben. Genname und Contig-ID (VectorBase-Codes, falls verfügbar) sind ebenfalls zu erkennen.

**qPCR-Validierung.**

Die qPCR-Validierung beschreibt die Korrelation zwischen der transkriptionellen Häufigkeit von 11 Genen sowohl in den Antennen (a) als auch in den Oberkieferpalpen (b)

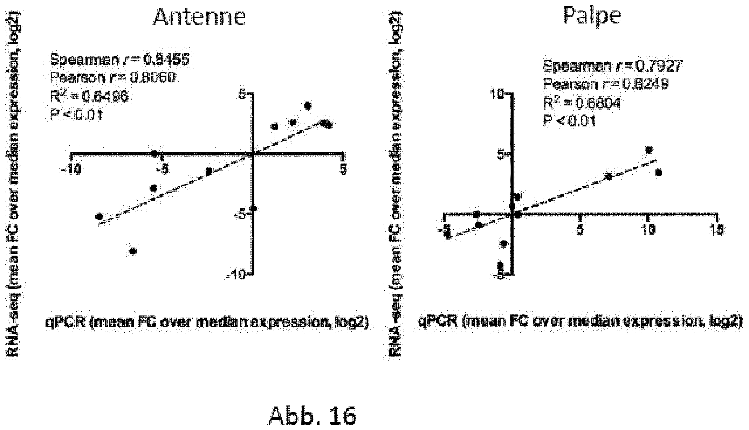

**Abb. 16** qPCR-Validierung. Korrelation zwischen der transkriptionellen Häufigkeit von 11 Genen sowohl in den Antennen (a) als auch in den Oberkieferpalpen (b), die durch qPCR und RNA-Seq gezeigt wird. Der Grad der Häufigkeit ist definiert als das Verhältnis zwischen jedem Probenwert über den Gruppenmedian (Fold Change, FC) sowohl in qPCR- als auch in RNA-Seq-Ansätzen. Für beide Techniken wurde eine statistische Auswertung der Spearman- und Pearson-Tests durchgeführt und die Ergebnisse in den Abbildungen dargestellt.

**Sensorische Fähigkeiten der Gliederfüßer**

Die sensorischen Fähigkeiten der Gliederfüßer kann man auch mit diskreten einzelnen Sensoren beschreiben. Physikalisch betrachtet, ist eine Vielzahl von Sensoren mit fusionierten Sensoreigenschaften notwendig, um die komplexen Sensorstrukturen von Gliederfüßern nachzubilden. Die biologischen Voruntersuchungen haben gezeigt, dass es eine klare Zuordnung gibt von definierten Sensoreigenschaften sowie die Häufigkeitsprofile sensorischer Gene und die Verteilung zwischen weiblich und männlich. Dies sind die idealen Voraussetzungen zum Aufbau von mathematischen Modellen auf Basis der Wahrscheinlichkeitsrechnung.

Zu den physikalischen Sensoren zählen:

- Ionisierungssensor der Luft oder Umgebung

- Geschmacksensoren

- Chemosensoren

- Gassensor/Atemsensor

- Luftqualitätssensor

- $CO_2$-Sensor

- Luftdrucksensor

- Temperatursensor

- Feuchtesensor

- Time-of-Flight-Sensor

- Infrarotsensor

- UV-Sensor

- Beschleunigungssensor

- Schallsensor

- Positions- und Abstandsmessung

Die verschieden Arten der Gliederfüßer haben unterschiedliche sensorische Fähigkeiten und eine unterschiedliche Häufigkeit und Verteilung der sensorischen Fähigkeiten.

**Beschreibung des Verfahrens**

**Einführung**

Die Impedanzspektroskopie ist ein anerkanntes, nicht-invasives Messverfahren insbesondere zur Charakterisierung und Analyse elektrochemischer und biochemischer Systeme. Derzeit wird die Impedanzspektroskopie erfolgreich unter Laborbedingungen eingesetzt; eine breite industrielle und kommerzielle Anwendung in eingebetteten Systemen ist noch nicht erfolgt. Die Anwendung dieser Methode in biochemischen Systemen wie Menschen, Tieren und insbesondere Gliederfüßer ist anspruchsvoll. Eine der Herausforderungen besteht darin, skalierbare Modellierungsalgorithmen und auf künstlicher Intelligenz basierende Deep-Learning-Algorithmen zu finden, die universell einsetzbar sind, aber dennoch für autonome eingebettete Echtzeitsysteme mit geringerem Speicherbedarf geeignet sind. Dieses Dokument beschreibt ein Verfahren zur substitutiven Modellierung von Sensorstrukturen von Gliederfüßern auf der Grundlage von Equivalent-Circuit-Modellen mit Mehrfrequenzanregung für Deep-Learning-Verhaltensmuster von Gliederfüßern [7].
Das Verfahren beschreibt eine robuste und universell angewandte Methodik zur parametrischen und nichtparametrischen Darstellung des nichtlinearen Impedanzmodells und des korrelierten Verhaltens von Gliederfüßern.
Zur Industrialisierung von Software und Hardware ist es wichtig, dass die Implementierung des Signalgenerators zur Anregung von Gliederfüßern in einem mikrocontrollergestützten System realisiert werden kann. Die Etablierung der Impedanzspektroskopie und deren Signalgeneratoren zur Anregung in kommerziellen Anwendungsbereichen mit oder ohne Online-/Cloud-Verbindung erfordert Algorithmen, die idealerweise nach einer Reihe identischer mathematischer Algorithmen und Verfahren funktionieren.

Universell verwendbare Modellierungen sind gerade bei der Vielzahl von Gliederfüßern enorm wichtig. Eine dreidimensionale Darstellung wird typischerweise verwendet, um die Impedanz biochemischer Systeme zu veranschaulichen. Ein zielführender Algorithmus sollte jede Art von parametrischer Darstellung unterstützen, z.B. abhängig von Z real, Z imaginär, Frequenz, Zeit, Einschwingzeit, Relaxationszeit, Temperatur und Feuchtigkeit. Das Verfahren ermöglicht es, Gliederfüßer zu beeinflussen und zu stimulieren und die Algorithmen durch eine begrenzte Anzahl von Parametern anzupassen, um den Einsatz auf verschiedene Klassen von Gliederfüßern auszudehnen [7].

Diese Methode ist aus einem so genannten Big-Data-Ansatz hervorgegangen, der darauf abzielt, beliebig viele verschiedener nichtlinearer Modelle mit nur einem Algorithmus zu beschreiben.

Durch die spezielle Kombination verschiedener Ansätze aus anerkannten mathematischen Methoden und physikalischen Methoden ist es gelungen, einen neuen optimierten Algorithmus zu entwickeln, mit dem das spezifische Verhalten von Gliederfüßern beeinflusst und stimuliert werden kann.

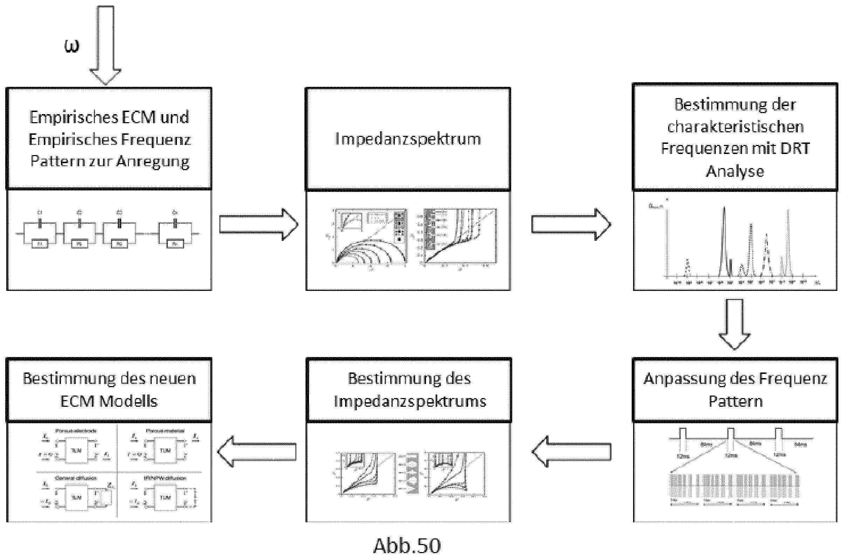

**Abb.50** Vereinfachte Prozessstruktur zu äquivalenten Ersatzschaltbildmodellierung-Modellierung von Gliederfüßer

**Abb. 50** zeigt den vereinfachten Modellierungsprozess der Erfindung. Auf Basis von empirischen Untersuchungen werden Signale im Zeitbereich und im Frequenzbereich zur Anregung der Gliederfüßer erstellt. Das Verfahren zur Anregung verwendet dabei eine kombinierte TDM und FDM-Methode zur Generierung von multispektralen Signalen. Hieraus wird ein vereinfachtes Ersatzschaltbild ECM wie z.B. ein Infinite Voigt Modell erstellt, das eine Serienschaltung von unendlichen RC-Kombination darstellt mit unterschiedlichen Zeitkonstanten. Mit Hilfe des generierten Frequenzpattern und des vereinfachten ECM wird ein Impedanzspektrum abgeleitet. Mittels der DRT-Analyse werden nachfolgend charakteristische Frequenzen und Zeitkonstanten des Gliederfüßers bestimmt. Vorhandene tomographische und topographische Daten des Gliederfüßers vereinfachen die Erstellung des Impedanzspektrums. Aus der Analyse des DRT-Spektrums werden neue Frequenzpattern mit anderen Anregefrequenzen abgeleitet. Diese wiederum dienen der Bestimmung eines neuen verbesserten Impedanzspektrums und davon abgeleitet neue strukturierte Transmission Line Modelle unter Berücksichtigung von Randwertbedingungen. Für einen folgenden Iterations- bzw. Approximationsprozess kann das neu erstellte TLM dann verwendet werden.

## Grundlegendes Funktionsprinzip des Systems

Das grundlegende physikalische, biologische und biochemische Funktionsprinzip beruht auf Erkenntnisse und Untersuchungen, die in den Patenten [8], [9], [10], [11] bereits beschrieben sind. Hierbei wird ein Frequenz-Pattern erzeugt, das auf ein Trägersignal aufmoduliert wird und dann über eine Antenne abgestrahlt wird. Der Gliederfüßer empfängt die unterschiedlichen Signale, die auf die unterschiedlichen sensorischen Anhänge abgestimmt sind wie Antennen, Palpen, Kopf und Körper und andere sensorische Anhänge. Die Signale stören bzw. beeinflussen die sensorische Funktion der Anhänge und damit auch das Verhalten der Gliederfüßer.

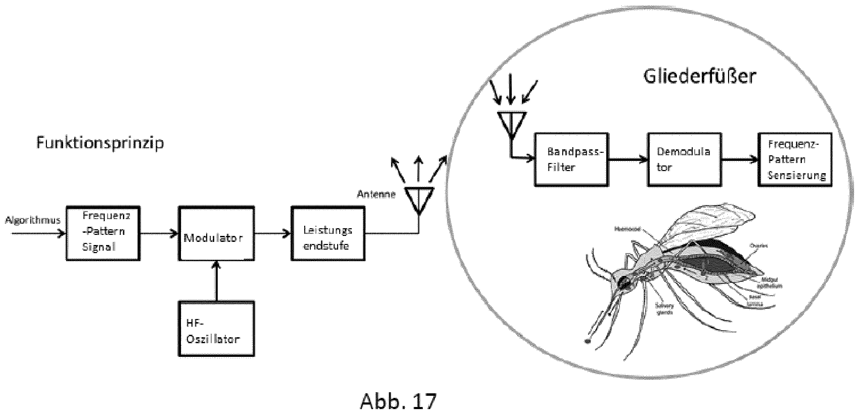

**Abb. 17:** Vereinfachte Funktion des Systems

## Parameter zur Beeinflussung der Verhaltensmuster

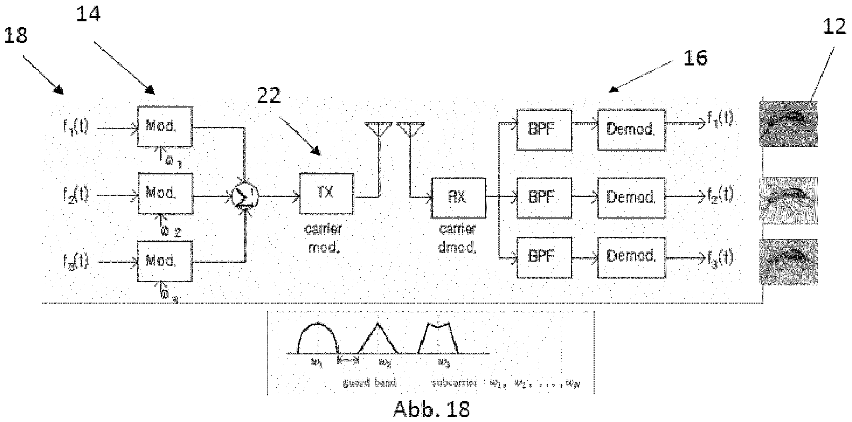

Aufgrund der multiplen sensorischen Eigenschaften und deren physikalischer und biochemischer Funktion sind unterschiedliche Frequenzmuster/-pattern notwendig, um möglichst alle sensorischen Eigenschaften der Gliederfüßer zu stimulieren. Diese Frequenzmuster können entweder zeitgleich, simultan oder sequenziell, nacheinander gesendet werden. Hierbei ist Topologie und der physikalische Aufbau des Gliederfüßers entscheidend, welche sensorischen Anhänge stimuliert werden sollen. Zur Stimulation der unterschiedlichen Arten der Gliederfüßer sind auch unterschiedliche Frequenzmuster notwendig. **Abb.18** zeigt das vereinfachte Prinzip bei unterschiedlichen Arten von Gliederfüßern und unterschiedlicher Stimulation der sensorischen Anhänge. Hierbei werden eine beliebige Anzahl n von Trägerfrequenzen mit beliebiger Anzahl von Modulationsfrequenzen erzeugt. Daraus ergeben sich beliebige Möglichkeiten, unterschiedliche Stimulationssignale für die Frequenzpattern zu erzeugen.

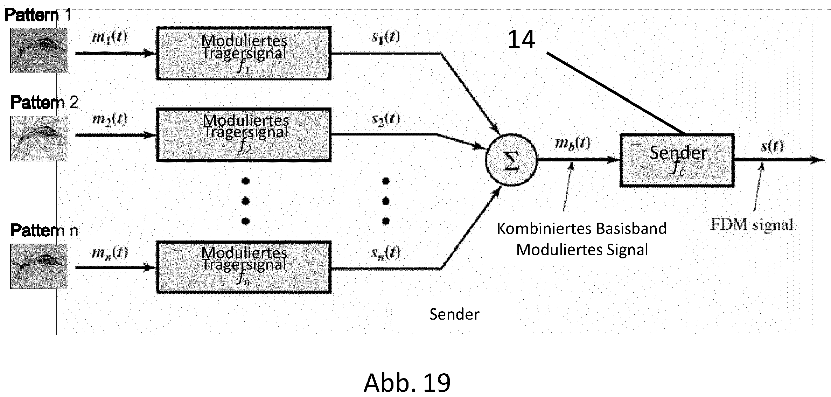

**Abb.19:** Um die verschiedenen Gliederfüßer zu stimulieren, werden verschiedene Subträgermodulatoren verwendet.

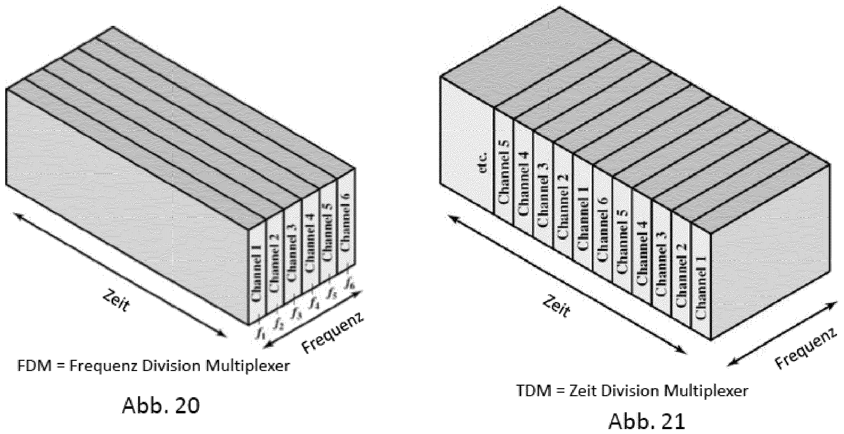

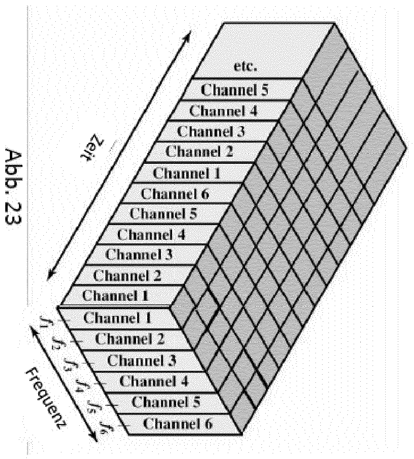

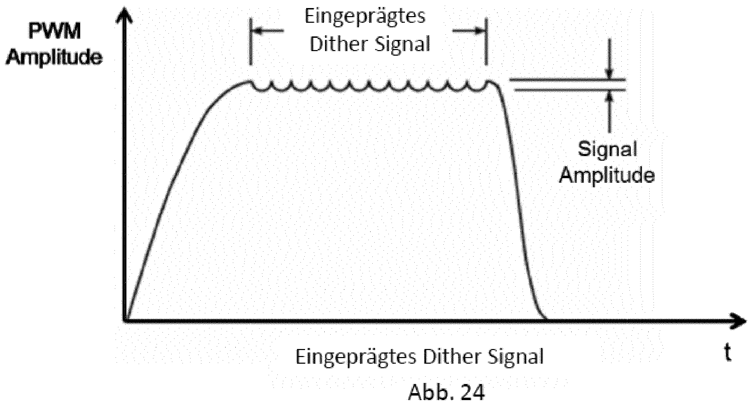

Zur Erzeugung wird hierbei eine Kombination eines Frequenz-Division-Multiplexing-Signals **Abb.20** mit einem Time-Division-Multiplexing-Signal **Abb.21** verwendet. Jeder Frequenzabschnitt und Zeitabschnitt hat unterschiedliche Parameter **Abb.23** und kann zusätzlich mit einem definierten Dithersignal **Abb.24, Abb.25,** und **Abb26** überlagert bzw. moduliert werden.

Bei der Analyse im Frequenzbereich sind daher Frequenzanteile vorhanden, die Stimulationsfrequenzen zeigen, um unterschiedliche Arten von Gliederfüßer als auch unterschiedliche sensorische Anhänge zu stimulieren.

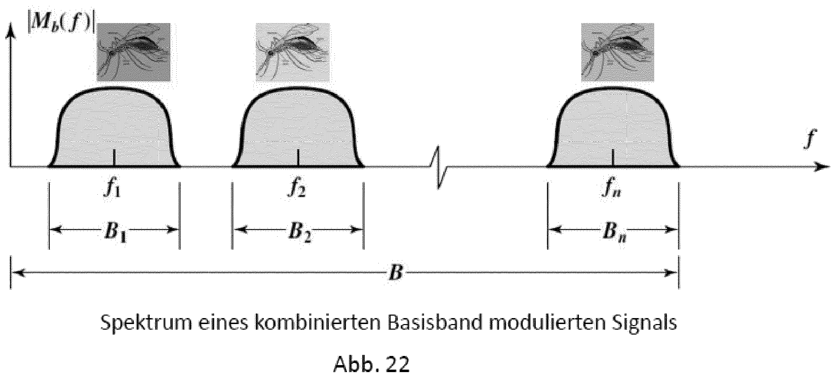

**Abb.22:** Vereinfachte Darstellung des Frequenzspektrums des zusammengesetzten Basisband-Modulationssignals bei verschiedenen Gliederfüßern

**Abb.23:** Vereinfachte Darstellung der Frequenzvariablen und Zeitvariablen Rahmen und Struktur des kombinierten Multi-Frequenz-Pattern-Generators basierend auf FDM und TDM

Zur Erzeugung des Dithersignals können unterschiedlich Prinzipien verwendet werden. **Abb.24, Abb.25, und Abb26** zeigen bekannte Prinzipien zur Dithersignalmodulation:

**Abb.24:** Eingeprägtes Dithersignal auf einem PWM-Impuls mit definierter Signalamplitude

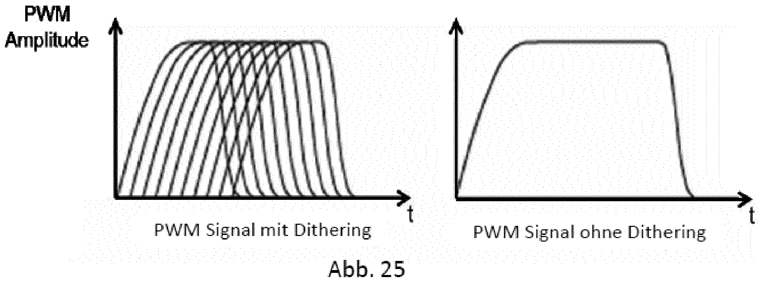

**Abb.25:** Phasenmoduliertes Dithersignal auf einem PWM-Impuls mit definierter Frequenz

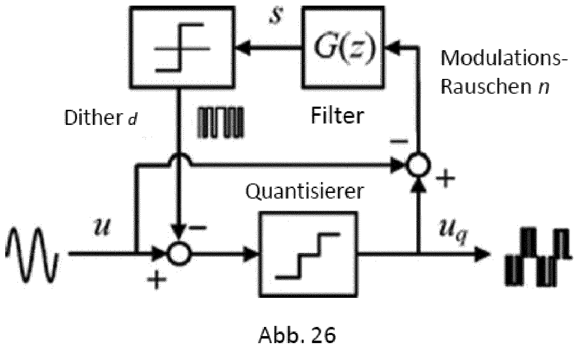

**Abb.26:** Erweiterung des Signals mit PWM-moduliertem Dithersignal [12]

Diese Methoden sind dem Fachmann bekannt.

**Schlüsselparameter zur Erzeugung des Frequenzmusters und des Puls-Generators:**

- HF-Trägerfrequenz Sub-GHz, MHz-, GHz-Bereich
- Modulationsfrequenzen
- Sub-Hz-, Hz-Bereich - Relaxationsverhalten
- Niederfrequenzen von 1 Hz bis mehrere hundert kHz bis ca. 1 MHz Frequenzmusterbereich
- Art der Modulation PWM, FM, AM, PFM, TDM, FDM
- Erzeugung variabler Impulsfolgen
- Variable Relaxationszeitkonstanten (DRT-Analyseverfahren)
- Variable Impulsanstiegszeit
- Variable Einschwingzeit
- Variabler Arbeitszyklus
- Moduliertes Dithersignal im TDM und im FDM Signal oder in der Kombination aus TDM, FDM und Dither-Signal
- Zeit- und Frequenzmuster basierend auf dem Dirichletsche Primzahlsatz über arithmetische Verläufe
- Alle Zeit- und Frequenzsequenzen haben keine harmonische oder subharmonische Beziehungen, d.h. Oberwellenanteile und subharmonische Anteile im Frequenzspektrum unterscheiden sich bei allen Sequenzen, die simultan gleichzeitig ausgesendet werden
- Alle Zeit- und Frequenzsequenzen sind Primzahl basierend oder haben keine ganzzahlige harmonische und subharmonische Vielfachen oder Teiler, dies gilt auch für Trägerfrequenz und Modulationsfrequenzen.
- Zur Anwendung von mehreren Arten von Gliederfüßern können auch beliebige andere Frequenzmuster verwendet werden
- Pulsfolgen bilden definierte Relaxationszeit-Bildungssequenz ($\tau$-Bereich)
- Modulation von Dither-Signalfolgen und Überlagerung von Dithersignalen im Pulsmuster
- Nachbildung von Trichel-Pulssequenzen mit Hilfe von gepulsten Rechtecksignalen
- Generierung von stochastischen Burst-Impuls-Sequenzen
- Trichelpulsgenerierung zur Simulation von Corona-Entladung Entladungspulssimulation
- Generierung von Trichelpulssequenzen und Burstpulssequenzen mit einem Microcontroller basierenden PWM-Modulator

**Equivalent-Circuit-Modelle (ECM) für das Multisensorsystem und die sensorischen Anhänge von Gliederfüßern**

Systemsimulation und Systemidentifikation sind häufige Probleme in Wissenschaft und Technik. Im Bereich der Elektrochemie und der Biochemie ist dies besonders von Interesse für Systeme, wie poröse Elektroden, und Mechanismen, wie die Diffusion. Diese sind sowohl für technische Anwendungen relevant als auch für die Erklärung von biochemischen Systemen. Modelle, die das elektrische Verhalten solcher Systeme beschreiben, basieren nicht nur auf schematischen, physikalischen, chemischen und biologischen Ansätzen, sondern auch auf äquivalente Ersatzschaltbildern (Equivalent Circuits). Manchmal werden hierbei vereinfachte Modelle der Leiter und die räumliche Verteilung der Parameter verwendet. Die Nyquist-Darstellung ist eine bekannte Darstellung des Impedanzverhaltens bei unterschiedlichen Anrege-Frequenzen eines Systems.

Aufgrund der Verfügbarkeit vieler verschiedener äquivalenter Ersatzschaltbild-Modelle ist die Auswahl eines geeigneten Modells für eine bestimmte Anwendung, in unserem Fall Gliederfüßer, sehr schwierig. Die Identifizierung von Modellähnlichkeiten ermöglicht daher ein besseres Verständnis der einzelnen Mechanismen, reduziert die Anzahl der mathematischen Berechnungen, vereinfacht die Modellbewertung und reduziert damit die Komplexität.

Um das Sensormodell eines Gliederfüßers zu erklären, müssen das sensorische Verhalten und die Sensorreaktion beschrieben werden. Um das biochemische Modell von Gliederfüßern zu vereinfachen, wird eine allgemeinere Sichtweise der Impedanz im Sinne eines generalisierten Transmission-Line-Modells verwendet. Transmission Line Modelle eignen sich als universell verwendbare Modelle, um unterschiedliche physikalische und biochemische Vorgänge zu beschreiben und über normalisierte Darstellungen mathematisch zu vereinfachen.

In diesem Verfahren werden unterschiedliche Randbedingungen angewendet, um die Lösung für verschiedene elektrochemische und biochemische Systeme zu erhalten. Das Equivalent-Circuit-Modell (ECM) ist in hier 6 Submodelle unterteilt, um die physikalischen und biochemischen Effekte zu beschreiben und schließlich ein verdichtetes ECM zu erhalten. Es können aber beliebig viele Submodelle verwendet werden, da das Verfahren erweiterbar ist. Die Nutzung der Transmission-Line-Randbedingungen für verschiedene physikalische und elektrochemische Effekte ist ein etabliertes Verfahren. In unserem Fall haben wir Modelle für die sensorischen Anhänge von Gliederfüßern mit deren spezifischen biochemischen Effekten beschrieben. Das ist primär Teil der Erfindung.

Zur Vereinfachung unterscheiden wir hier an diesem Beispiel 6 Submodelle. Die sensorischen Eigenschaften von Gliederfüßern können durch weitere Modelle ergänzt werden oder zur Reduzierung der Anzahl der ECM-Modelle können nur einzelne sensorischen Eigenschaften modelliert werden.

An diesem Beispiel unterscheiden wir folgende 6 Modelle:

1. Das Modell der Bürstenelektrode, die ein Modell der Antennen des Gliederfüßers ist.
2. Das Modell der porösen Elektrode, die ein Modell der porösen Sensillenhaare ist.
3. Das Modell der allgemeinen Diffusion, die die Ionendiffusion beschreibt.
4. Das Modell der Diffusion der Non-Permeable Wall (NPW).
5. Das Model der Diffusion des idealen Reservoirs.
6. Das Berechnungsmodell des Tortuositätsfaktors aus tomographischen Daten der Oberfläche von Gliederfüßern.

Die Zuordnung der sensorischen Eigenschaften zu den einzelnen Modellen hat den Vorteil, die Mehrdeutigkeit von Impedanzmodellgleichungen zu analysieren, zu reduzieren oder gar zu beseitigen. Die Beseitigung von Mehrdeutigkeiten vereinfacht die Analyse von Modellparametern, die das Impedanzverhalten beeinflussen, und verbessert zusätzlich die Robustheit nichtlinearer Parameteroptimierungstechniken. Die vorher in der Einleitung beschriebenen Zusammenhänge und Untersuchungsergebnisse mit Hilfe der Stochastik erlauben eine direkte und indirekte Zuordnung der Modelle.

Das Berechnungsmodell des Tortuositätsfaktors aus tomographischen Daten der Oberfläche von Gliederfüßern quantifiziert die scheinbare Abnahme des diffusen Transports, die sich aus Windungen der Strömungspfade durch poröse Medien, Randdichten und bildbasierte Mikrostrukturdaten ergibt. Es gibt etablierte mathematische Werkzeuge [5] zur effizienten Berechnung des Tortuositätsfaktors sowie der Volumenanteile, der Oberflächen und der dreidimensionalen Struktur. Diese mathematischen Werkzeuge wurden ursprünglich entwickelt, um das Verständnis von Elektrodenmikrostrukturen in der Elektrochemie zu verbessern; der Tortuositätsfaktor ist jedoch seit über einem Jahrhundert für eine Vielzahl von Bereichen von Interesse, darunter Geowissenschaften, Optik und Biologie. Es ist nach wie vor üblich, Korrelationen zu verwenden, um den Tortuositätsfaktor zu approximieren, aber in den letzten Jahren hat die zunehmende Verfügbarkeit von 3D-Bildgebungstechniken das Interesse geweckt, die Größe direkter zu berechnen. So können schnell und genau, die auf die für die moderne Tomographie typischen großen Datensätze angewendet werden, ohne eine hohe Rechenleistung zu erfordern.

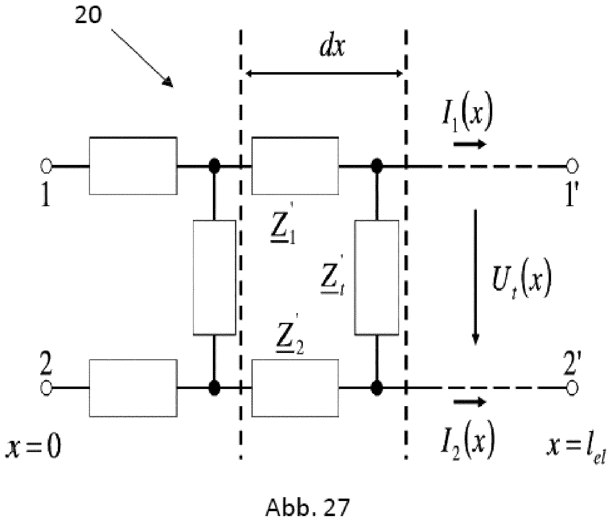

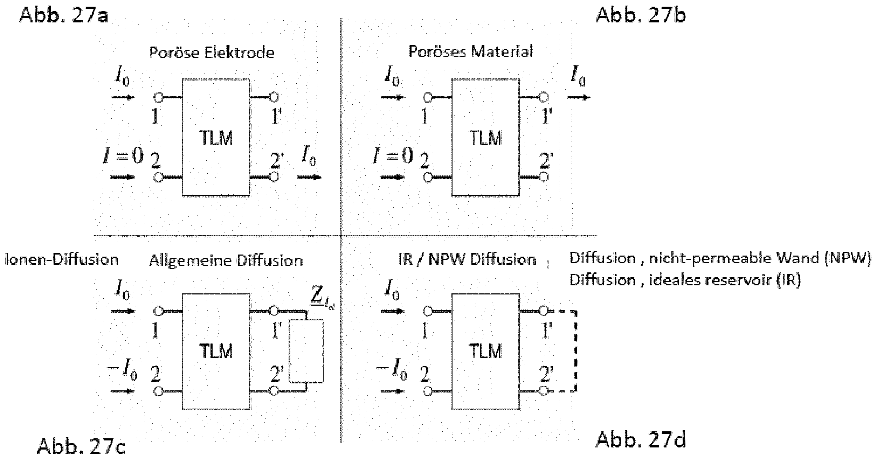

ECM (Äquivalente Ersatzschaltbildmodelle) anstelle von physikalischen und chemischen Ansätzen liefern sehr ähnliche Ergebnisse, wobei der Ausgangspunkt jedoch etwas anders ist. Für die Betrachtung von Ladungsträgern werden physikalische, chemische und biochemische Ansätze bevorzugt. Für die Untersuchung des Verhaltens des elektrischen Systems sind dagegen ECM besser geeignet. Aufgrund der Ähnlichkeiten sind auch gemischte Ansätze möglich [6]. ECM können den Prozess der Modellidentifikation vereinfachen. Durch die richtige Auswahl der Elemente und Parameter eines Transmission-Line-Modells ist es möglich, das unterschiedliche Verhalten eines Systems und auch die fraktale Struktur eines elektrochemischen Systems zu identifizieren. Die Anwendung von Equivalent-Circuits ist nicht auf lineare Systeme beschränkt. Die Elemente der zweikanaligen Transmission Line in **Abb. 27** können eine nichtlineare Spannungs- und Stromabhängigkeit aufweisen. Die Parameter können außerdem positionsabhängig sein. In diesem Fall werden oft numerische Methoden zur Berechnung der Impedanz benötigt.

Der diskutierte Ansatz [6] zur Lösung der Differentialgleichungen eines allgemeinen Transmission-Line-Modells ermöglicht die Simulation der Impedanz vieler verschiedener Systeme mit der gleichen Methodik. Die Verwendung unterschiedlicher Randbedingungen ermöglicht die Simulation verschiedener Systeme mit dem gleichen Modell. Die Änderung der Werte der Impedanzen ermöglicht die Simulation eines Systems unter verschiedenen Bedingungen und auch die Simulation verschiedener Systeme. Mit geeigneten Parametern werden die Zusammenhänge mit Modellen aus elektrochemischen Ansätzen dargestellt. Das Verfahren ermöglicht die Identifizierung der Beziehung zwischen verschiedenen Modellen, z.B. den Grad der Ähnlichkeit zwischen Diffusions- und porösen Elektrodenmodellen.

Ein wichtiger Aspekt bei der Modellentwicklung ist der Einfluss von Modellparametern auf das Verhalten eines Modells. Dies ist notwendig für das vollständige Verständnis des modellierten Systems und auch für die Bestimmung der Parameter aus den Messungen. In diesem Fall ist die Identifizierung von Mehrdeutigkeiten unerlässlich, um die Anzahl der Parameter zu reduzieren und Parametersätze zu bestimmen, die zum gleichen Verhalten führen. Weniger Parameter erlauben immer ein besseres Verständnis eines Modells. Weiterhin ist es nicht möglich, mehrdeutige Parametersätze von Impedanzmessungen zu unterscheiden. Zur Unterscheidung mehrdeutiger Parametersätze werden immer zusätzliche Informationen benötigt. Diese Informationen müssen mit anderen Messverfahren gewonnen werden. So können beispielsweise in einem Diffusionsprozess der Diffusionskoeffizient und die Konzentration nur bei genau bekannter Geometrie und genau bekannten Reaktionsbedingungen aus Impedanzmessungen ermittelt werden. Bei porösen Elektroden ist dies sehr ähnlich: Nur 4 von 7 Parametern können aus Impedanzmessungen gewonnen werden. Die Identifizierung von Mehrdeutigkeiten kann durch die Bestimmung von Quotient, Produkt, Differenz und Summe verschiedener Parameter erreicht werden, die durch eine kleinere Anzahl anderer Parameter ersetzt werden können. Im Allgemeinen führt dies zu einer Reduzierung der Anzahl der Parameter. Die übrigen Parameter können als Skalierungs- und Strukturparameter klassifiziert werden. Skalierungsparameter skalieren nur die Achsen, z.B. die Frequenz- oder die Impedanzachse. Beispielsweise haben die dargestellten Diffusionsmodelle nur Skalierungsparameter. Strukturparameter beeinflussen die Struktur des Modellverhaltens, z.B. die Form der 45°-Steigung im porösen Elektrodenmodell. Diese Behandlung von Modellen ermöglicht es uns zu analysieren, welche Parameter aus der Impedanzmessung bestimmt werden können. Darüber hinaus ermöglicht sie das vollständige Verständnis des Einflusses von Parametern auf das Impedanzverhalten. Der große Vorteil ist die Verwendung einer einzigen Modellierungsmethode, um viele verschiedene Mechanismen zu untersuchen.

Durch den Einbau von Equivalent-Circuit-Modellen in die komplexe Ebene oder durch die Analyse der Verteilung der Relaxationszeiten (DRT) [7] ist es möglich, die relativen Beiträge zur Impedanz der verschiedenen physikalischen, elektrochemischen und biochemischen Prozesse in einem Gliederfüßer zu untersuchen, zu beschreiben und zu entkoppeln. Dies ist eine Methode, um die sog Point of.-Interests im Impedanzspektrum in einem dynamischen Bereich darzustellen und das unterschiedliche Impedanzverhalten von Gliederfüßern klar unterscheiden zu können.

**Allgemeine Transmission Line Modelle (TLM)**

Allgemeine Transmission lassen sich mit dem oben gezeigten äquivalenten Ersatzschaltbild beschreiben [6]. Mit einer Kaskadierung bzw. Hintereinanderschaltung mehrerer dieser allgemeinen Ersatzschaltbilder lassen sich weitere noch komplexere Systeme modellieren.

**Abb. 27** Allgemeines Transmission-Line-Modell

Die Lösung der Differenzialgleichung der bezugnehmend auf das Ersatzschaltbild und das Kirch-hoff'sche Gesetz für Strom und Spannung lautet wie folgt:

$$I_1(x) = I_1(x + \Delta x) + U_t(x) \underline{Y_t'} \Delta x$$

$$I_2(x + \Delta x) = I_2(x) + U_t(x) \underline{Y_t'} \Delta x$$

$$0 = U_t(x) + I_2(x) \underline{Z_2'} \Delta x - U_t(x + \Delta x) - I_1(x) \underline{Z_1'} \Delta x$$

Gleichungen (1), (2), (3)

Mit gewöhnlichen Differentialgleichungen können folgende Werte des Systems bestimmt werden:

$$I_1(x) = C_1 \frac{\underline{Z_2'}}{\underline{Z_1'}} + \frac{C_2 e^{-x\underline{\gamma}} - C_3 e^{x\underline{\gamma}}}{\underline{Z_t'} \underline{\gamma}}$$

$$I_2(x) = C_1 - \frac{(C_2 e^{-x\underline{\gamma}} - C_3 e^{x\underline{\gamma}})\underline{\gamma}}{\underline{Z_1'} + \underline{Z_2'}}$$

$$U_t(x) = C_2 e^{-x\underline{\gamma}} + C_3 e^{x\underline{\gamma}}$$

Gleichungen (4), (5), (6)

wobei die komplexe Verzögerungskonstante (Complex propagation constant) wie folgt definiert wird:

$$\underline{\gamma} = \sqrt{\frac{\underline{Z}_1' + \underline{Z}_2'}{\underline{Z}_t'}}$$

Gleichung (7)

**Tabelle 3:** Beschreibung der Symbole, Physikalischen Einheiten und deren Bedeutung

| Symbol | Unit | Meaning |
|---|---|---|
| $\underline{Z}_1'$, $\underline{Z}_2'$ | [Ω/m] | Complex longitudinal impedance (corresponding admittance: $\underline{Y}_{1/2}' = 1/\underline{Z}_{1/2}'$ ) |
| $\underline{Z}_t'$ | [Ω m] | Complex transverse impedance (corresponding admittance: $\underline{Y}_t' = 1/\underline{Z}_t'$ ) |
| $\underline{Z}_{lel}$ | [Ω] | Resistance at the end of transmission line |
| $l_{el}$ | [m] | Length of electrode or thickness of material |
| $U_t$ | [V] | Voltage between media 1 and media 2 across the transverse impedance |
| $I_1, I_2$ | [A] | Currents in longitudinal direction through media 1 and media 2 |
| $I_0$ | [A] | Current applied to the porous material |
| $\underline{\gamma}$ | [1/m] | Complex propagation constant |
| $C_1$ | [A] | Integration constant |
| $C_2, C_3$ | [V] | Integration constants |

Gemäß den allgemein gültigen Lösungen der Gleichungen (1) bis (7) können beliebige physikalische Effekte mit TLM beschrieben werden. Hierbei sind die Randwertbedingungen (Boundary Conditions) zu berücksichtigen. Die folgende Tabelle beschreibt die Randwertbedingungen und die physikalischen Effekte. Unter Verwendung dieser Randwertbedingungen können die unbekannten Integrationskontanten $C_1$, $C_2$ und $C_3$ bestimmt werden.

**Tabelle 4:** Randwertbedingungen zur Vereinfachung der Differenzialgleichungen

| x=0 | | | | x=$l_{el}$ | | | | **Physical effect** |
|---|---|---|---|---|---|---|---|---|
| $I_1$ | $I_2$ | $U_t$ | | $I_1$ | $I_2$ | $U_t$ | | |
| $I_0$ | 0 | | | 0[a] | $I_0$ | | | Porous electrode, e.g. [2,25] |
| $I_0$ | 0 | | | $I_0$ | 0[a] | | | Porous material, e.g. [13] |
| $I_0$ | -$I_0$ | | | $U_t(l_{el}t)_t / \underline{Z}_{l\,el}$ | | | | Ion diffusion, electron conduction in cables |
| $I_0$ | -$I_0$ | | | 0 | 0[a] | | | Diffusion, non-permeable wall (NPW) |
| $I_0$ | -$I_0$ | | | -$I_2$[a] | -$I_1$[a] | 0 | | Diffusion, ideal reservoir (IR) |
| [a] This must be the result after calculating the integration constants | | | | | | | | |

Damit ist eine Abgrenzung der physikalischen und biochemischen Effekte unter Berücksichtigung der Randwertbedingungen möglich. Daraus ergibt sich die Unterteilung in 4 TLM- Modelle und zwar für die poröse Elektrode, für poröses Material, für die allgemeine Diffusion und die Diffusion in nicht-permeable Wände und dem idealen Reservoir.

**Abb. 27a -27d** Abgrenzung der TLM Modelle für unterschiedliche physikalische Effekte

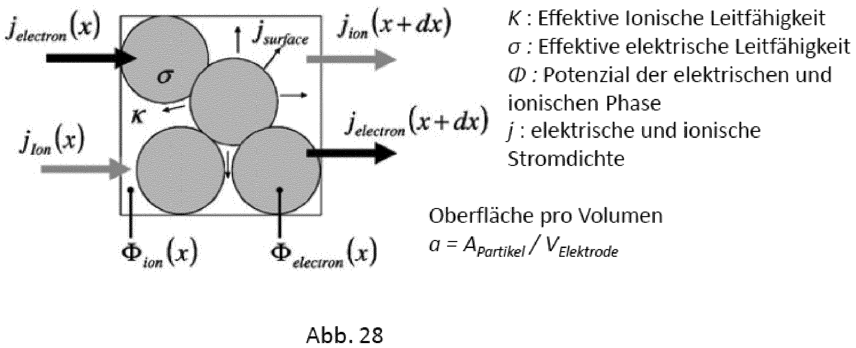

**Abb. 28** Beschreibung der Vorgänge in poröses Elektrodenmodell gemäß Quelle [13]

**Poröse Elektrode und Impedanzberechnung des Transmission Line Models [6]**

**Abb. 27a** Transmission Line Modell einer porösen Elektrode

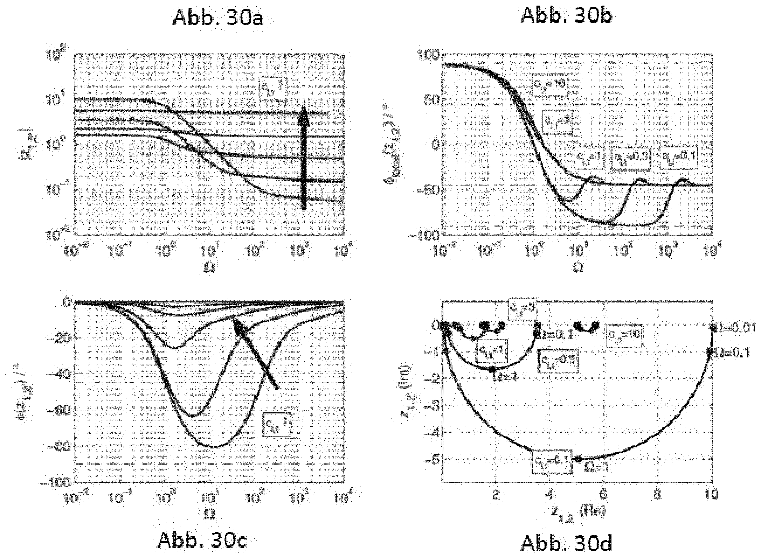

**Abb. 30** a) bis d) Impedanz des Porositätsmodells gemäß der Gleichung 4 mit der Integrationskonstanten $c_2$ = 1 für die poröse Elektrode .

$$\underline{Z}_{1,2'} = \frac{l_{el}}{(1/\underline{Z}'_2) + (1/\underline{Z}'_1)} \left( 1 + \frac{2 + ((\underline{Z}'_1/\underline{Z}'_2) + (\underline{Z}'_2/\underline{Z}'_1))\cosh(l_{el}\underline{\gamma})}{l_{el}\underline{\gamma}\sinh(l_{el}\underline{\gamma})} \right)$$

**Gleichung (8):** Berechnung der Impedanz von porösen Elektroden

## Poröses Material und Impedanzberechnung des Transmission Line Models

**Abb. 27b** Transmission Line Modell von porösem Material

Unter Berücksichtigung der Randwertbedingungen kann die Impedanz für poröses Material wie folgt berechnet werden:

$$\underline{Z}_{1,2'} = \frac{l_{el}}{(1/\underline{Z}'_2) + (1/\underline{Z}'_1)} \left( 1 + \frac{2 + ((\underline{Z}'_1/\underline{Z}'_2) + (\underline{Z}'_2/\underline{Z}'_1))\cosh(l_{el}\underline{\gamma})}{l_{el}\underline{\gamma}\sinh(l_{el}\underline{\gamma})} \right)$$

**Gleichung (9):** Berechnung der Impedanz von porösem Material

## Allgemeine Diffusion und Impedanzberechnung des Transmission Line Models

Zur Bestimmung der Impedanz für die Diffusion wird ein ähnlicher Ansatz verwendet wie bei der porösen Elektrode unter Berücksichtigung und Anwendung der Randwertbedingungen

**Abb. 27c** Transmission Line Model von Ionen-Diffusion

Hier gilt die für die Impedanz **Gleichung (10):**

$$\underline{Z}_{1,2} = \frac{\underline{Z}'_1\,\underline{Z}_{l_{el}} + \underline{Z}'_2\,\underline{Z}_{l_{el}} + \underline{Z}'_1\,\underline{Z}'_t\,\tanh(l_{el}\,\underline{\gamma})\,\underline{\gamma} + \underline{Z}'_2\,\underline{Z}'_t\,\tanh(l_{el}\,\underline{\gamma})\,\underline{\gamma}}{\underline{Z}'_1 + \underline{Z}'_2 + \underline{Z}_{l_{el}}\,\tanh(l_{el}\,\underline{\gamma})\,\underline{\gamma}}$$

**Gleichung (10)**

Wenn man unter Randwertbedingungen $\underline{Z}_2$ = 0 setzt, erhält man die bekannte Gleichung für elektrische Transmission Lines und die allgemeine Diffusion.

$$\underline{Z}_{1,2} = \frac{\underline{Z}'_1\,\underline{Z}_{l_{el}} + \underline{Z}'_1\,\underline{Z}'_t\,\tanh(l_{el}\,\underline{\gamma})\,\underline{\gamma}}{\underline{Z}'_1 + \underline{Z}_{l_{el}}\,\tanh(l_{el}\,\underline{\gamma})\,\underline{\gamma}}$$

**Gleichung (11):** Berechnung der Impedanz für die allgemeine Diffusion

## Diffusion der nicht-permeablen Wand und des idealen Reservoirs und Impedanzberechnung des Transmission Line Models

**Abb. 27d** Transmission Line Model für eine nicht permeable Wand und die Diffusion in einem idealen Reservoir

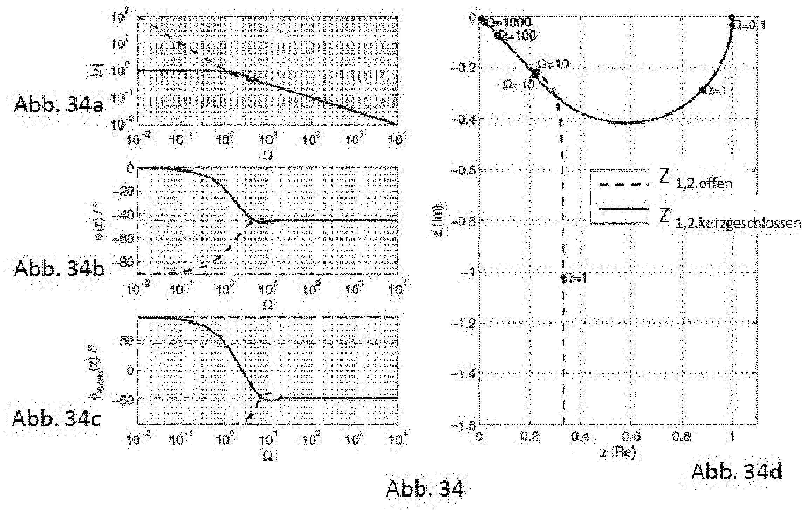

**Abb. 34** Impedanz des Diffusion Modells gemäß den Gleichungen 12 und 13

$$\underline{z}_{1,2,SHORT} = \frac{\underline{Z}_{1,2,SHORT}}{Z_{N,diff}} = \frac{\tanh(\sqrt{j\Omega})}{\sqrt{j\Omega}}$$

$$\underline{z}_{1,2,OPEN} = \frac{\underline{Z}_{1,2,OPEN}}{Z_{N,diff}} = \frac{1}{\sqrt{j\Omega}\tanh(\sqrt{j\Omega})}$$

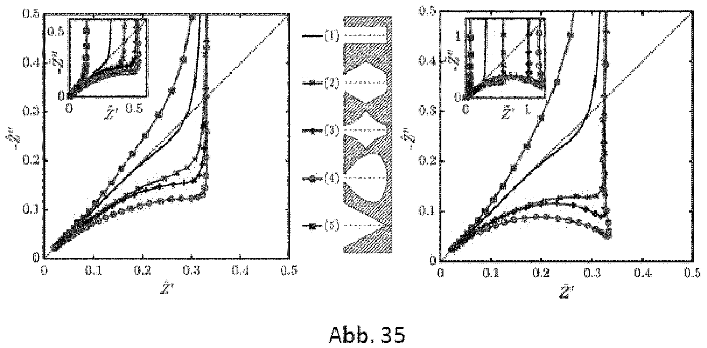

Gleichung (12) und (13): Impedanzverlauf (Nyquist-Diagramm) aus Abb.35 für offene und kurzgeschlossene Ausgänge
Dabei gilt Gl.(14):

$$Z_{N,diff} = R'_1 l_{el}$$

**Gleichung (14)**

**Poren-Geometrie**

Das Impedanzverhalten unterschiedlicher Porengeometrien und Porenstrukturen (offene sowie auch geschlossene Porengeometrie) lassen sich im Impedanzspektrum (Nyquist-Diagramm) klar darstellen. Das Impedanzverhalten zeigt den Simulationen bei spezifischen tomographischen und topographischen Porenstrukturen unterschiedliche Ausprägung. Zur TLM-Modellierung der Gliederfüßer und deren Anregungssignale sind diese Erkenntnisse direkt verwendbar.
Bei jeder Simulation wurden charakteristische Frequenzen gewählt in einem Frequenzbereich von [$\omega_c \times 2^{-4}$, $\omega_c \times 2^{11}$].

$$\omega_c = \frac{D}{L^2}$$

**Gleichung (15)** wobei für offene Systeme gilt, L ist die Länge des kontrollierten Volumens (CV) in der Richtung zur stimulierten Oberfläche und für geschlossene Systeme gilt, L ist gleich der maximalen Penetrierungsdistanz der simulierten Oberfläche zur Spitze des längsten Porenpfades. Für jede Frequenz wurde die Impedanz Z berechnet als Verhältnis zwischen Amplitude des Konzentrations-Stimulus (1 in allen Fällen) und des komplexen Diffusionsflux (Diffusion Flux) an den inneren Grenzschichten und die normalisierte Impedanz ~Z für den einfachen Vergleich gemäß **Gleichung (16)**

$$\tilde{Z} = Z\frac{AD}{L}$$

**Gleichung (16)**

für offene Systeme gilt, A ist die komplette Fläche von CV Grenzschichten in Flussrichtung und für geschlossene Systeme gilt, A ist die "mittlere erreichbare Fläche", die definiert ist als algebraisches Mittel, das für die Diffusion erreichbar ist in der Tiefe des Poren-Netzwerks. Bei Verwendung dieses formalen Zusammenhangs, bedeutet es, dass bei Schnittpunkten von tieferen Frequenzen in offenen Systemen gleich $\tau/\varepsilon$ ist, was besonders hilfreich ist bei der Charakterisierung und dem Vergleich von unterschiedlichen Strukturen.

**Simulation einer einfach geschlossene-Poren-Geometrie**

Abb. 35     Simulierte Impedanzspektren für 2D (links) und 3D (rechts) für 5 einfache geschlossene Porenstrukturen, untersucht von Keiser et al. [14], [16]. Die inneren kleineren Abbildungen zeigen das für die Hauptachsen normalisierte Spektrum unter Verwendung von Gleichung (16). Hier sieht man, dass alle Spektren zu einem Wert konvergieren wie bei gerader Pore (1) und damit können die 5 Strukturen der Poren deutlich unterschieden werden.

**Einfache offene-Poren-Geometrie**

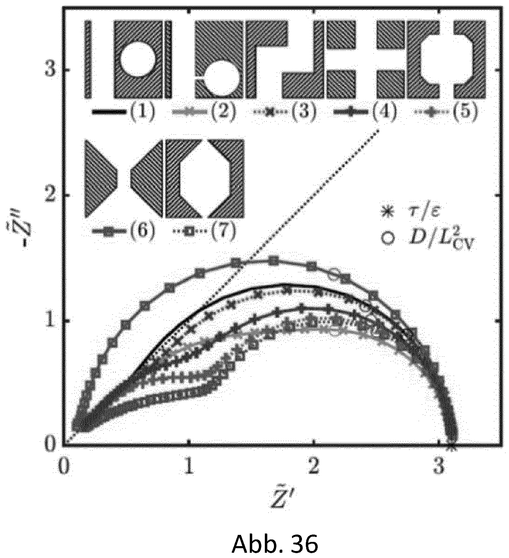

Abb. 36     Simuliertes Impedanzspektrum von 7 einfachen offenen Porengeometrien, wobei alle das gleiche Porenvolumen und Tortuositätsfaktor haben und einer einheitlichen Richtung des Stimulisignals [14]

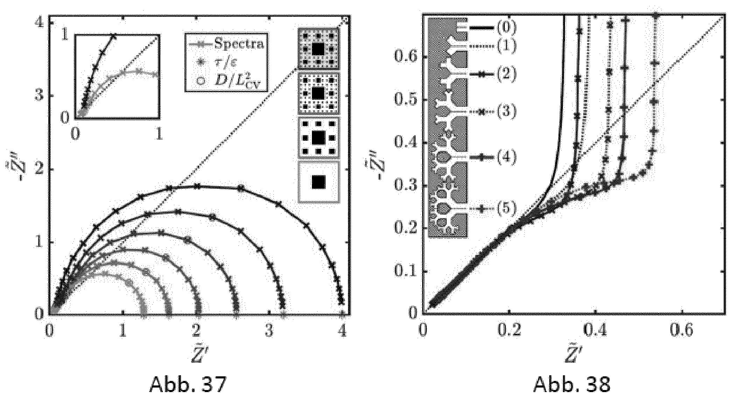

**Abb. 37**  links: Simuliertes Impedanz Spektrum von 2D fraktalen, wobei fraktale Ordnung sich erhöht mit einem Sierpinski Carpet mit offenen Grenzschichten und im kleinen Bild die normalisierte Darstellung

**Abb. 38**  rechts: Simuliertes Impedanzspektrum von zwei 2D fraktalen, wobei die fraktale Ordnung sich erhöht. Hier wird ein Pythagoras-Baum gezeigt für geschlossene Strukturen.

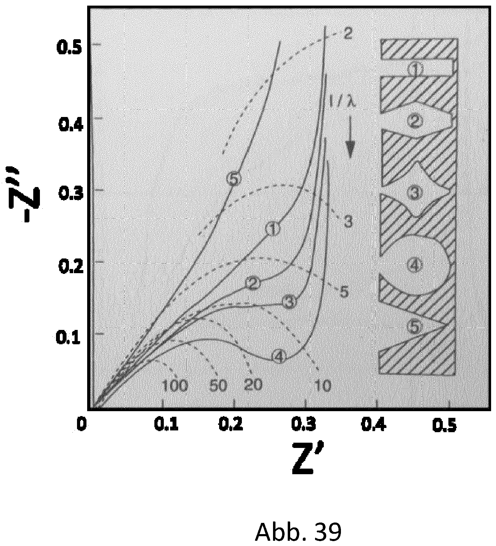

**Abb. 39**  Impedanzverhalten einer Serie mit unterschiedlichen Strukturen der Poren. I ist die Länge der Poren und λ ist der Formfaktor [15]

Aus der Analyse und den Simulationen des Impedanzspektrums und insbesondere des normalisierten Impedanzspektrums ist zu erkennen, dass unterschiedliche Porengeometrien und PorenStrukturen in der graphischen und mathematischen Analyse typische Verhaltensmuster darstellen. Daher ist die Auswertung und Frequenzanpassung an unterschiedliche Porenstrukturen für den Fachmann einfach zu realisieren. Mit Hilfe der Vektoranalyse können parameterabhängige Ortsvektoren bestimmt werden, die z.B. die unterschiedlichen stetigen Funktionen beschreiben.

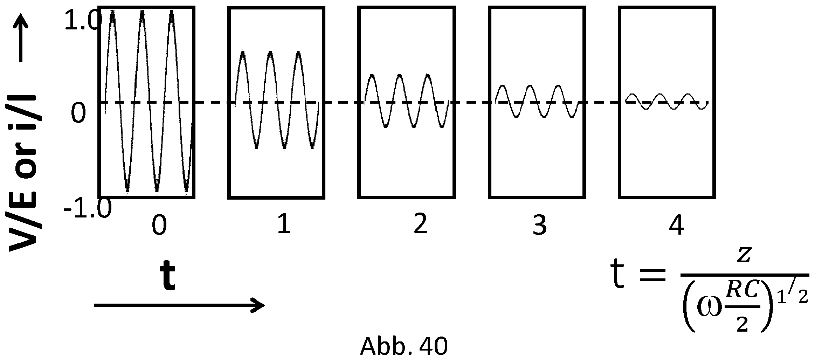

**Abb. 40**  Dämpfungsverhalten eines sinusförmigen Signals hinein in eine Pore wegen des de Levie Signalpenetrierungseffekts.[15]. Die 5 unterschiedlichen Werte zeigen die Signale in unterschiedlichen Distanzen in die Pore hinein. Dieses typische Dämpfungsverhalten ist bei der Signalsynthese des Frequenzpattern bei Gliederfüßer zu berücksichtigen.

**Impedanzspektrum von Bürstenelektroden als Basismodell für Antennen der Gliederfüßer**

De Levie zeigt die Darstellung des Impedanzverhaltens, das sich als konstantes Phasenelement (CPE - Constant Phase Element) darstellt. Die Anpassung an unterschiedliche Impedanzspektren erfolgt hier durch Parallelverschiebung der Kurven auf der x-Achse (Real-Anteil) der Impedanz. Bei der Modellierung der Antennen der Gliederfüßer ist diese Abstrahierung und Vereinfachung sehr hilfreich.

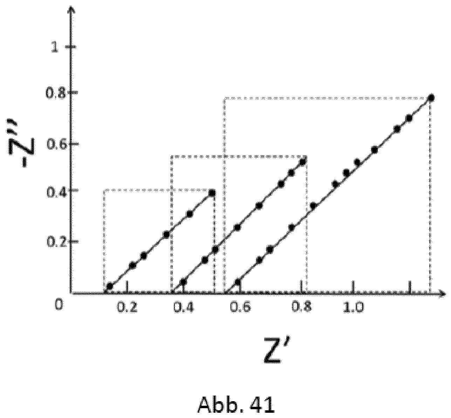

**Abb. 41**  Typisches Impedanzverhalten einer de Levie Bürsten-Elektrode im komplexen Bereich als Funktion der Frequenz für drei unterschiedliche Elektrolyt-Konzentrationen.

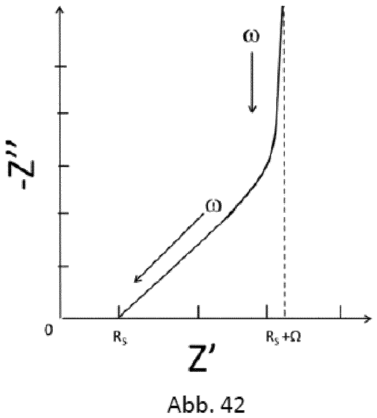

**Abb. 42**  Charakteristik des Impedanzverhaltens im komplexen Bereich für eine poröse Elektrode mit Serien-Widerstand RS (von 0 -> ∞) und kumulativ verteiltem Widerstand, Ω.

Durch die Verwendung von normalisierten Werten und dem typischen Verhalten der unterschiedlichen Transmission Line Modelle lassen sich durch bekannte mathematische Verfahren und insbesondere der Einsatz von stochastischen Variablen, Algorithmen des maschinellen Lernens (Deep Learning) anwenden.

Die Zuordnung der sensorischen Eigenschaften zu den einzelnen Modellen hat den Vorteil, die Mehrdeutigkeit von Impedanzmodellgleichungen zu analysieren, zu reduzieren oder gar zu beseitigen. Die Beseitigung von Mehrdeutigkeiten vereinfacht die Analyse von Modellparametern, die das Impedanzverhalten beeinflussen, und verbessert zusätzlich die Robustheit nichtlinearer Parameteroptimierungstechniken. Die vorher in der Einleitung beschriebenen Zusammenhänge und Untersuchungsergebnisse mit Hilfe der Stochastik erlauben eine direkte und indirekte Zuordnung der Modelle.

Im Nyquist-Diagramm ist damit schon in der zweidimensionalen Darstellung Verhaltensmuster und Anpassung der Frequenzmuster abzuleiten. Mit Hilfe von Vektorgeometrie und Kurvendiskussionen ist eine Auswertung mathematischer Funktionen möglich. Unter Berücksichtigung der Modellierung mit konstanten Phasenelementen CPE mit 45° Phasenwinkel (Modellierung der Antennen der Gliederfüßer) ist eine weitere Vereinfachung der Analyse des Impedanzspektrums möglich. Mit Hilfe der Vektoranalyse können zusätzlich parameterabhängige Ortsvektoren bestimmt werden, die z.B. die unterschiedlichen stetigen Funktionen beschreiben.

Für die Implementierung in eine Microcontroller-basierte Anwendung ohne Verwendung von Differenzialgleichungen sind Substitutionsverfahren mit einer sog. Library-Methode ein erprobter Ansatz. Das ist vor allem zu verwenden bei Analysemethoden im zweidimensionalen oder dreidimensionalen Raum. Bei Anwendung der DRT-Methode (Distribution Relaxation Time Constant) lässt sich die Programmgröße im Microcontroller extrem reduzieren [7].

**Transformation und Analyse des Impedanzspektrum mit der DRT-Methode**

Die Analyse des DRT-Spektrums entwickelt sich zu einer etablierten Methode. In der DRT-Analyse lassen sich Extrempunkte in Abhängigkeiten von Zeitkonstanten $\tau = R \times C$ sehr gut darstellen. Bei der DRT Methode transformiert man die Impedanzdaten in eine Funktion in Abhängigkeit einer Verteilung von Zeitkonstanten $\tau$. Diese Methode ermöglicht

auch eine Vereinfachung bei dem Fitting-Prozess von Impedanzmodellen und damit auch die Vereinfachung bei der Anpassung und Signalsynthese von Frequenzpattern.

Der Vorteil der DRT-Methode ist eine einfachere Interpretation des Verhaltensmusters, ohne genau Kenntnisse eines äquivalenten Ersatzschaltbildes. Dabei ist die Verwendung der DRT-Methode in Zusammenhang mit einer Infinite Voigt-Modellierung eine erprobte Methode aus empirisch ermittelten Daten bei Untersuchungen mit Gliederfüßer, vereinfachte äquivalente Ersatzschaltbildmodelle zu erstellen. Im Deep-Learning-Prozess sind hieraus schnellere Anpassungen und Interpretationen möglich. Das DRT-Spektrum zeigt signifikante Maxima, Minima und Wendepunkte im Funktionsverlauf. Dadurch lassen sich durch Beobachtung nur dieser Extremwerte der Verlaufsfunktion nur eine sehr eingeschränkte Anzahl von frequenzabhängigen Messpunkten die Impedanzeigenschaften der Gliederfüßer beschreiben.

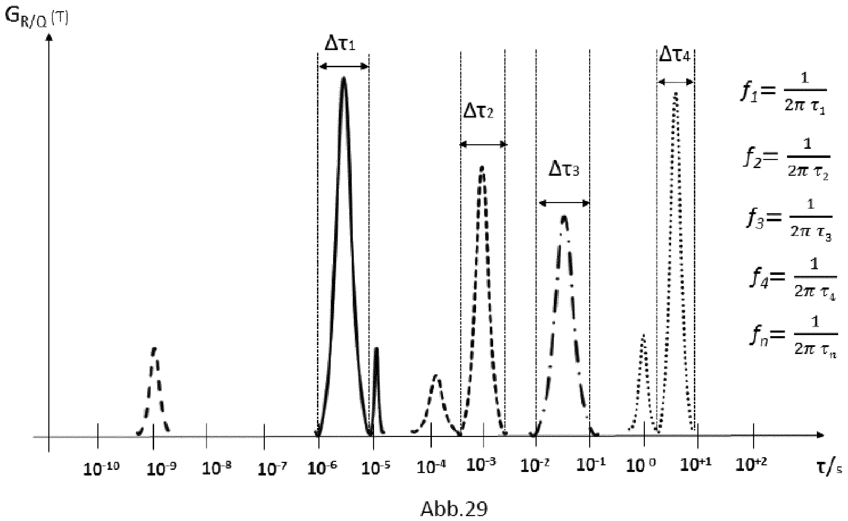

**Abb.29** zeigt ein vereinfachtes DRT Spektrum mit unterschiedlichen Relaxionszeiten.

Mit geeigneten Substitutionsverfahren über eine sog. Library-Methode [7] lässt sich die Funktion sehr Speicherplatz-sparend beschreiben, sodass nicht zwangsläufig die Anwendung von Differenzialgleichungen notwendig ist. Die mathematischen Zusammenhänge müssen aber dabei verstanden sein z.B. bei Nullstellen im Imaginäranteil des Spektrums.

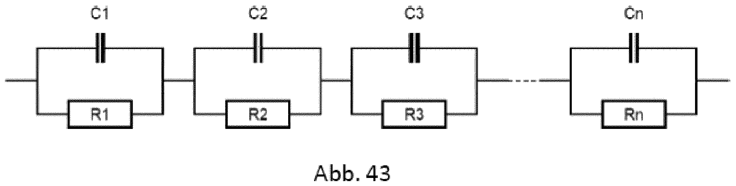

Zur Nutzung der DRT Methode nutzt man typischer Weise im Ersatzschaltbild die Infinite Voigt Schaltung **(Abb.43);** deren Impedanz wird wie folgt beschrieben Gl. (17):

$$Z(\omega) = \int_0^\infty \frac{G(\tau)}{1+i\omega\tau} d\tau$$

**Gleichung (17)**

**Abb. 43** Äquivalentes Ersatzschaltbild der Infinite Voigt Schaltung

mit G($\tau$) als die Verteilungsfunktion der Einschwingzeiten $\tau$, die das jeweilige System charakterisiert. Die physikalische Einheit G wird angegeben in $\Omega s^{-1}$

Für einen R/Q gilt folgender Zusammenhang Gl.(18):

$$G_{R/Q}(\tau) = \frac{R}{2\pi} \frac{\sin((1-\alpha)\pi)}{\cosh(\alpha \ln(\tau/\tau_{R/Q}) - \cos((1-\alpha)\pi))}$$

**Gleichung (18)**

With

$$\tau_{R/Q} = (RQ)^{1/\alpha}$$

**Gleichung (19)**

Infinite Voigt Circuit

Für einen gegebenen Satz von Parametern R, Q und $\alpha$ kann man G($\tau$) bestimmen. Die Abszisse der Spitze zeigt die Zeitkonstante $\tau_{R/Q}$ des Schaltkreises und der G-Wert in der Spitze ist wie folgt beschrieben Gl. (20)

$$\frac{dG}{d\tau} = 0 \Rightarrow G_p = \frac{R}{2\pi} \tan\left(\frac{\alpha\pi}{2}\right)$$

**Gleichung (20)**

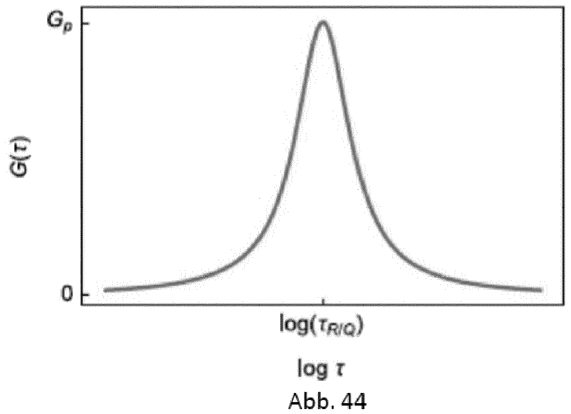

**Abb. 44** zeigt die theoretische DTR eines R/Q- Schaltkreises gemäß Gleichung (20)

Eine erweiterte Darstellung und Auswertung des Impedanzspektrums ist neben des Nyquist-Diagramms auch die Darstellung: Betrag des Imaginäranteils als Funktion der Frequenz f, der Phasenwinkel als Funktion der Frequenz f, die DRT-Analyse als 3D-Darstellung in Abhängigkeit einer dritten beliebigen Parameters oder die Bestimmung des Taufaktors zur Beschreibung des Diffusionsvorgangs.

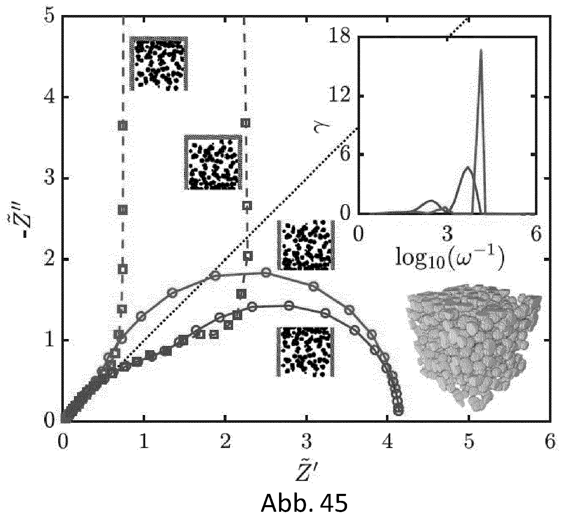

**Abb. 45**  Simuliertes Impedanzspektrum eines synthetischen Pakets von Partikeln mit Porosität. Die durchgezogenen Linien zeigt eine offene Struktur und gestrichelte Linien eine geschlossene Struktur. Im Vergleich dazu im kleinen Diagramm das DRT-Spektrum für die offene Struktur.

**Ermittlung des Diffusionstransports aus topographischen und tomographischen sensorischen Daten des Arthropods**

Die sog. Taufaktor-Ermittlung ist eine sehr effiziente Methode den reduzierten diffusen Transport in Verwindungen und verwundenen und verschlungenen heterogenen Geometrien und Strukturen zu bestimmen anhand mikrostrukturellen Bilddaten. Wie in der Einleitung beschrieben, sind ausreichend Bildinformationen von Gliederfüßern aus Untersuchungen vorhanden, die mit dem Taufaktor beschrieben werden können.

Dieser Effekt wird mit folgendem Term, dem sog. Tortuositätsfaktor $\tau$ oder Verschlingungsfaktor, wie folgt beschrieben Gl. (21)

$$D^{\mathrm{eff}} = D\frac{\varepsilon}{\tau}$$

**Gleichung (21)**

dabei ist $\varepsilon$ der Volumenanteil der leitenden Phase D und $D_{\mathrm{eff}}$ ist das effektive Diffusionsverhalten durch ein poröses Volumen. Hierbei wird eine Grenzwertbetrachtung durchgeführt, bei dem Wert $\tau=1$ ist oder $\tau >= 1$ ist. [14], [5]. Abb.6 und 7 zeigen tomographische und topographische Daten.

**Effekt der Porenstruktur auf die Diffusionsimpedanz**

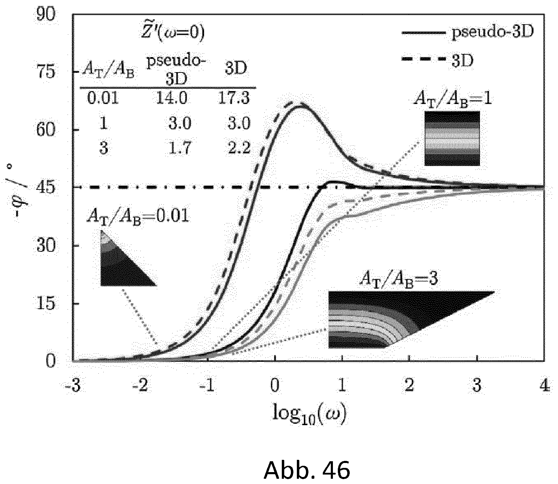

**Abb. 46**  Simulierter Phasenwinkel als Funktion der logarithmischen Frequenz für 3 einfache Mikrostrukturen mit unterschiedlichen Flächenverhältnissen an der Innen- und Außenseite

Durch unterschiedliche Darstellungsmethoden (Abb. 46) können unterschiedliche spezifische Eigenschaften von Mikrostrukturen transparent dargestellt werden. Aus dem Kurvenverlauf können indirekt Rückschlüsse auf den strukturellen Aufbau des Schichtenmodels gezogen werden, die dann bei der Modellierung von Gliederfüßern zur Reduzierung von Parametern und Variablen führt. Mit Hilfe der Vektoranalyse können parameterabhängige Ortsvektoren bestimmt werden, die z.B. die unterschiedlichen stetigen Funktionen beschreiben.

**Mathematische Auswertung mittels Wahrscheinlichkeitsrechnung und statistischen Methoden zur Datenauswertung**

Bei der Datenverarbeitung und Datenauswertung werden typischerweise mathematische Methoden der Wahrscheinlichkeitsrechnung und Statistik verwendet, um die Datenmenge zu reduzieren, mit dem Ziel Software Algorithmen in Microcontroller zu implementieren.

Dem Fachmann sind diese Methoden bekannt, wobei für die Datenreduktion und Modellierung von Impedanzkennlinien definierte Verfahren verwendet werden. Hierzu zählen die Verwendung der Wahrscheinlichkeitsdichtefunktion, die Verwendung von rekursiven Filtern, Bayes'sche Filter und insbesondere Partikel-Filter, die sich für sequenzielle Monte Carlo Methoden für online bzw. maschinelles Lernen eignen. Partikel-Filter eignen sich für parameterlose Modellierungen, Prädiktion als Vorausschau von einer vorgeschlagenen Basisfunktion, zur Korrektur und Gewichtung zwischen Zielfunktion und vorgeschlagener Funktion und dem Vorteil der Ergebnisverbesserung je mehr Samples (Abtastwerte) verarbeitet werden. Dadurch erreicht man ein besseres und schnelleres Modell-Fitting und eine bessere Approximation zwischen Messwerten und vorgeschlagenen Werten. Die Hauptschritte in der Verwendung des Partikel-Filters sind das Abtasten der einzelnen Messwerte (Partikel) unter Verwendung einer vorgeschlagenen Verteilung, die Gewichtung der Wichtigkeit und dem Re-Sampling, das Ersetzen der Samples, die nicht in die Verteilung passen. Je mehr Samples es gibt, desto besser ist die Abschätzung. Gleichung (22) beschreibt den mathematischen Zusammenhang.

$$Bel\,(x_t) = \eta\,p\,(z_t \mid x_t) \int p(x_t \mid x_{t-1}, u_{t-1})\,Bel\,(x_{t-1})\,dx_{t-1}$$

$$\bullet \; draw \; x^i_{\,t\text{-}1} \, from \; Bel \, (x_{\,t\text{-}1})$$

$$\bullet \; draw \; x^i_{\,t} \, from \; p(x_t \,|\, x^i_{\,t\text{-}1}, u_{\,t\text{-}1})$$

$$\bullet \; importance \; factor \; for \; x^i_{\,t} :$$

$$w^i_{\,t} = \frac{target \; distribution}{proposal \; distribution}$$

$$w^i_{\,t} = \frac{\eta \; p(z_t \,|\, x_t) \; p(x_t \,|\, x_{t\text{-}1}, u_{t\text{-}1}) \; Bel \, (x_{t\text{-}1})}{p(x_t \,|\, x_{t\text{-}1}, u_{t\text{-}1}) \; Bel \, (x_{t\text{-}1})}$$

$$\propto \; p \, (z_t \,|\, x_t)$$

**Gleichung (22)**

**Grundfunktion des Deep-Learning-Prozesses Prozessablauf und Verfahrensstruktur für die Gliederfüßer-Referenzmodellierung**

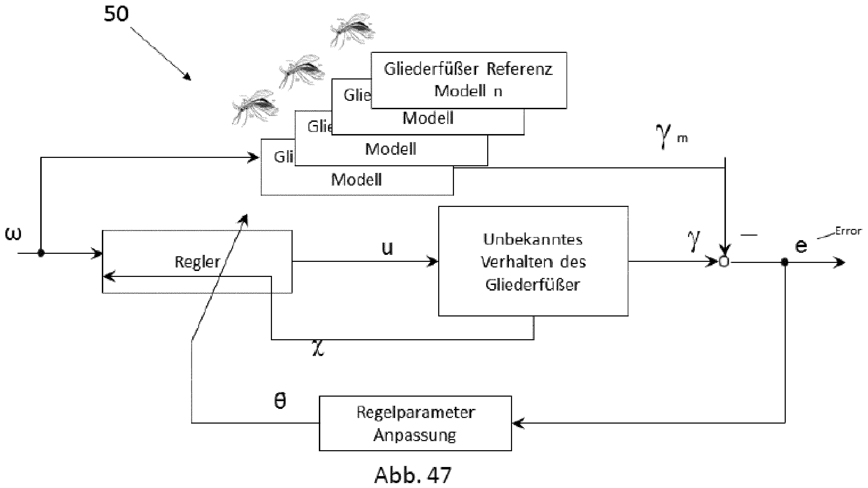

**Abb. 47**     Grundfunktion des Deep Learning Prozesses zum Anlernen der für unterschiedliche Referenzmodelle der Gliederfüßer

Bei der Gliederfüßer Referenzmodellierung wird mit Hilfe eines Referenzmodells das gewünschte Übertragungsverhalten des geschlossenen Regelkreises vorgegeben. Das erste Referenzmodell kann z.B. auf empirischen Untersuchungen basieren. **Abb.47** zeigt das allgemeine Blockschaltbild des Regelungssystems zum Anlernen unterschiedlicher Referenzmodelle. Das System besteht aus einem inneren, geschlossenen Feedback-Regelkreis und dem für die Adaption zuständigen äußeren Kreis. Die Adaption der Regler-Parameter erfolgt zum Beispiel auf Basis eines Gütekriteriums unter Verwendung eines Gradientenverfahrens oder auf anderen bekannten mathematischen Verfahren.

**Prozessablauf für die Gliederfüßer-Referenzmodellierung**

Zur Referenzmodellierung von Gliederfüßern werden nachfolgend vier Haupt-Prozessschritte beschrieben. Sofern es für die Modellierung spezifischer Gliederfüßer nicht notwendig ist, können auch einzelne Prozessschritte übersprungen werden oder nur teilweise Verwendung finden. Zur Lösung von Differenzialgleichungen gibt es viele unterschiedliche dem Fachmann bekannte Methoden, die hier nicht beschrieben werden. Ebenfalls werden die dem Fachmann bekannten Methoden, der Anwendungen von neuronalen Netzen, der Stochastik und Wahrscheinlichkeitsrechnung nicht beschrieben, weil diese hinreichend bekannt sind.

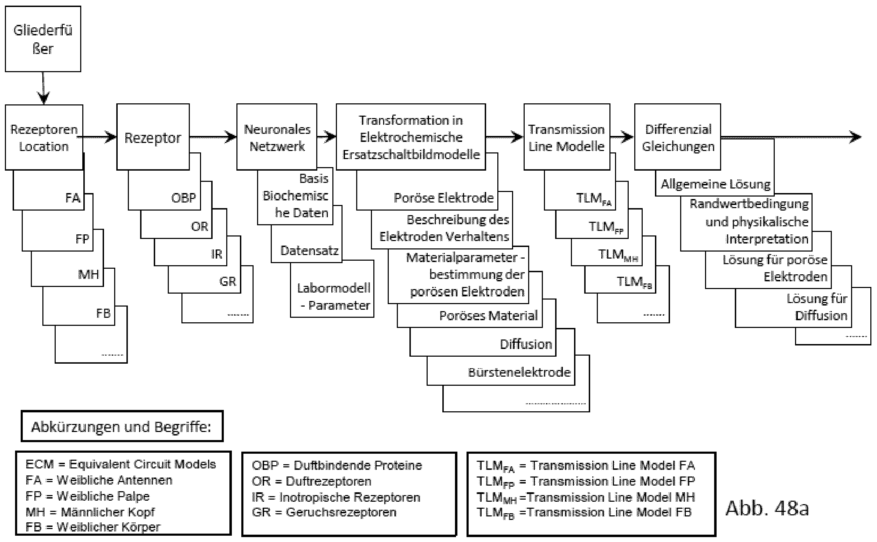

**Prozessablauf Schritt 1 für die Gliederfüßer-Referenzmodellierung gemäß Abb. 48a**

**Lokalisierung der Rezeptoren**

Im ersten Schritt der Referenzmodellierung geht es darum, die Sinnesorgane und insbesondere die sensorischen Flächen und Räume der Gliederfüßer zu bestimmen. Am Beispiel einer Stechmücke (Abb.5) sind dies beim Weibchen die Antennen, die Palpe, der Körper und beim Männchen der Kopf. Andere Arten von Gliederfüßern haben andere oder weitere sensorische Flächen und Räume bzw. Körperteile wie z.B. die Flügel, Oberkiefer, Tarsen oder die Beine. An diesen Körperteilen befinden sich sensorische Rezeptoren, die unterschiedliche bio-chemische und physikalische Eigenschaften besitzen.

### Einteilung / Clusterung der sensorischen Eigenschaften

Zu den sensorischen Eigenschaften zählen die in Abb. 15 gezeigten Rezeptoren zur Sensierung von mechanischen Veränderungen, Geschmack, Geruch, Düfte, Schall, chemische Sensorik, Temperatur und Pheromone. Hierzu zählen auch sensorische Eigenschaften zur Ionisation und damit auch zur elektrischen Leitfähigkeit von gasförmigen, flüssigen und festen Stoffen sowie die Detektion von Teilentladungen basierend auf Ionisationsvorgängen. Abb. 8 zeigt eine differenzierte Analyse der Exprimierung chemosensorischer Gene, die mit Hilfe von statistischen Verfahren ermittelt wurden.

### Anwendung von Neuronalen Funktionen

Mit Hilfe von Scoring-Modellen und neuronalen Funktionen können diese für die Ermittlung von Parametern verwendet werden. Insbesondere bei der Verwendung der Monte-Carlo-Methode sind empirisch ermittelte Ergebnisse sowie biochemische Daten hilfreich im Approximationsprozess zur Bestimmung von unbekannten Parametern. Zur Strukturierung der vielen Rezeptoren und biochemische Eigenschaften eignen sich auch OLAP-Modelle und ALEX Net Modelle, die dem Fachmann als mathematische Verfahren bekannt sind.

### Transformation in elektrochemische Modelle

Mit den biochemischen Ergebnissen folgt nun die Zerlegung der Sensorik und Rezeptoren in deren biochemischen, topographischen und tomographischen Eigenschaften und nachfolgend die Transformation von biochemischen Vorgängen hin zu äquivalenten Ersatzschaltbildmodellen (ECM). Man ordnet hier jeweils ein ECM den topologischen, tomographischen und biochemischen Vorgängen innerhalb der Gliederfüßer zu. Hierzu zählen z.B. poröse Elektroden, poröses Material, Materialparameter von porösen Material, Beschreibung von Elektrodenverhalten, Bürstenelektroden, Diffusion von Stoffen und Vorgängen, Ionisation in Stoffen und Vorgängen oder weitere elektrochemische Prozesse.

### Verwendung Transmission-Line Modellen

Im nächsten Schritt werden allgemeingültige ECMs verwendet. Die Transmission Line Modelle (TLM) eignen sich zur Modellierung vieler biochemischer und elektrochemischer Vorgänge und dienen auch der Abstrahierung von Prozessen und Vorgängen. Die Anzahl der unterschiedlichen TLM ist abhängig von dem erforderlichen Modellfit. TLMs lassen sich auch kaskadieren (hintereinander schalten), um Modelle noch genauer abzubilden.

### Lösung von Differenzialgleichungen mit Grenzwertbetrachtung

Zur Berechnung der Impedanzmodelle wird wie in Abb.28 beschrieben eine Einteilung in Cluster für die jeweiligen TLMs verwendet. Hinzu kommt eine Grenzwertbetrachtung, um die Komplexität und die Parameter der mathematischen Zusammenhänge zu reduzieren. Mit Hilfe von Differenzialgleichungen werden die TLM beschrieben und unter Anwendung der Fourier-Transformation und Laplace-Transformation und deren Rücktransformation, die Analyse im Bildbereich, Zeitbereich oder Frequenzbereich durchgeführt.

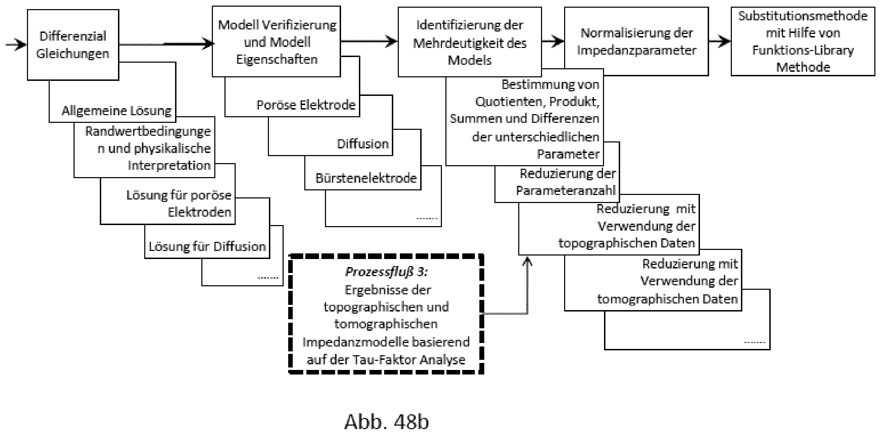

### Prozessablauf Schritt 2 für die Gliederfüßer-Referenzmodellierung gemäß Abb. 48b

### Verifizierung der verwendeten Modelle und mögliche Anpassung

Im nächsten Schritt werden die verwendeten Modelle verifiziert und ggf. angepasst. Das heißt, ein anderes TLM-Basismodell aus den 4 Modellen in Abb.28 wird für die Modellierung verwendet. Denn gerade in biochemischen Systemen ist eine Betrachtung offener oder geschlossener Strukturen (z.B. offene Poren oder geschlossene Poren) wichtig, um die Impedanzmodelle auf Basis von tomographischen und topographischen Daten abzubilden siehe **Abb. 37.**

### Identifikation der Mehrdeutigkeit der Impedanzmodelle

Das Frequenzspektrum zur Anregung von Rezeptoren von Gliederfüßern ist sehr groß. Dadurch kann eine multi-frequenz Anregung zu einer Mehrdeutigkeit der Ergebnisse führen. Unterschiedliche biochemische Vorgänge sind in unterschiedlichen Frequenzbereichen zu beobachten und zu analysieren. Ist eine eindeutige Zuordnung nicht möglich, können bestimmte Parameter durch die Verwendung von topographischen und tomographischen Daten vereinfacht oder direkt bestimmt werden.

**Normalisierung der Impedanz-Parameter**

Mit Hilfe von normalisierten Impedanz-Parametern lassen sich allgemein gültige Modelle für jede Art von Gliederfüßern definieren. Zusammen mit der Grenzwertbetrachtung gegen 0 bzw. gegen ∞ wird die Parameteranpassung in der Software vereinfacht, da die Anpassungen nur relativ zu einem vorher ermittelten Wert sind.

**Substitutionsverfahren zur Vermeidung von Differenzialgleichungen**

Zur Vermeidung von Differenzialgleichungen in Microcontroller-basierenden Systemen und zur Reduzierung des benötigten Speicherplatzes kommt ein Substitutionsverfahren in Kombination mit einer Funktions-Library [7] zum Einsatz, um beliebige nichtlineare Funktion sehr effizient zu modellieren, um z.B. nichtlineare Funktionsverläufe in Look-up-Tabellen im Microcontroller zu speichern.

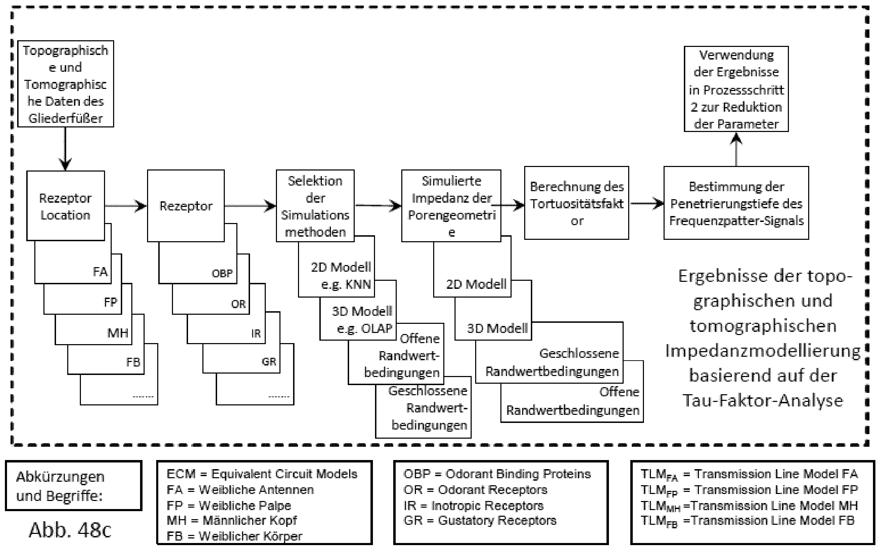

**Prozessablauf Schritt 3 für die Gliederfüßer-Referenzmodellierung gemäß Abb. 48c (topographische und tomographische Modellierung)**

**Topographische und Tomographische Analyse**

Wie aus **Abb.6, 7, 13** entnommen werden kann, ist eine topographische und tomographische Analyse von Gliederfüßern ein probates Mittel zum Gesamtverständnis der Zusammenhänge. **Abb. 16, 37, 38, 39, 40, 45 und 46** beschreiben Simulationsergebnisse und Zuordnungen von Strukturen im Impedanzspektrum. Die Zuordnung der Modellstrukturen erfolgt wie in Hauptschritt 1 und 2 beschrieben über die Lokalisierung der Rezeptoren und biochemischen Eigenschaften. Auf Basis der topographischen und tomographischen Daten sowie der Grenzwertbetrachtung können simulierte Poren-Geometrien zugeordnet werden und diese in vereinfachten 2-dimensionalen oder 3-dimensionalen Darstellungen und mathematischen Modellen verarbeitet werden.

**Bestimmung des Tau-Faktors**

Hierbei ist die Berechnung des Tortuositätsfaktors $\tau$ (Tau-Faktor) ein in der Wissenschaft bekanntes Mittel zur Beschreibung mikrostruktureller Bilddaten. Die Tau-Faktor-Ermittlung ist eine sehr effiziente Methode, den reduzierten diffusen Transport in Verwindungen und verwundenen und verschlungenen heterogenen Geometrien und Strukturen zu bestimmen anhand mikrostruktureller Bilddaten.

**Kalkulation der Eindringtiefe des Anregungssignals**

Mit Hilfe des Tau-Faktors kann die Eindringtiefe des Anregungssignals beschrieben werden [5]. Dadurch lässt sich die spezifische Anatomie der Gliederfüßer berücksichtigen. Die Ergebnisse aus dem Taufaktor können dann zur Reduzierung der Parameter in der Systembeschreibung der Gliederfüßer verwendet werden.

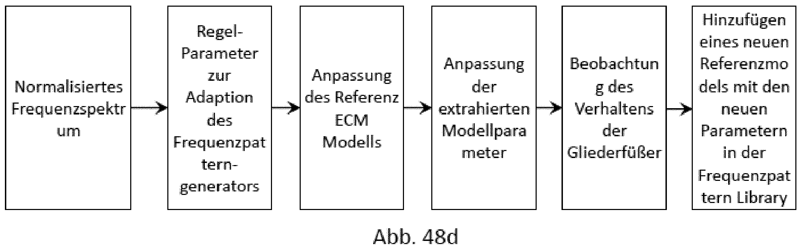

**Prozessablauf Schritt 4 für die Gliederfüßer-Referenzmodellierung gemäß Abb. 48d**

**Ermittlung der Kontroll- oder Reglungsparameter über ein adaptives Regelungssystem**

Abb.44 beschreibt das Prinzip des Deep Learning Prozesses auf Basis eines adaptiven Regelungssystems. Dies dient insbesondere zum Anlernen von weiteren Referenzmodellen anderer Arten von Gliederfüßern.

**Anpassung der Referenzmodelle und deren Parameter**

Die Anpassung der Modellparameter erfolgt auf Basis der vorherigen Ergebnisse bzw. über die Beobachtung der Gliederfüßer und deren Verhaltensmuster

**Beobachtung des Verhaltensmusters der Gliederfüßer**

Denn mit der Anregung wird das Aktivitätsverhalten der Gliederfüßer beeinflusst, das final über eine menschliche Beobachtung oder eine Kamera basierte Beobachtung oder andere geeignet optische Sensoren z.B. Infrarot oder FIR -Time off light Sensoren detektiert wird.

**Speicherung des Modells in der Funktions-Library**

Mit dem Beobachtungsergebnis wird das Modell zusammen mit dem korrespondierenden Frequenzmuster im Speicher abgelegt und damit dem Datenverarbeitungssystem angelernt.

**Referenzen:**

[1] Deciphering the olfactory repertoire of the tiger mosquito Aedes albopictus; Fabrizio Lombardo1* , Marco Salvemini2, Carmine Fiorillo1, Tony Nolan3, Laurence J. Zwiebel4, Jose M. Ribeiro5 and Bruno Arcà1, 2017

[2] In vivo assembly and trafficking of olfactory Ionotropic Receptors; Liliane Abuin1, Lucia L. Prieto-Godino1,+, Haiyun Pan2,+, Craig Gutierrez2, Lan Huang2, Rongsheng Jin2 and Richard Benton1,* 1 Center for Integrative Genomics; Genopode Building; Faculty of Biology and Medicine; University of Lausanne, CH-1015 Lausanne, Switzerland; 2Department of Physiology and Biophysics University of California, Irvine California 92697; USA; Oct.2018

[3] Chemosensory Transduction in Arthropods; Monika Stengl; The Oxford Handbook of Invertebrate Neurobiology, Edited by John H. Byrne; Subject: Neuroscience, Invertebrate Neurobiology, Molecular and Cellular Systems Online Publication Date: Feb 2017; DOI: 10.1093/oxfordhb/9780190456757.013.15

[4] Identification of a Chemosensory Receptor from the Yellow Fever Mosquito, Aedes aegypti, that is Highly Conserved and Expressed in Olfactory and Gustatory Organs; Ana Claudia A. Melo1,2*, Michael Rützler1*, R. Jason Pitts1* and Laurence J. Zwiebel1; 1Department of Biological Sciences, Center for Molecular Neuroscience and Program in Developmental Biology, Vanderbilt University, Nashville, TN, 37235, USA and 2Departamento de Patologia, Universidade Federal do Para, Belem, PA, 66075, Brasil; Chem. Senses 29: 403-410, 2004

[5] TauFactor: An open-source application for calculating tortuosity factors from tomographic data; S.J. Coopera,*, A. Berteia, P.R. Shearingb, J.A. Kilnerc, N.P. Brandona; a Electrochemical Science and Engineering, Earth Science and Engineering Department, Imperial College London, South Kensington, London, SW7 2AZ, UK; Electrochemical Innovation Lab, Department of Chemical Engineering, UCL, London, WC1E 7JE, UK; Electroceramics, Materials Department, Imperial College London, South Kensington, London, SW7 2AZ, UK; Received 5 July 2016; received in revised form 15 September 2016; accepted 19 September 2016

[6] Generalization of transmission line models for deriving the impedance of diffusion and porous media; Uwe Tröltzsch∗, Olfa Kanoun; Chemnitz University of Technology, Chair for Measurement and Sensor Technology, Reichenhainer Straße 70, 09126 Chemnitz, Germany; 2012

[7] Robust and Universal Modeling Algorithm for Impedance Spectroscopy in Embedded Systems; Andreas Mangler; Technische Universität Chemnitz, Chair Measurement and Sensor Technology; Jil Jasmin Ehnis; RUTRONIK Elektronische Bauelemente GmbH ISPRINGEN, Germany IWIS Conference 2017 Chemnitz 2017

[8] WO 2012/094768 A1 Title: DEVICE THAT EFFECTTVELY AND CONSTANTLY PROTECTS PEOPLE FROM BLOOD-SUCKFNG ARTHROPODS AND THUS PREVENTS THE SPREAD OF THE EPIDEMIC DISEASES MALARIA, YELLOW FEVER, AND DENGUE FEVER, Kurt Stoll, 19. Juli 2012

[9] WO 2016/165035 A1; METHOD AND DEVICE FOR PRODUCING ELECTROMAGNETIC FIELDS THAT INFLUENCE THE NERVOUS SYSTEM OF INSECTS; Kurt Stoll; 20. Oktober 2016

[10] WO 2018/104135 A1; METHOD AND DEVICE FOR INFLUENCING INSECTS; Kurt Stoll; 14. Juni 2018

[11] WO 99/55151, Device providing protection against insect bites without modifying the ecological balance, Kurt Stoll, 27.April 1999

[12] Extension of Pulsewidth Modulation From Carrier-Based to Dither-Based, Shiang-Hwua Yu ; Ting-Yu Wu ; Sing-Han Wang , Published in: IEEE Transactions on Industrial Informatics ( Volume: 9 , Issue: 2 , May 2013 ) Page(s): 1029 - 1036 Date of Publication: 24 September 2012 ISSN Information: INSPEC Accession Number: 13220087, DOI: 10.1109/TII.2012.2220555, Publisher: IEEE

[13] J.P. Meyers, M. Doyle, R.M. Darling, J. Newman, Journal of the Electrochemical, Society 147 (2000) 2930

[14] Simulated impedance of diffusion in porous media; Samuel J. Coopera,*, Antonio Berteib, Donal P. Fineganc,d, Nigel P. Brandonb; Electrochimica Acta 251 (2017) 681-689; Available online 27 July 2017

[15] E. Barsoukov, J.R. Macdonald, Impedance Spectroscopy: Theory, Experiment,and Applications, 2nd Edition, (2005)

[16] H. Keiser, K.D. Beccu, M.A. Gutjahr, Abschätzung der porenstruktur poröser elektroden aus impedanzmessungen, Electrochimica Acta 21 (1976) 539-543.

Hiervon ausgehend wird die Erfindung im Folgenden näher erläutert. Die Erfindung betrifft ein Verfahren und eine Vorrichtung zum Beeinflussen von Gliederfüßern mittels elektromagnetischer Strahlung.

Stand der Technik

In der WO 99/55151 A1 [11] ist eine Vorrichtung für den Schutz vor Insektenstichen offenbart. Die Vorrichtung weist Oszillatoren auf, welche Schwingungen mit unterschiedlicher Frequenz erzeugen, die sich über die menschliche Haut ausbreiten. Sitzt ein Insekt auf der Oberfläche der Haut werden die Schwingungen durch die Sensillen des Insekts wahrgenommen und über Sinneszellen des Insekts in Reizströme umgewandelt. Das Insekt wird dadurch in dem Vorhaben gestört, den Menschen zu stechen, und entfernt sich von der Hautoberfläche.

Aus der WO 2012/094768 A1 [8] ist eine Vorrichtung offenbart, die den Menschen vor blutsaugenden Arthropoden schützt und somit die Ausbreitung von Seuchen verhindert. Die Vorrichtung weist im Wesentlichen zwei Mikroprozessoren und zwei Sender auf, welche verschiedene Pulse und Pulsfolgefrequenzen aussenden. Über an den Endstufen der Sender angekoppelte Antennen wird ein gepulstes Trägersignal in Form von elektromagnetischen Wellen abgestrahlt. Als Trägerfrequenz wird ein mittleres Frequenzspektrum eines Blitzentladungskanals von 565 kHz gewählt. Durch die abgestrahlte Sendeleistung von 5 Mikrowatt wird eine Schutzzone aufgebaut, die den Menschen im Umkreis von etwa zwei Meter vor Arthropoden schützt. Es werden so äußere Einflüsse, wie z.B. Blitze als Signale simuliert, welche von Arthropoden wahrgenommen werden, so dass bei ihnen eine automatische Fluchtreaktion eingeleitet wird.

Aus der WO 2016/165035 A1 [9] sind eine Vorrichtung und ein Verfahren offenbart, wobei Insekten durch einen Zweikanal-Pulsmustersender beeinflusst werden, der über integrierte Antennen zwei um 180 Grad gegeneinander phasenverschobene, modulierte und gepulste elektromagnetische Wellen abstrahlt. Dadurch werden zwei elektromagnetische Felder erzeugt, die Neuronen, die sich im Oberschlund- und Unterschlundganglion der Insekten befinden, sowie Neuronen, die sich im zentralen und peripheren Nervensystem der Insekten befinden, so beeinflusst, dass sie in einen inaktiven Zustand versetzt werden, so dass die Insekten die menschliche Haut nicht penetrieren können.

Ein Verfahren und eine Vorrichtung zum Beeinflussen von Insekten mittels elektromagnetischer Strahlung sind in der WO 2018/104135 A1 [10] offenbart. Ein Sender erzeugt einen zeitlichen Verlauf einer Antennenspeisung mit Pulsen, welche über eine Antenne als elektromagnetische Strahlung mit entsprechenden Pulsen abgestrahlt wird. Die Antennenspeisung weist Bursts bzw. Pakete oder Salven von Pulsen auf, wobei der zeitliche Abstand zwischen direkt aufeinanderfolgenden Pulsen eines Bursts im Bereich von 5 Mikrosekunden bis 9 Mikrosekunden liegt und die zeitliche Ausdehnung der Bursts mindestens 0,1 Millisekunden beträgt.

In Dokument ALFAIFI, Bandar et al.: Computer simulation analyses to improve radio frequency (RF) heating uniformity in dried fruits for insect control. Innovative Food Science & Emerging Technologies, 2016, 37. Jg., S. 125 - 137 wird der Einfluss verschiedener Elektrodenkonfigurationen auf die Erwärmung von unterschiedlichen Probengeometrien untersucht, um eine ungleiche Temperaturverteilung innerhalb verschiedener Proben zu minimieren. Dazu wird die Temperatur bei verschiedenen Probengeometrien simuliert. Ziel dabei ist, Nahrungsmittel mittels Temperatur so zu behandeln, dass Schädlinge wie Insekten möglichst vollständig entfernt werden

Dokument WANG, Shaojin, et al.: Dielectric Properties of Fruits and Insect Pests as related to radio frequency and Microwave treatments. Biosystems Engineering, 2003, 85. Jg., Nr. 2, S. 201 - 212 betrifft eine Ermittlung einer Strahlungscharakteristik zum Einwirken auf Insekten mittels eines elektronischen Simulations- bzw. Impedanzmodells. Es werden dielektrische Eigenschaften bei verschiedenen Frequenzen und Temperaturen von unterschiedlichen Proben wie Insekten und Nahrungsmitteln gemessen sowie die Eindringtiefe und ein Verlustfaktor berechnet.

Allen Verfahren und Vorrichtungen im aufgeführten Stand der Technik ist gemeinsam, dass bestimmte (empirisch ermittelte) Pulse und Pulsbreiten mittels eines Senders als elektromagnetische Strahlung ausgesendet werden. Für jeden Gliederfüßer (z.B. Insekten, Spinnen, Raupen) müssen neue empirische Studien durchgeführt werden, um eine entsprechende Pulsfolge zu bestimmen, auf welche der Gliederfüßer reagiert, so dass er den Menschen nicht sticht. Um die verschiedenen Pulsfolgen zur Beeinflussung des Verhaltens unterschiedlicher Gliederfüßer zu ermitteln, müssen somit für jeden Gliederfüßer zeitaufwendige intensive Versuche durchgeführt werden. Ein systematischer Ansatz ist dem Stand der Technik nicht zu entnehmen.

Darstellung der Erfindung

Ausgehend von diesem Stand der Technik liegt der folgenden Erfindung die Aufgabe zugrunde, ein Verfahren und eine Vorrichtung zum Beeinflussen von Gliederfüßern (z.B. Insekten, Spinnen, Raupen) mittels elektromagnetischer Strahlung bereit zu stellen, mit Hilfe derer sich für jedes Gliederfüßer entsprechende Signale und/oder Signalmuster, auf welches das entsprechende Gliederfüßer reagiert, schnell, einfach und systematisch ermitteln lassen.

Diese Aufgabe wird durch ein Verfahren mit den Merkmalen des Anspruches 1 sowie durch eine Vorrichtung mit den Merkmalen des Anspruches 15 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch Erläutern des Sachverhaltes aus der Beschreibung und durch Details aus den Abbildungen ergänzt werden, wobei weitere Ausführungsvarianten der Erfindung aufgezeigt werden.

Aus der Biologie ist bekannt, Gliederfüßer hinsichtlich ihrer Sinnesorgane zu untersuchen. Es kann somit z.B. eine Lokalisierung von Sinnesorganen und insbesondere von sensorischen Flächen und Räumen der Gliederfüßer gewonnen werden. Bei einer Stechmücke beispielsweise sind dies beim Weibchen die Antennen, die Palpe, der Körper und beim Männchen der Kopf. Andere Arten von Gliederfüßern haben andere oder weitere sensorische Flächen und Räume bzw. Körperteile wie z.B. die Flügel, Oberkiefer, Tarsen oder die Beine. An diesen Körperteilen befinden sich physikalische und/oder biochemische sensorische Anhänge, die unterschiedliche physikalische, biochemische und/oder sensorische Eigenschaften besitzen. Die Lokalisierung der sensorischen Anhänge ist wie oben beschrieben aus der Biologie bekannt und kann von dort übernommen werden, beispielsweise aus entsprechenden Veröffentlichungen.

Zu den physikalischen und/oder biochemischen sensorischen Anhängen der Gliederfüßer zählen z.B. Sensoren und/oder Rezeptoren z.B. zur Sensierung von mechanischen Veränderungen, Geschmack, Geruch, Düfte, Schall, chemische Sensorik, Temperatur und Pheromone. Hierzu zählen z.B. auch sensorische Anhänge zur Ionisation und damit auch zur elektrischen Leitfähigkeit von gasförmigen, flüssigen und festen Stoffen sowie die Detektion von Teilentladungen basierend auf Ionisationsvorgängen.

Diese sensorischen Anhänge reagieren auf unterschiedliche Signale und/oder Signalmuster, beispielsweise kann mit einem entsprechenden Signal und/oder Signalmuster z.B. in Form von elektromagnetischen Strahlung, ein Gliederfüßer so beeinflusst werden, dass er z.B. die Flucht ergreift oder in einen inaktiven Zustand versetzt wird. Dabei sprechen das entsprechende Signal und/oder das Signalmuster wenigstens einen bestimmten sensorischen Anhang und/oder wenigstens eine sensorische Eigenschaft des Gliederfüßers an, welcher die Gliederfüßer dann entsprechend beeinflusst.

Bei dem erfindungsgemäßen Verfahren zum Beeinflussen von Gliederfüßern mittels elektromagnetischer Strahlung wird von wenigstens einem Sender elektromagnetische Strahlung abgestrahlt. Die Charakteristik der elektromagnetischen Strahlung, beispielsweise der zeitliche Verlauf der elektromagnetischen Strahlung, wird erfindungsgemäß mit Hilfe wenigstens eines äquivalenten elektronischen Ersatzschaltbildes (ECM) erstellt, wobei das Ersatzschaltbild ein Modell des Gliederfüßers ist. Dadurch lassen sich die Signale und/oder Signalmuster, auf welche der entsprechende Gliederfüßer reagiert, für jeden Gliederfüßer schnell, einfach und systematisch erhalten, wobei das äquivalente elektronische Ersatzschaltbild als Modell des Gliederfüßers als Grundlage verwendet wird. Eine empirische Ermittlung der Signale und/oder Signalmuster, auf welche der Gliederfüßer reagiert, ist somit nicht mehr notwendig. Vielmehr wird durch das erfindungsgemäße Verfahren ein systematischer Ansatz zur Ermittlung der Signale und/oder Signalmuster zum Beeinflussen des Gliederfüßers bereitgestellt.

ECM sind elektrische Ersatzschaltbilder, welche beispielsweise unterschiedliche Konfigurationen und/oder Elemente z.B. aus ohmschen Widerständen, Induktivitäten und Kondensatoren aufweisen. Die Verschaltung dieser Elemente kann in beliebiger Weise realisiert werden. Die komplexen Widerstände Z in den Ersatzschaltbildern stehen stellvertretend für ein komplexes Netzwerk bestehend aus mindestens einem dieser drei Elemente.

Die Charakteristik der elektromagnetischen Strahlung kann dabei von verschiedenen Faktoren abhängen, beispielsweise sind eine zeitliche, eine räumliche oder eine Frequenz-Abhängigkeit denkbar. Prinzipiell sind jedoch weitere Faktoren denkbar mit denen elektromagnetische Strahlung beschrieben und/oder charakterisiert werden kann.

Die (mathematischen und elektrotechnischen) ECM liefern anstelle von physikalischen, chemischen und/oder biochemischen Ansätzen sehr ähnliche Ergebnisse, wobei der Ausgangspunkt jedoch etwas anders ist. Für die Betrachtung von Ladungsträgern werden physikalische, chemische und/oder biochemische Ansätze bevorzugt. Für die Untersuchung des Verhaltens eines elektrischen Systems sind dagegen ECM besser geeignet. Aufgrund der Ähnlichkeiten sind auch gemischte Ansätze möglich. ECM können den Prozess der Modellidentifikation vereinfachen. Die Anwendung von ECM ist nicht auf lineare Systeme beschränkt.

Vorteilhaft für ein genaues und zielgerichtetes Beeinflussen beschreibt das Modell wenigstens einen sensorischen Anhang und/oder wenigstens eine sensorische Eigenschaft des Gliederfüßers. Die sensorischen Fähigkeiten von Gliederfüßern lassen sich durch diskrete einzelne Sensoren beschreiben. Physikalisch betrachtet, ist eine Vielzahl von Sensoren mit fusionierten Sensoreigenschaften notwendig, um die komplexen Sensorstrukturen von Gliederfüßern nachzubilden. Beispiele für physikalische Sensoren sind Ionisierungssensoren der Luft oder Umgebung, Geschmacksensoren, Chemosensoren, Gassensoren/Atemsensoren, Luftqualitätssensoren, $CO_2$-Sensoren, Luftdrucksensoren, Temperatursensoren, Feuchtesensoren, Time-of-Flight-Sensoren, Infrarotsensoren, UV-Sensoren, Beschleunigungssensoren und Schallsensoren. Biologische Voruntersuchungen haben gezeigt, dass es eine klare Zuordnung gibt von definierten Sensoreigenschaften sowie von Häufigkeitsprofilen sensorischer Gene und der Verteilung und Anordnung von Sensoren zwischen männlich und weiblich, sodass die sensorischen Fähigkeiten eines Gliederfüßers durch z.B. eine Vielzahl von physikalischen Sensoren beschrieben werden können. Dabei haben verschiedene Arten von Gliederfüßern unterschiedliche sensorische Fähigkeiten und eine unterschiedliche Häufigkeit und Verteilung der sensorischen Fähigkeiten.

Aufgrund der multiplen sensorischen Eigenschaften und deren physikalischen und/oder biochemischen Funktionen sind unterschiedliche Signale und/oder Signalmuster z.B. Frequenzmuster/- pattern notwendig, um möglichst alle sensorischen Anhänge der Gliederfüßer und/oder deren sensorischen Eigenschaften zu stimulieren. Diese Frequenzmuster können entweder zeitgleich, simultan oder sequenziell, nacheinander gesendet werden. Hierbei sind z.B. die Topologie und/oder der physikalische Aufbau des Gliederfüßers entscheidend dafür, welche sensorischen Anhänge stimuliert werden sollen. Zur Stimulation der unterschiedlichen Arten der Gliederfüßer sind auch unterschiedliche Frequenzmuster/-pattern notwendig.

Um das elektrische Verhalten von sensorischen Anhängen und/oder von sensorischen Eigenschaften der Gliederfüßer zu beschreiben, werden äquivalente elektronische Ersatzschaltbilder (equivalent circuits) als Modelle des Gliederfüßers verwendet. Transmission Line Modelle (TLM) sind universell als ECM verwendbar. Durch die Hintereinanderschaltung von mehreren TLM können beliebige kaskadierte Modelle aufgebaut werden. Mit Hilfe von hintereinander geschalteten TLM können auch Infinite Voigt-Modelle aufgebaut werden. Mit äquivalenten elektronischen Ersatzschaltbildern lassen sich die physikalischen und/oder biochemischen Effekte der sensorischen Anhänge des Gliederfüßers beschreiben. Sensorische Anhänge der Gliederfüßer sind beispielsweise die Antennen, die Sensillenhaare oder der Körper des Gliederfüßers. Jedoch können weitere sensorische Anhänge je nach Gliederfüßer betrachtet werden.

Durch die Verwendung von ECM in der komplexen Ebene oder durch die Analyse der Verteilung der Relaxationszeiten (DRT) ist es möglich, die relativen Beiträge zur Impedanz der verschiedenen physikalischen, elektrochemischen und/oder biochemischen Prozesse in Gliederfüßern vorteilhaft zu untersuchen, zu beschreiben und zu entkoppeln. Dies ist eine Methode, um sogenannte Points-of-Interest im Impedanzspektrum in einem dynamischen Bereich darzustellen und das unterschiedliche Impedanzverhalten von Gliederfüßern klar unterscheiden zu können. Die unterschiedlichen Darstellungsmethoden wie z.B. Nyquist-Plot oder DRT-Spektrum zeigen signifikante Punkte im Spektrum. Diese signifikanten Punkte werden den biochemischen und/oder physikalischen Eigenschaften und Verhaltensmuster der Gliederfüßer zugeordnet.

Das Ersatzschaltbild ist ein wenigstens eines sensorischen Anhangs und/oder wenigstens einer sensorischen Eigenschaft des Gliederfüßers. Somit ist es möglich, verschiedene Modelle und/oder Ersatzschaltbilder für unterschiedliche Gliederfüßer mit verschiedenen sensorischen Anhängen und/oder sensorischen Eigenschaften zu erhalten. Prinzipiell können beliebig viele Modelle verwendet werden und miteinander zusammen ausgewertet werden. Weiterhin können die sensorischen Anhänge und/oder sensorischen Eigenschaften der Gliederfüßer durch weitere Submodelle ergänzt werden oder es können zur Reduzierung der Anzahl der Modelle und/oder der elektrischen Ersatzschaltbilder nur einzelne sensorische Anhänge und/oder sensorische Eigenschaften modelliert werden.

Für eine vorteilhaft schnelle Ermittlung der Signale und/oder Signalmuster zum Beeinflussen des Gliederfüßers wird bevorzugt zunächst wenigstens ein Puls, bevorzugt z.B. ein Trichelpuls ausgesendet. Prinzipiell kann es sich aber um einen beliebigen Puls handeln. Im Anschluss wird das Frequenzspektrum des ausgesandten Pulses erfasst. Danach wird wenigstens ein Frequenzanteil des Frequenzspektrums des ausgesandten Pulses ermittelt, beispielsweise mittels einer Fouriertransformation und der Frequenzanteil in eine Einschwingzeit umgerechnet. Aus der Gruppe umfassend den sensorischen Anhang und die sensorische Eigenschaft des Gliederfüßers wird wenigstens ein Element bestimmt. Es wird daraufhin das wenigstens eine elektronische Ersatzschaltbild, das zu dem wenigstens einen bestimmten Element aus der Gruppe umfassend den sensorischen Anhang und die sensorische Eigenschaft des Gliederfüßers äquivalent ist und das wenigstens ein unbekanntes RC-Glied aufweist mit einem Widerstand R von $0 \leq R$ und einer Kapazität C von $0 \leq C$ ausgewählt. Nun wird das wenigstens eine unbekannte RC-Glied anhand der mit den Zeitkonstanten des RC-Glieds korrespondierenden Einschwingzeit, die aus dem Frequenzanteil des Frequenzspektrums des ausgesandten Pulses umgerechnet ist, als wenigstens ein nun bekanntes RC-Glied bestimmt. Im Anschluss erfolgt die Ermittlung wenigstens eines für die Beeinflussung des Gliederfüßers signifikanten RC-Glieds.

Zum Ermitteln des wenigstens einen signifikanten RC-Glieds wird bevorzugt die Spannungsamplitude in Abhängigkeit der wenigstens einen Einschwingzeit normiert, die mit dem bekannten RC-Glied bestimmt ist. Daraufhin erfolgt die Ermittlung anhand der normierten Spannungsamplitude. Vorzugsweise erfolgt die Normierung mittels einer DRT-Analyse, wodurch sich vorteilhaft eine schnelle und einfache Ermittlung ergibt. Auch eine graphische Ermittlung durch Mustererkennung wird dadurch möglich.

Vorteilhaft für schnelle und einfache Ermittlung der Charakteristik der elektromagnetischen Strahlung weist der zeitliche Verlauf des Pulses bevorzugt wenigstens einen positiven und/oder negativen Trichelpuls auf.

Bevorzugt findet ein Anlernen des Gliederfüßers durch Variation der Zeitkonstanten des wenigstens einen signifikanten RC-Glieds statt. So ist vorteilhaft möglich, lediglich die Frequenz des signifikanten RC-Glieds zu ändern, anstatt die aller RC-Glieder, um die Charakteristik der elektromagnetischen Strahlung zu ermitteln.

Für eine vorteilhafte Plausibilitätsprüfung oder auch alternative Ermittlung hinsichtlich des ermittelten signifikanten RC-Glieds wird bevorzugt zunächst wenigstens ein Element aus der Gruppe umfassend den sensorischen Anhang und die sensorische Eigenschaft des Gliederfüßers bestimmt. Im Anschluss wird ein Frequenzverhalten des wenigstens einen Elements aus der Gruppe umfassend den sensorischen Anhang und die sensorische Eigenschaft des Gliederfüßers bei Aussenden wenigstens eines Pulses erkannt und graphisch dargestellt. Ebenfalls erkannt und graphisch dargestellt wird ein Frequenzverhalten von Ersatzschaltbildern beim Aussenden wenigstens eines Pulses. Dann wird das graphisch dargestellte Frequenzverhalten der Ersatzschaltbilder mit dem graphisch dargestellten Frequenzverhalten des wenigstens einen Elements aus der Gruppe umfassend den sensorischen Anhang und die sensorische Eigenschaft des Gliederfüßers verglichen und eine Ähnlichkeit graphischer Muster bestimmt. Im Anschluss kann dann eine Auswahl des wenigstens einen elektronischen Ersatzschaltbilds, das zu dem wenigstens einen Element aus der Gruppe umfassend den sensorischen Anhang und die sensorische Eigenschaft des Gliederfüßers äquivalent ist, anhand der bestimmten Ähnlichkeit vorgenommen werden.

Für eine besonders übersichtliche Darstellung erfolgt die graphische Darstellung bevorzugt in einem Nyquist-Diagramm.

Um vorteilhaft die Mehrdeutigkeit von Impedanzmodellgleichungen zu analysieren, zu reduzieren oder gar zu beseitigen, wird einem Modell oder Submodell wenigstens ein physikalischer und/oder biochemischer Effekt der sensorischen Anhänge und/oder der sensorischen Eigenschaften des Gliederfüßers zugeordnet. Dabei beschreibt z.B. das Modell oder Submodell einer Bürstenelektrode die Antennen des Gliederfüßers; das Modell oder Submodell einer porösen Elektrode die porösen Sensillenhaare des Gliederfüßers; das Modell oder Submodell der allgemeinen Diffusion die Ionendiffusion. Weiterhin werden Effekte z.B. durch das Modell oder Submodell der Diffusion der nicht-permeablen Wand und/oder der Diffusion eines idealen Reservoirs beschrieben. Ein weiteres Modell oder Submodell ist z.B. ein Modell zum Berechnen des Tortuositätsfaktors aus tomografischen und/oder topographischen Daten der Oberfläche und/oder der inneren Struktur des Gliederfüßers. Ebenfalls wird durch die Beseitigung von Mehrdeutigkeiten die Analyse von Modellparametern vereinfacht, welche das Impedanzverhalten beeinflussen, und zusätzlich die Robustheit nichtlinearer Parameteroptimierungstechniken verbessert.

Z.B. quantifiziert das Berechnungsmodell des Tortuositätsfaktors (= Tau-Faktor) aus tomografischen Daten der Oberfläche von Gliederfüßern die scheinbare Abnahme des diffusen Transports, die sich aus Windungen der Strömungspfade durch poröse Medien, randdichte und bildbasierte Mikrostrukturdaten ergibt. Es gibt etablierte mathematische Werkzeuge, wie z.B. die Tau-Faktor-Berechnung zur effizienten Berechnung des Tau-Faktors sowie der Volumenanteile, der Oberflächen und der dreidimensionalen Struktur. Mit Hilfe des Tau-Faktors kann die Eindringtiefe des Anregungssignals beschrieben werden. Dadurch lässt sich die spezifische Anatomie der Gliederfüßer berücksichtigen. Die Tau-Faktor-Berechnung ist eine sehr effiziente Methode, den reduzierten diffusen Transport in Verwindungen und verwundenen und verschlungenen heterogenen Geometrien und Strukturen anhand mikrostruktureller Bilddaten zu bestimmen. Die Ergebnisse aus dem Tau-Faktor können dann zur Reduzierung der Parameter in der Systembeschreibung der Gliederfüßer verwendet werden. Beispielsweise können Korrelationen verwendet werden, um den Tortuositätsfaktor zu approximieren. In den letzten Jahren hat jedoch die zunehmende Verfügbarkeit von 3D-Bildgebungstechniken das Interesse geweckt, die Größe direkter zu berechnen. So können schnell und genau die für die moderne Tomographie typischen großen Datensätze angewendet werden, ohne eine hohe Rechenleistung zu erfordern.

Die sensorischen Eigenschaften der Gliederfüßer können durch weitere Modelle ergänzt werden oder es können zur Reduzierung der Anzahl der elektronischen Ersatzschaltbilder-Modelle nur einzelne sensorische Eigenschaften modelliert werden. Durch die Beseitigung von Mehrdeutigkeiten vereinfacht sich die Analyse von Modellparametern, die das Impedanzverhalten beeinflussen, und verbessert sich zusätzlich die Robustheit nichtlinearer Parameteroptimierungstechnik. Die vorher beschriebenen Zusammenhänge und Untersuchungsergebnisse mithilfe der Stochastik erlauben eine direkte und indirekte Zuordnung der Modelle.

Da vorteilhaft allgemein gültige Lösungen für Transmission Line-Modelle (TLM) vorliegen und somit z.B. beliebige physikalische und/oder biochemische Effekte mit TLM beschrieben werden können, wird zur Generierung des Ersatzschaltbildes wenigstens ein TLM verwendet. Die TLM sind somit universell als ECM verwendbar. Mit der Verwendung von TLM können beliebige äquivalente Ersatzschaltbilder generiert werden, weil z.B. für die einzelnen komplexen Elemente Zx auch Randwertbedingungen angenommen werden können (z.B. Zx = 0 oder Zx = ∞). Beispielsweise ist es möglich ein ECM als TLM oder eine andere ECM-Schaltungsstruktur aus komplexen Elementen wie z.B. Widerstand, Kondensator oder Induktivität zu verwenden. Durch die richtige Auswahl der Elemente und Parameter des TLM, z.B. unterschiedliche Widerstände, Kondensatoren, Spulen, Impedanzen, Ströme und/oder Spannungen, ist es möglich, das unterschiedliche Verhalten eines Systems und auch die fraktale Struktur eines physikalischen und/oder elektrochemischen Systems zu identifizieren. Die Elemente eines TLM können z.B. eine nichtlineare Spannungs- und Stromabhängigkeit aufweisen. Die Parameter können außerdem z.B. positionsabhängig oder frequenzabhängig sein. In diesem Fall werden oft numerische Methoden zur Berechnung der Impedanz benötigt. Die Lösung der Differentialgleichungen eines allgemeinen TLM ermöglicht z.B. die Simulation der Impedanz vieler verschiedener Systeme mit der gleichen Methodik. Die Verwendung unterschiedlicher Randbedingungen ermöglicht die Simulation verschiedener Systeme mit dem gleichen Modell. Die Änderung der Werte der Impedanzen ermöglicht die Simulation eines Systems unter verschiedenen Bedingungen und auch die Simulation verschiedener Systeme. Mit geeigneten Parametern werden die Zusammenhänge mit Modellen aus elektrochemischen Ansätzen dargestellt. Somit wird eine Identifizierung der Beziehung zwischen verschiedenen Modellen ermöglicht, z.B. den Grad der Ähnlichkeit zwischen Diffusions- und porösen Elektrodenmodellen. Denkbar ist auch, dass die in Submodelle unterteilten elektronischen Ersatzschaltbilder mittels der TLM beschrieben werden.

Prinzipiell stellen Ersatzschaltbilder (ECM) einen elektrotechnischen Ansatz zur Beschreibung eines Modells z.B. eines Gliederfüßers dar, während allgemeine Transmission Line-Modelle (TLM) einen allgemein gültigen mathematischen Ansatz zur Beschreibung der ECM bzw. des Modells darstellen. Ein allgemeines TLM abstrahiert das herkömmliche ECM, durch die Verwendung von allgemein gültigen komplexen Elementen Z im Ersatzschaltbild. Ein ECM verwendet zur Beschreibung eines Modells z.B. (elektrotechnische) Schaltpläne mit entsprechenden Elementen z.B. Widerstände, Kondensatoren und/oder Spulen, während ein TLM ein allgemein gültiger Ansatz ist, bei denen die komplexen Elemente Z allgemein gewählt werden um die Gleichungssysteme zu vereinfachen. Somit sind die Lösungen der Differenzialgleichungen mit Hilfe des TLM mathematisch betrachtet vereinfacht zu lösen. Zur vereinfachten Modellierung von elektrochemische und biochemische Prozessen von Gliederfüßern, werden Randwertbedingungen zur Beschreibung des ECM und/oder des Modells verwendet. Mit ECM und/oder TLM lassen sich somit Informationen über das Modell erhalten. Zur Vereinfachung der Systemsimulation und Systemidentifikation von Gliederfüßer, insbesondere bei der Beschreibung von Diffusionsprozessen, porösen Strukturen wie porösen Sensillenhaaren sind unterschiedliche Modellierungen anzuwenden. Ebenfalls ist es durch Transformationen möglich, zwischen einer elektrotechnischen Beschreibung eines ECM und einer mathematischen Beschreibung eines TLM zu wechseln. Für eine empirische Ermittlung von Frequenzpattern ist die Modellierung mit Hilfe von Infinite Voigt Modellen (ECM) eine vereinfachte Modellierungsmethode, die das Relaxionsverhalten der Gliederfüßer beschreibt.

Für eine vorteilhaft möglichst universelle Darstellung und Verwendung von Ersatzschaltbildern wird bevorzugt zur Bestimmung des wenigstens einen RC-Glieds des Ersatzschaltbildes wenigstens ein Transmission-Line-Modell verwendet.

Um vorteilhaft weitere noch komplexere Systeme zu modellieren und/oder um Modelle noch genauer abzubilden, werden wenigstens zwei oder mehrere Ersatzschaltbilder hintereinander geschaltet. Beispielsweise können so Gliederfüßer mit mehreren sensorischen Anhängen und/oder sensorischen Eigenschaften z.B. unterschiedlichen Sensillenhaaren sowie mit mehreren unterschiedlichen Antennen modelliert werden. Durch die Hintereinanderschaltung von mehreren ECM können beliebige kaskadierte Modelle aufgebaut werden. Mit Hilfe von hintereinander geschalteten ECM können z.B. auch Infinite Voigt-Modelle aufgebaut werden. Weiterhin ist es somit möglich, ein verdichtetes elektronisches Ersatzschaltbild zu erhalten, in dem mehrere Transmission-Line-Modelle seriell angeordnet sind. Ein Beispiel für ein verdichtetes Ersatzschaltbild sind Infinite Voigt-Modelle oder Modelle die konstante Phasenelemente (CPE) verwenden.

Wird wenigstens eine Randwertbedingung mit dem TLM verwendet, um das Modell des Gliederfüßers zu beschreiben, kann vorteilhaft eine Simulation verschiedener Systeme mit dem gleichen Modell erfolgen. Damit ist eine Abgrenzung der physikalischen und/oder biochemischen Effekte der sensorischen Anhänge und/oder der sensorischen Eigenschaften des Gliederfüßers unter Berücksichtigung der Randwertbedingungen möglich. Beispielsweise ergeben sich unterschiedliche Ströme und/oder Spannungen im TLM zur Beschreibung der Antennen oder der Sensillenhaare des Gliederfüßers.

Für ein vorteilhaft vereinfachtes Modell weist die Randwertbedingung wenigstens eine Randwertbetrachtung von wenigstens einer Impedanz, z.B. gegen 0 und/oder unendlich auf, wodurch das TLM in ein vereinfachtes Ersatzschaltbild überführt wird. Es ist somit vorteilhaft möglich, das Modell einfacher und mit weniger Rechenaufwand zu beschreiben und/oder zu berechnen.

Wird mit Hilfe des Ersatzschaltbildes oder des vereinfachten Ersatzschaltbilds wenigstens ein Impedanzspektrum ermittelt, so können vorteilhaft diesem Spektrum die relevanten Points-of-Interest schnell und einfach entnommen werden. Beispielsweise ist es mit vereinfachten Ersatzschaltbildern wie z.B. Infinite Voigt-Modellen möglich Impedanzspektren aus empirischen ermittelten Daten zu bestimmen. Auch können z.B. aus empirischen Ersatzschaltbildern Impedanzspektren ermittelt werden.

Für vorteilhaft genauere Ergebnisse wird das Impedanzspektrum mit Hilfe von tomographischen und/oder topographischen Daten ermittelt. Beispielsweise können die tomographischen und/oder topographischen Daten aus entsprechenden Veröffentlichungen stammen. Es können z.B. aus empirischen ECM und tomographischen und/oder topographischen Daten Impedanzspektren erstellt werden.

Mit dem Impedanzspektrum und wenigstens einer Analyse z.B. einer DRT-Analyse (Distribution Relaxation Time Constant) ist es für ein vorteilhaftes gezieltes Beeinflussen des Gliederfüßers möglich, wenigstens einen Parameter der Charakteristik der elektromagnetischen Strahlung, z.B. wenigstens eine charakteristische Frequenz und/oder Zeitkonstante, zu ermitteln. Prinzipiell sind jedoch auch andere Parameter, wie z.B. Spannung, Strom oder zeitlicher Verlauf denkbar. So ist beispielsweise denkbar, dass aus einem empirischen ECM wie z.B. einem Infinite Voigt-Modell charakteristische Frequenzen zur Beeinflussung des Verhaltens von Gliederfüßern mit Hilfe der Analyse z.B. der DRT-Analyse bestimmt werden.

Für ein vorteilhaft verbessertes Beeinflussen wird mit Hilfe des wenigstens einen Parameter der Charakteristik (z.B. einer charakteristischen Frequenz und/oder Zeitkonstante), z.B. aus diesem Parameter, wenigstens ein neuer Parameter (z.B. Anregefrequenzen) z.B. mit einer DRT-Analyse abgeleitet, um wenigstens ein neues Impedanzspektrum zu generieren und um davon wenigstens ein neues TLM abzuleiten. Es ist z.B. möglich aus dem DRT-Spektrum und dem Relaxionsverhalten mit charakteristischen Einschwingzeiten ein ECM der sensorischen Anhänge der Gliederfüßer zu erstellen und mit Hilfe der DRT-Analyse weitere charakteristische Frequenzen und/oder Zeitkonstanten zu bestimmen, um daraus neue Anregefrequenzen abzuleiten, um hieraus wiederum neue Impedanzspektren zu generieren und um davon neue strukturierte TLM abzuleiten.

Um vorteilhaft eine Abgrenzung der physikalischen und/oder biochemischen Effekte der sensorischen Anhänge und/oder der sensorischen Effekte des Gliederfüßers zu erzielen, wird das TLM in wenigstens eines der folgenden unterteilten Transmission Line-Modelle unterteilt: TLM für die poröse Elektrode, TLM für das poröse Material, TLM für die allgemeine Diffusion und/oder in nicht-permeable Wände und ein ideales Reservoir (IR/NPW). Es ist ferner denkbar, dass alle TLM verwendet werden oder nur eines, zwei, drei oder vier. Ebenfalls denkbar ist, dass z.B. das Modell oder Submodell der Bürstenelektrode, welche die Antennen des Gliederfüßers beschreibt durch das TLM für die poröse Elektrode, die porösen Sensillenhaare des Gliederfüßers durch das TLM für das poröse Material, die Ionendiffusion durch das TLM der allgemeinen Diffusion sowie die Diffusion der nicht-permeablen Wand und/oder der Diffusion eines idealen Reservoirs durch das TLM der IR/NPW Diffusion beschrieben wird.

Differenzialgleichungen beschreiben die TLM. Um vorteilhaft das Verfahren z.B. auf verschiedene Klassen von Gliederfüßern auszudehnen, wird wenigstens eine Differenzialgleichung des TLM zur Bestimmung von Parametern für die Charakteristik der elektromagnetischen Strahlung, z.B. Strom, Spannung, Frequenz, zeitliche Abhängigkeit gelöst. Im Falle von unterteilten TLM kann z.B. jedes TLM gelöst werden. Beispielsweise kann die Lösung als Darstellung des Impedanzverhaltens, z.B. als Nyquist-Plot dargestellt werden. Prinzipiell denkbar sind aber auch andere Darstellungen der Lösung möglich, z.B. als Darstellung im Bild-, Zeit-, Frequenz-, Strom- und/oder Spannungsbereich. Auch ist es möglich, zwischen den verschiedenen Darstellungen über Transformationen wie z.B. der Fourier-Transformation, der Laplace-Transformation und/oder deren Rücktransformation zu wechseln. Beispielsweise kann von der Nyquist-Darstellung in eine Darstellung in Form einer Frequenzkurve gewechselt werden, welche direkt die Charakteristik der elektromagnetischen Strahlung, beispielsweise den zeitlichen Verlauf der elektromagnetischen Strahlung angibt. Durch die Anwendung z.B. der Fourier-Transformation, der Laplace-Transformation und/oder deren Rücktransformation kann die Analyse z.B. im Bildbereich, Zeitbereich oder Frequenzbereich durchgeführt werden.

Um eine schnellere und genauere Lösung zu erhalten, wird die Differenzialgleichung mittels wenigstens einer Randbedingung gelöst. Die Verwendung unterschiedlicher Randbedingungen ermöglicht vorteilhaft die Simulation verschiedener Systeme mit dem gleichen Modell. Die Randbedingungen ergeben sich beispielsweise durch Angabe von festen Parametern wie beispielsweise Temperatur, Druck und/oder Feuchtigkeit. Beispielsweise lässt sich eine komplizierte Temperaturabhängigkeit herausnehmen, indem die Temperatur als konstant angenommen wird. Prinzipiell sind jedoch noch weitere Parameter denkbar, welche in den entsprechenden Systemen vorkommen. Auch werden durch die Randbedingungen die Komplexität und die Parameter der mathematischen Zusammenhänge reduziert. Durch die Lösung der Differenzialgleichung mittels wenigstens einer Randbedingung ist es z.B. mit einer graphischen Analyse mit Hilfe einer DGL-basierenden Kurvendiskussion möglich, charakteristische Eigenschaften der Gliederfüßer zu erkennen und so die Ermittlung von neuen Frequenzpattern zu vereinfachen.

Eine besonders vorteilhafte Darstellung der Lösung der Differenzialgleichung ist die Impedanzspektrumdarstellung, z.B. die Nyquist-Darstellung. Das Impedanzspektrum erlaubt es, die Lösung übersichtlich darzustellen und schnell zu analysieren, da z.B. die Points-of-Interest schnell ersichtlich werden. Daher kann die Lösung der Differenzialgleichung bevorzugt in einem Impedanzspektrum dargestellt und/oder analysiert werden. So kann sehr komfortabel z.B. der Einfluss der Porengeometrie (z.B. offene/geschlossene Pore) auf das Impedanzverhalten oder das Impedanzverhalten von Bürstenelektroden als Modell der Antennen der Gliederfüßer analysiert werden. Es können jedoch auch andere Einflüsse analysiert werden, z.B. der Einfluss der Geometrie der Antenne des Gliederfüßers.

Das verwendete TLM wird mit Hilfe wenigstens eines anderen TLM und/oder einem vereinfachten ECM verifiziert und/oder angepasst, wodurch sich vorteilhaft genauere Ergebnisse erzielen lassen. Beispielsweise wird dazu ein anderes TLM mit anderen Parametern und/oder Elementen aus den oben genannten unterteilten vier Modellen verwendet oder es wird z.B. ein Infinite Voigt-Modell als Basis verwendet.

Um vorteilhaft die Mehrdeutigkeit von Impedanzmodellgleichungen zu analysieren, zu reduzieren oder gar zu beseitigen, werden Parameter des TLM zur eindeutigen Zuordnung des TLM zu dem entsprechenden sensorischen Anhang des Gliederfüßers bestimmt. Die Beseitigung von Mehrdeutigkeiten vereinfacht die Analyse von Modellparametern, die das Impedanzverhalten beeinflussen, und verbessert zusätzlich die Robustheit nichtlinearer Parameteroptimierungstechniken.

Die vorher beschriebenen Zusammenhänge und Untersuchungsergebnisse mit Hilfe der Stochastik erlauben eine direkte und indirekte Zuordnung der Modelle. Insbesondere die Einschwingzeiten von vereinfachten RC-Modellen bieten eine gute Möglichkeit, korrelierende Frequenzpattern zu generieren. Es kann so z.B. eine direkte Zuordnung des ECM zu einer sensorischen Eigenschaft des Gliederfüßers erhalten werden.

Das Frequenzspektrum zur Anregung von sensorischen Anhängen der Gliederfüßer ist sehr groß. Dadurch kann eine Multi-Frequenz-Anregung zu einer Mehrdeutigkeit der Ergebnisse führen. Unterschiedliche physikalische und/oder biochemische Vorgänge sind in unterschiedlichen Frequenzbereichen zu beobachten und zu analysieren. Ist eine eindeutige Zuordnung nicht möglich, können bestimmte Parameter durch die Verwendung von topographischen und/oder tomographischen Daten vereinfacht und/oder direkt z.B. durch Differenzialgleichungen bestimmt werden. Daher werden durch die Verwendung von topographischen und/oder tomographischen Daten des Gliederfüßers, beispielsweise aus entsprechenden Veröffentlichungen, die Parameter des TLM vereinfacht und/oder direkt bestimmt. Mit Hilfe der tomographischen und/oder topographischen Daten können z.B. Zuordnungen gemacht werden, ob es sich um poröse, permeable, semipermeable Strukturen handelt. Damit lassen sich den tomographischen und/oder topographischen Informationen wiederum spezifische TLM zuordnen. Somit kann vorteilhaft die Komplexität der Modelle reduziert werden.

Um vorteilhaft allgemein gültige Modelle für jede Art von Gliederfüßern zu definieren und Modelle zu vergleichen, werden die Parameter, z.B. Impedanz-Parameter normalisiert. Beispielsweise werden im Nyquist Plot Parameter in der Regel auf den Wert 1 normiert, sodass sich eine bessere Vergleichbarkeit mit anderen Parametern und/oder Daten ergibt. Mit der Normalisierung der Parameter ist es beispielsweise möglich, allgemein gültige ECM für unterschiedliche Gliederfüßer zu erstellen.

Vorteilhaft für eine Vereinfachung der Parameteranpassung z.B. in einer Software, werden die Parameter mit einer Grenzwertbetrachtung angepasst. Beispielsweise wird eine Vereinfachung mit einer Grenzwertbetrachtung gegen null bzw. gegen unendlich erreicht, da die Anpassungen nur relativ zu einem vorher ermittelten Wert sind.

Zur Vermeidung von Differenzialgleichungen z.B. in Mikrokontroller-basierenden Systemen und zur Reduzierung des benötigten Speicherplatzes, kommt ein Substitutionsverfahren in Kombination mit wenigstens einer Datenbank zum Einsatz, um z.B. beliebige nichtlineare Funktionen sehr effizient zu modellieren, um z.B. nichtlineare Funktionsverläufe in Look-up-Tabellen im Mikrokontroller zu speichern. Bei diesem Substitutionsverfahren werden nichtlineare Funktionen z.B. abschnittsweise durch e-Funktionen, Gauss'sche-Funktionen oder lineare Funktionen ersetzt. Damit lassen sich beliebige nichtlineare Funktionen für den Mikrokontroller speicherplatzsparend ablegen und komplexe Differenzialgleichungen vermeiden. Auch ist z.B. denkbar, dass eine diskrete Fourier-Transformation (DFT) zur speichereffizienten Nutzung der Algorithmen auf Basis eines Mikrokontrollers unter Einbindung eines Goertzel-Algorithmus für die Signalauswertung, insbesondere bei Verwendung von mehr als einer Anregefrequenz verwendet wird.

Für eine vorteilhaft speichereffiziente Nutzung des Verfahrens auf Basis eines Mikrokontrollers wird wenigstens eine Diskrete Fourier-Transformation (DFT) unter Einbindung eines Goertzel-Algorithmus verwendet. Es ist damit möglich, das Verfahren und/oder den daraus resultierenden Algorithmus speicherplatzsparend auf einem Mikrokontroller zu implementieren, sodass keine großen und leistungsstarken Recheneinheiten verwendet werden müssen.

Damit die Lösung der Differenzialgleichung vorteilhaft auf einen realen Gliederfüßer angewendet werden kann und/oder das Modell auf reale Bedingungen angepasst werden kann, wird die Lösung der Differenzialgleichung mittels eines auf wenigstens einem Referenzmodell basierenden Regelungssystems z.B. eines sich selbstanpassenden oder adaptiven Regelungssystems wie z.B. eines Deep-Learning-Prozesses überprüft und/oder angepasst. Es ist somit möglich, dass vorteilhaft weitere Referenzmodelle anderer Arten von Gliederfüßern angelernt werden können. Das Referenzmodell kann z.B. empirische Daten und/oder Daten aus einem bereits ermittelten Modell aufweisen.

Für den Fall, dass (noch) keine Daten aus Modellen bekannt sind, kann das Referenzmodell aus empirischen Daten ermittelt werden. Prinzipiell ist es auch möglich, das Referenzmodell aus empirischen Daten und/oder aus Daten des (zuvor ermittelten) Modells zu ermitteln.

Um die Charakteristik der elektromagnetischen Strahlung schnell und unkompliziert dem Sender verfügbar zu machen, wird die Charakteristik der elektromagnetischen Strahlung in einem Speicher, z.B. in einer Datenbank oder einer Cloud abgelegt. Beispielsweise ist es möglich, dass der Sender die Charakteristik der elektromagnetischen Strahlung drahtlos, z.B. per WiFi, Bluetooth, Infrarot oder anderen Datennetzen von dem Speicher empfängt. Ebenfalls kann der Sender die Charakteristik übertragen, z.B. an einen anderen Sender. Es sind jedoch auch andere Empfangs- und Übertragungsmöglichkeiten denkbar. Ferner ist es denkbar, dass je nach Position des Senders die Charakteristiken der elektromagnetischen Strahlung der für die in dieser Position befindlichen Gliederfüßer aus dem Speicher z.B. drahtlos übermittelt werden und diese dann später vom Sender ausgesendet werden.

Damit die elektromagnetische Strahlung vorteilhaft über eine größere Reichweise abgestrahlt werden kann, wird die Charakteristik, beispielsweise der zeitliche Verlauf, der elektromagnetischen Strahlung mit wenigstens einem Trägersignal moduliert. Prinzipiell sind Trägerfrequenzen z.B. im Sub-Megahertz, Megahertz und Gigahertz-Bereich denkbar. Ferner sind verschiedene Arten der Modulation wie z.B. PWM, FM, AM, PFM, TDM und FDM denkbar.

Um vorteilhaft eine höhere Reichweite der elektromagnetischen Strahlung zu erreichen, wird die Charakteristik, z.B. der zeitliche Verlauf, der elektromagnetischen Strahlung mit wenigstens einem Dithersignal moduliert.

Um vorteilhaft Strom zu sparen, eine höhere Reichweite und eine verbesserte Sendeleistung der elektromagnetischen Strahlung zu erzielen, wird das Trägersignal zusätzlich mit wenigstens einem Dithersignal moduliert. Es ist somit möglich, eine dritte Frequenz auf das Trägersignal zu modulieren. Die Dithermodulation lässt sich z.B. durch ein hin und her geschobenes Zeitfenster in der Frequenz über Zeitdarstellung beschreiben. Beispielsweise lässt sich ein moduliertes Dithersignal im TDM und im FDM Signal oder in der Kombination aus TDM, FDM und Dithersignal erzeugen.

Zur Simulation und/oder Stimulation der unterschiedlichen Arten der Gliederfüßer sind auch unterschiedliche Frequenzmuster notwendig. Vorteilhaft zur Erzeugung beliebiger unterschiedlicher Stimulationssignale wird die Charakteristik, beispielsweise der zeitliche Verlauf, der elektromagnetischen Strahlung mit einem Multi-Frequenz-Pattern-Generator erzeugt, welcher auf einem Frequenz-Division-Multiplexing-Signal (FDM) und einem Time-Division-Multiplexing-Signal (TDM) basiert. Bei einem FDM wird jeweils eine Frequenz über die gesamte Zeit ausgesendet. Demgegenüber wird bei einem TDM das gesamte Frequenzspektrum über bestimmte Zeitintervalle ausgesendet. Eine Kombination von FDM und TDM erlaubt unterschiedlichste Frequenzen in unterschiedlichsten Zeiträumen auszusenden. Es lässt sich somit eine beliebige Charakteristik der elektromagnetischen Strahlung erzeugen.

Um vorteilhaft eine zusätzliche effektive Stimulierung der Gliederfüßer zu erreichen, weist die Charakteristik der elektromagnetischen Strahlung wenigstens einen Burstimpuls auf, welcher wenigstens eine Corona-Entladung in der Luft simuliert und dessen zeitlicher Verlauf wenigstens einen positiven und/oder negativen Trichelpuls aufweist.

Für eine vorteilhaft erhöhte Effektivität der Beeinflussung der Gliederfüßer weist die Charakteristik keine harmonischen und/oder subharmonischen Beziehungen auf. Somit unterscheiden sich z.B. die Oberwellenanteile und subharmonische Anteile im Frequenzspektrum bei allen Sequenzen, welche simultan gleichzeitig ausgesendet werden. Denkbar ist auch, dass die Charakteristik gleichzeitig ausgesendeter Frequenzen im Zeitbereich und/oder im Frequenzbereich keine harmonischen und/oder subharmonischen Beziehungen aufweist.

Für eine weitere gesteigerte Effektivität der Beeinflussung ist die Charakteristik Primzahl basierend. Somit weist die Charakteristik keine ganzzahlige harmonische und/oder subharmonische Vielfache und/oder Teile auf.

Für eine besonders gesteigerte Effektivität basiert die Charakteristik auf dem Dirichletschen Primzahlsatz über arithmetische Verläufe. Der Dirichletsche Primzahlsatz ist eine Aussage aus dem mathematischen Teilgebiet der Zahlentheorie, der besagt, dass eine arithmetische Folge unendlich viele Primzahlen enthält, wenn dies nicht aus trivialen Gründen unmöglich ist.

Die Aufgabe wird zudem durch eine Vorrichtung zum Beeinflussen von Gliederfüßern mittels elektromagnetischer Strahlung gelöst. Die Vorrichtung weist dabei wenigstens einen Sender auf, welcher die elektromagnetische Strahlung abstrahlt. Die Charakteristik der elektromagnetischen Strahlung ist mit Hilfe wenigstens eines äquivalenten elektronischen Ersatzschaltbildes erstellt, wobei das Ersatzschaltbild ein Modell eines Gliederfüßers ist. Beispiele für Vorrichtungen sind Armbänder oder Geräte welche sich z.B. in Räumen oder außen z.B. an Sonnenschirmen anbringen lassen.

Bei der Vorrichtung ist ferner als Mittel zur Ermittlung der Charakteristik der elektromagnetischen Strahlung wenigstens ein äquivalentes elektronisches Ersatzschaltbild vorgesehen, wobei das Ersatzschaltbild ein Modell wenigstens eines sensorischen Anhangs und/oder wenigstens einer sensorischen Eigenschaft eines Gliederfüßers ist.

Für eine vorteilhaft schnelle Ermittlung der Signale und/oder Signalmuster zum Beeinflussen des Gliederfüßers weist die Vorrichtung ferner bevorzugt Mittel zum Aussenden wenigstens eines Pulses, Mittel zum Erfassen des Frequenzspektrums des ausgesandten Pulses, Mittel zum Ermitteln wenigstens eines Frequenzanteils des Frequenzspektrums des ausgesandten Pulses und Rechenmittel zum Umrechnen des Frequenzanteils in eine Einschwingzeit, Mittel zum Bestimmen wenigstens eines Elements aus der Gruppe umfassend den sensorischen Anhang und die sensorische Eigenschaft des Gliederfüßers, Auswahlmittel zum Auswählen des wenigstens einen elektronischen Ersatzschaltbilds, das zu dem wenigstens einen bestimmten Element aus der Gruppe umfassend den sensorischen Anhang und die sensorische Eigenschaft des Gliederfüßers äquivalent ist und das wenigstens ein unbekanntes RC-Glied aufweist mit einem Widerstand R von $0 \leq R$ und einer Kapazität C von $0 \leq C$, Mittel zum Bestimmen des wenigstens einen unbekannten RC-Glieds anhand der mit den Zeitkonstanten des RC-Glieds korrespondierenden Einschwingzeit, die aus dem Frequenzanteil des Frequenzspektrums des ausgesandten Pulses umgerechnet ist, als wenigstens ein nun bekanntes RC-Glied und Mittel zum Ermitteln wenigstens eines für die Beeinflussung des Gliederfüßers signifikanten RC-Glieds auf.

Für eine vorteilhaft eine schnelle und einfache Ermittlung umfassen bevorzugt die Mittel zum Ermitteln des wenigstens einen signifikanten RC-Glieds Normierungsmittel der Spannungsamplitude in Abhängigkeit der wenigstens einen Einschwingzeit, die mit dem bekannten RC-Glied bestimmt ist.

Vorteilhaft für eine schnelle und einfache Ermittlung der Charakteristik der elektromagnetischen Strahlung ist bevorzugt das Mittel zum Aussenden des Pulses dazu eingerichtet, wenigstens einen positiven und/oder negativen Trichelpuls auszusenden.

Für eine vorteilhafte Plausibilitätsprüfung oder alternative Ermittlung hinsichtlich des ermittelten signifikanten RC-Glieds weist die Vorrichtung bevorzugt Mittel zum Bestimmen wenigstens eines Elements aus der Gruppe umfassend den sensorischen Anhang und die sensorische Eigenschaft des Gliederfüßers, Mittel zum Erkennen und Mittel zum graphischen Darstellen eines Frequenzverhaltens des wenigstens einen Elements aus der Gruppe umfassend den sensorischen Anhang und die sensorische Eigenschaft des Gliederfüßers bei Aussenden wenigstens eines Pulses, Mittel zum Erkennen und Mittel zum graphischen Darstellen eines Frequenzverhaltens von Ersatzschaltbildern bei Aussenden wenigstens eines Pulses, Mittel zum Vergleichen der graphisch dargestellten Frequenzverhalten der Ersatzschaltbilder mit den graphisch dargestellten Frequenzverhalten des wenigstens einen Elements aus der Gruppe umfassend den sensorischen Anhang und die sensorische Eigenschaft des Gliederfüßers und zum Bestimmen einer Ähnlichkeit graphischer Muster sowie Auswahlmittel zum Auswählen des wenigstens einen elektronischen Ersatzschaltbilds, das zu dem wenigstens einen Element aus der Gruppe umfassend den sensorischen Anhang und die sensorische Eigenschaft des Gliederfüßers äquivalent ist, anhand der bestimmten Ähnlichkeit auf.

Für eine vorteilhaft besonders übersichtliche Darstellung und damit auch Verarbeitung bei der Mustererkennung sind bevorzugt die Mittel zum graphischen Darstellen dazu eingerichtet, die graphische Darstellung in einem Nyquist-Diagramm vorzunehmen.

Da für TLM vorteilhaft allgemein gültige Lösungen existieren und ebenfalls mit TLM z.B. beliebige physikalische und/oder biochemische Effekte beschrieben werden können, ist das Ersatzschaltbild mit Hilfe wenigstens eines TLM generiert.

Um vorteilhaft beliebige und/oder beliebig lange Frequenzen auszusenden, um somit verschiedene Klassen von Gliederfüßern anzusprechen, ist ein kombinierter Multi-Frequenz-Pattern-Generator vorgesehen, welcher auf einem Frequenz-Division-Multiplexing-Signal (FDM) und einem Time-Division-Multiplexing-Signal (TDM) basiert, der die Charakteristik, beispielsweise den zeitlichen Verlauf, der elektromagnetischen Strahlung erzeugt.

Für einen variablen Einsatzzweck hinsichtlich verschiedener Gliederfüßer z.B. je nach Aufenthaltsort sind Mittel vorgesehen, mit denen die Charakteristik, beispielsweise der zeitliche Verlauf, der elektromagnetischen Strahlung aus einem Speicher, z.B. aus einer Datenbank oder aus einer Cloud, auf die Vorrichtung übertragbar ist. Beispielsweise ist eine drahtlose Übertragung, z.B. per WiFi, Bluetooth, Infrarot oder anderen Datennetzen denkbar. Es sind jedoch auch andere Übertragungsmöglichkeiten denkbar.

Falls eine Übertragung aus dem Speicher nicht möglich ist, da z.B. keine entsprechenden Mittel zum Übertragen oder kein Datennetz vorhanden ist, sind Mittel wie z.B. ein Mikrokontroller vorgesehen, mit denen die Charakteristik der elektromagnetischen Strahlung in der Vorrichtung erstellt, z.B. berechnet werden kann. Prinzipiell sind auch andere Mittel denkbar, mit denen die Charakteristik der elektromagnetischen Strahlung erstellt werden kann.

Für eine stärkere und effizientere Beeinflussung der Gliederfüßer, weist die Charakteristik wenigstens eine Trichelpulssequenz zur Simulation von einer Corona-Entladung in der Atmosphäre auf.

Für eine vorteilhaft zusätzliche effektive Beeinflussung der Gliederfüßer weist die Charakteristik wenigstens einen Burstimpuls auf, welcher wenigstens eine Corona-Entladung in der Luft simuliert und dessen zeitlicher Verlauf wenigstens einen positiven und/oder negativen Trichelpuls aufweist.

Weitere Vorteile ergeben sich aus den Unteransprüchen und der nachfolgenden Beschreibung bevorzugter Ausführungsbeispiele. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Kurzbeschreibung der Abbildungen

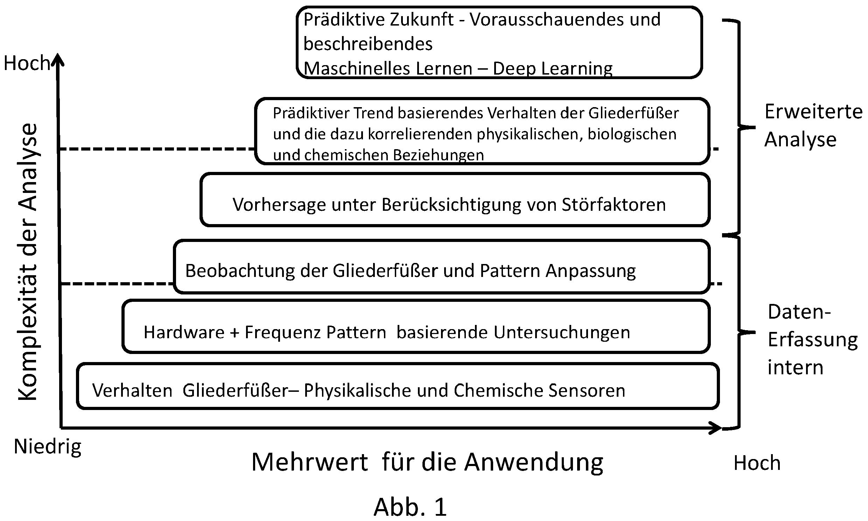

Abb. 1 eine vorausschauende Analyse bzw. Analytik, um im Vorfeld von Ereignissen Algorithmen anzupassen,

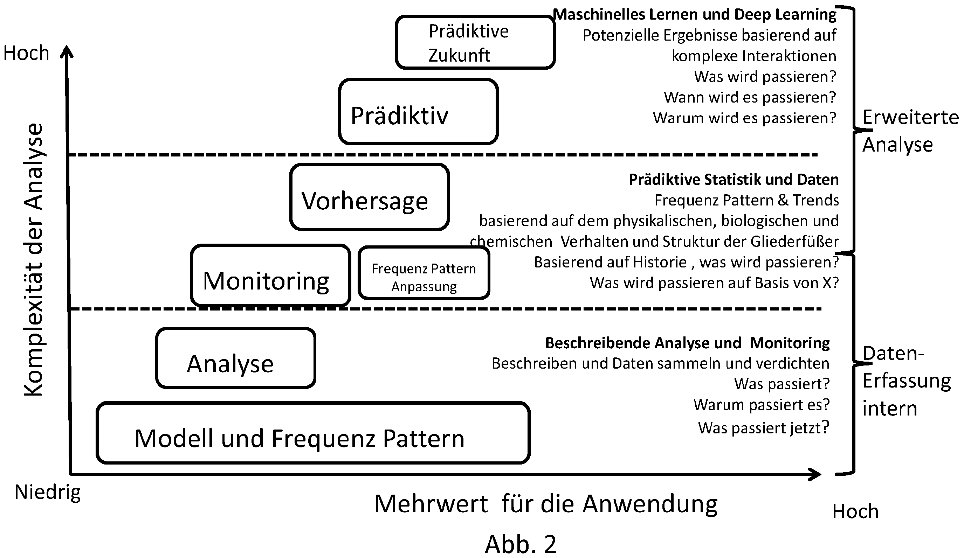

Abb. 2 die drei Schritte von der deskriptiven Analyse über prädiktive Daten bis hin zu Deep Learning,

Abb. 3 Beispiel eines Gliederfüßers,

Abb. 4 Beispiele sensorischer Anhänge: Schematische Darstellung eines weiblichen Kopfes mit hervorgehobenen (dunkel) Antennen (FA) und Palpen (FP) [1], männlicher Kopf (MH), kompletter Körper des weibliches Gliederfüßers (FB),

Abb. 5 paarweise Probenvergleiche: Proportionales Venn-Diagramm,

Abb. 6 Antenne eines Weibchens der Ae. Aegypti [4],

Abb. 7 Palpe eines Weibchens der Ae. Aegypti; AaOr7-spezifische Markierung auf der weiblichen Oberkiefer-Palpe (Capitate-Peg-Sensilla, A, B) und der Labial-Palpen-T2-Sensilla (C, D),

Abb. 8 differenzierte Analyse der Exprimierung (DE) chemosensorischer Gene,

Abb. 9 geruchsbindende Proteine (OBPs) in Transkriptomen von Ae. Albopictus,

Abb. 10 Geruchsrezeptoren (OR) im Ae. albopictus Transkriptom,

Abb. 11 ionotrope Rezeptoren (IR) im Ae. albopictus Transkriptom,

Abb. 12 den IR-Co-Rezeptor CREL,

Abb. 13 Schema eines dritten Antennensegments der Drosophila, das die Verteilung verschiedener olfaktorischer Sensillen und anderer sensorischer Strukturen zeigt, (D) zeigt ein Ausschnitt aus (C),

Abb. 14 Geschmacksrezeptoren (GR) im Ae. albopictus Transkriptom,

Abb. 15 Häufigkeitsprofile sensorischer Gene bei Ae. Albopictus,

Abb. 16 qPCR-Validierung,

Abb. 17 eine vereinfachte Funktion des Systems,

Abb. 18 ein vereinfachtes Funktionsprinzip des Verfahrens bei unterschiedlichen Gliederfüßern und unterschiedlicher Stimulation der sensorischen Anhänge,

Abb. 19 ein vereinfachtes Funktionsprinzip zur Stimulation verschiedener Gliederfüßer, Abb. 20 ein Frequenz-Division-Multiplexing-Signal (FDM),

Abb. 21 ein Time-Division-Multiplexing-Signal (TDM),

Abb. 22 eine vereinfachte Darstellung des Frequenzspektrums des zusammengesetzten Basisband-Modulationssignals bei verschiedenen Gliederfüßern,

Abb. 23 eine vereinfachte Darstellung der frequenz- und zeitvariablen Rahmen und Struktur des kombinierten Multi-Frequenz-Pattern-Generators,

Abb. 24 ein eingeprägtes Dithersignal auf einem PWM-Impuls definierter Signalamplitude,

Abb. 25 ein phasenmoduliertes Dithersignal auf einem PWM-Impuls mit definierter Frequenz (links), PWM Signal ohne Dithermodulation (rechts),

Abb. 26 eine Erweiterung des Signals mit PWM-moduliertem Dithersignal [12],

Abb. 27 ein allgemeines Transmission-Line-Modell (TLM),

Abb. 27a ein TLM einer porösen Elektrode,

Abb. 27b ein TLM von porösem Material,

Abb. 27c ein TLM von Ionen-Diffusion,

Abb. 27d ein TLM für eine nicht permeable Wand und die Diffusion in einem idealen Reservoir,

Abb. 28 Beschreibung der Vorgänge in einem porösen Elektrodenmodell [13],

Abb. 29 DRT Spektrum mit unterschiedlichen Relaxionszeiten (Einschwingzeiten) des ECM eines Gliederfüßers,

Abb. 30a - d graphische Darstellungen der Lösung der Differenzialgleichung des TLM aus Abb. 27a, Impedanz des Porositätsmodells gemäß Gleichung 4 mit c2 = 1,

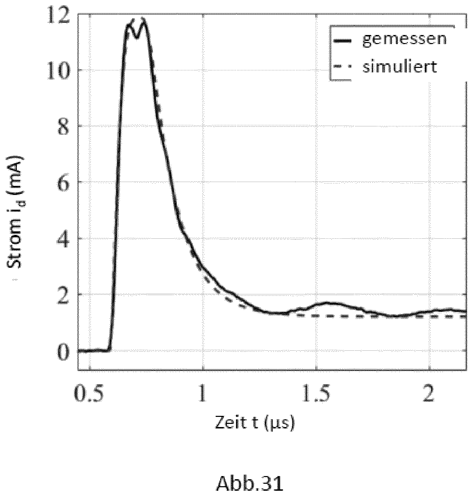

Abb. 31 - 33 zeitlicher Verlauf eines positiven Trichelpuls, eines negativen Trichelpuls und einer Trichelpuls-Sequenz (jeweils als gemessene und simulierte Stromstöße,

Abb. 34a - d graphische Darstellungen der Lösung der Differenzialgleichung des TLM aus Abb. 27d, Impedanz des Diffusion Modells gemäß Gleichungen 12 und 13,

Abb. 35 simulierte Impedanzspektren für 2D (links) und 3D (rechts) für 5 einfache geschlossene Porenstrukturen [14], [16],

Abb. 36 simuliertes Impedanzspektrum von 7 einfachen offenen Porengeometrien, wobei alle gleiche Porenvolumen und Tortuositätsfaktor haben und einer einheitlichen Richtung des Stimulisignals [14],

Abb. 37 simuliertes Impedanzspektrum von 2D Fraktalen,

Abb. 38 Simuliertes Impedanzspektrum von zwei 2D Fraktalen (Hier wird ein Pythagoras-Baum gezeigt für geschlossene Strukturen.),

Abb. 39 Impedanzverhalten einer Serie mit unterschiedlichen Strukturen der Poren (I ist die Länge der Poren und lambda ist der Formfaktor [15]),

Abb. 40 Dämpfungsverhalten eines sinusförmigen Signals hinein in eine Pore wegen des de Levie Signalpenetrierungseffekts [15],

Abb. 41 Typisches Impedanzverhalten einer de Levie Bürsten-Elektrode im komplexen Bereich als Funktion der Frequenz für Elektrolyt-Konzentrationen,

Abb. 42 Charakteristik des Impedanzverhaltens im komplexen Bereich für eine poröse Elektrode mit Serien-Widerstand RS (von 0 -> ∞) und kumulativ verteiltem Widerstand, Ω,

Abb. 43 äquivalentes Ersatzschaltbild der Infinite Voigt Schaltung,

Abb. 44 theoretische DTR eines R/Q- Schaltkreises gemäß Gleichung (20),

Abb. 45 simuliertes Impedanzspektrum eines synthetischen Pakets von Partikeln mit Porosität,

Abb. 46 simulierter Phasenwinkel als Funktion der logarithmischen Frequenz für 3 einfache Mikrostrukturen,

Abb. 47 ein Schema eines Regelungssystems (Grundfunktion des Deep Learning Prozesses zum Anlernen für unterschiedliche Referenzmodelle der Gliederfüßer),

Abb. 48a - d Prozessablauf Schritt 1 -4 für die Gliederfüßer-Referenzmodellierung,

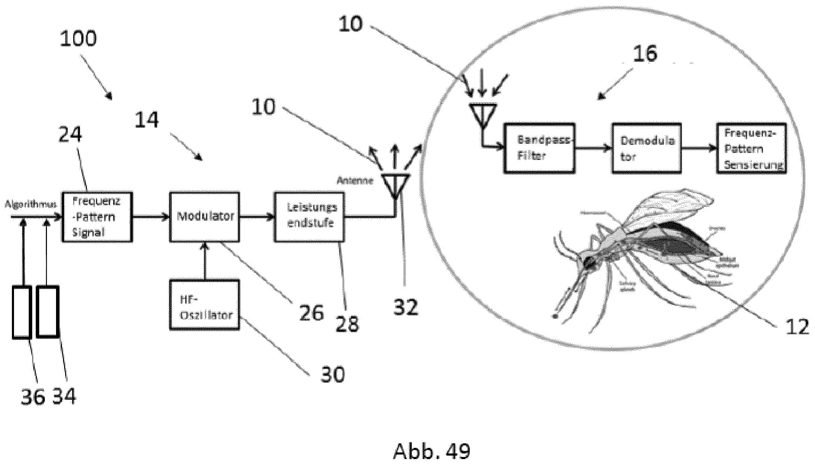

Abb. 49 ein vereinfachtes Funktionsprinzip des erfindungsgemäßen Verfahrens,

Abb. 50 ein vereinfachter Modellierungsprozess,

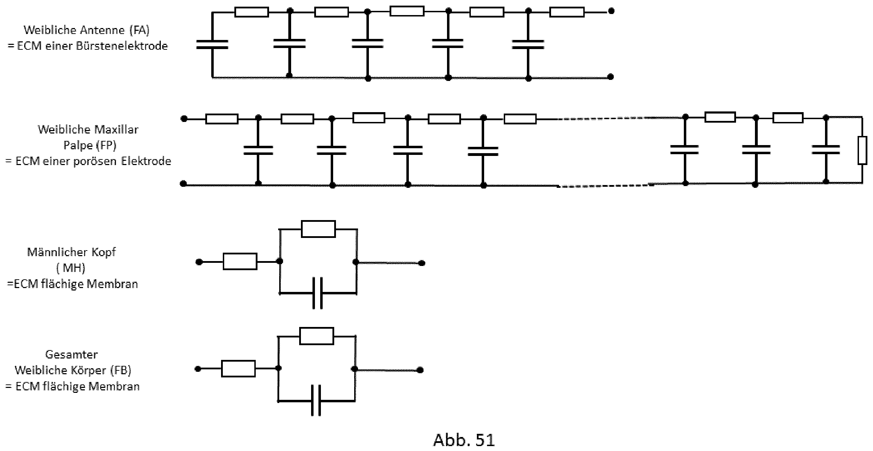

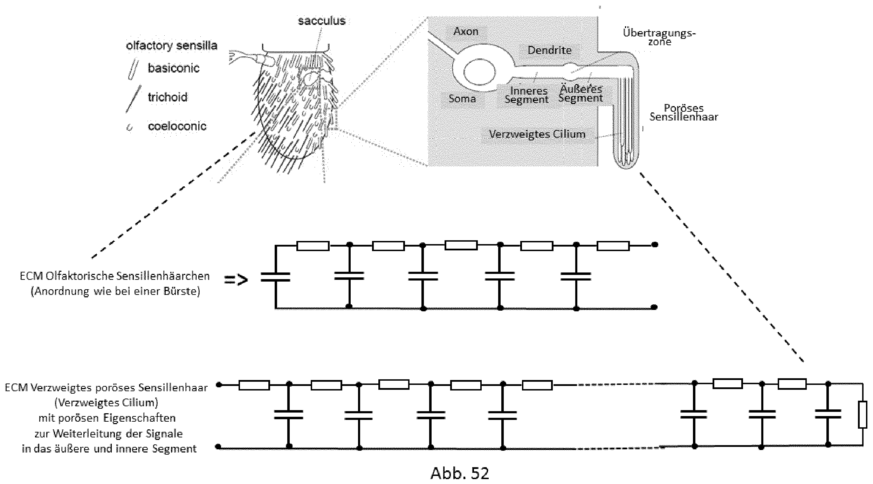

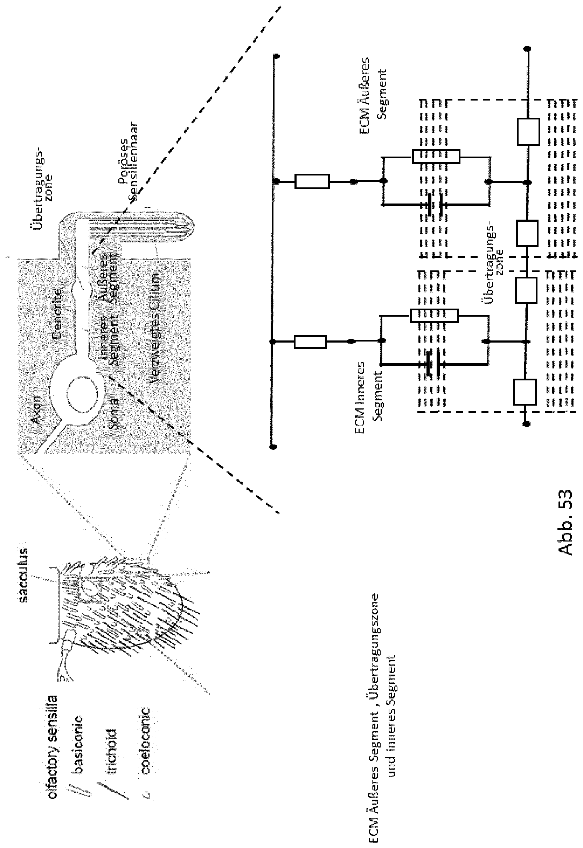

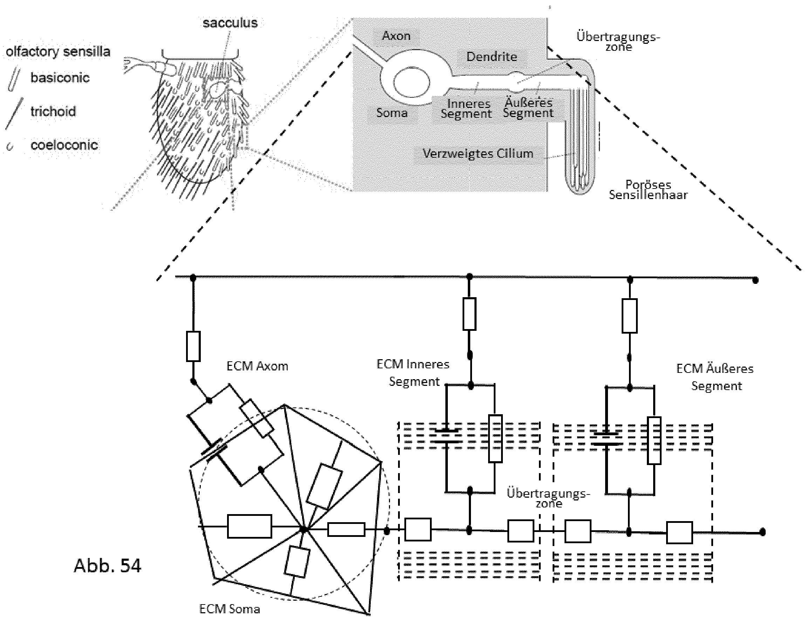

Abb. 51 - 54 Ersatzschaltbilder verschiedener sensorischer Anhänge,

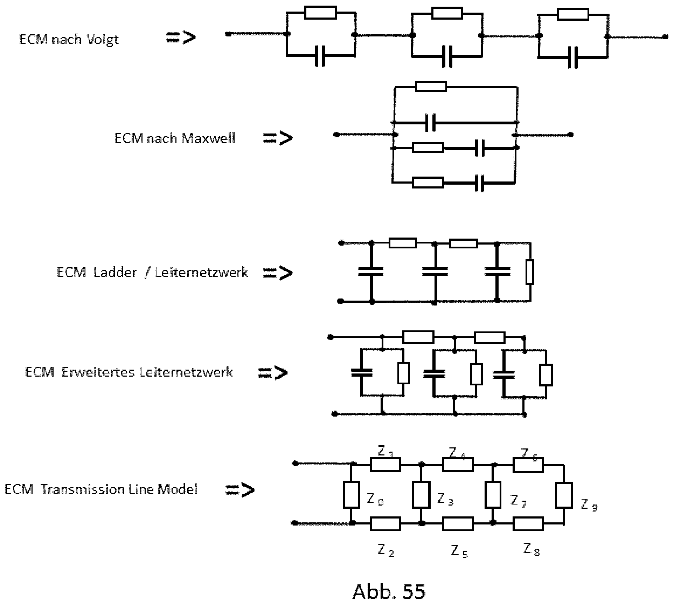

Abb. 55 Verschiedene Modelle für transformierte Ersatzschaltbilder,

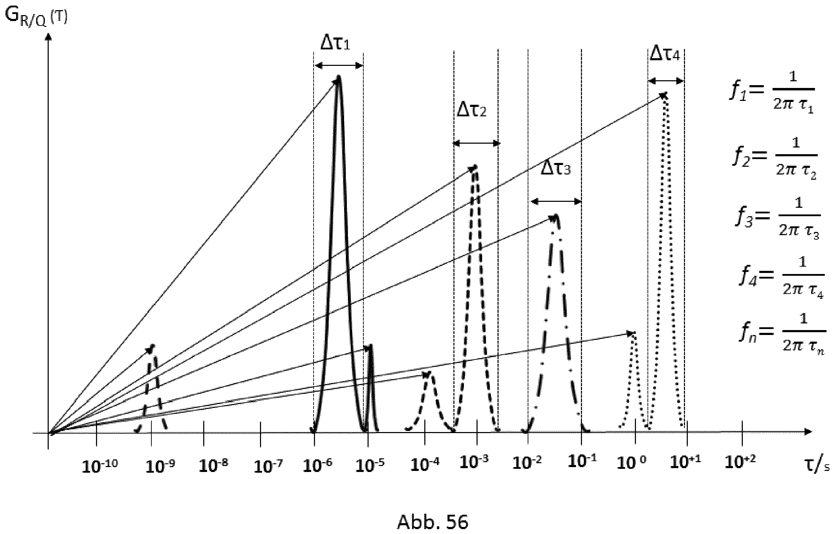

Abb. 56 Beschreibung charakteristischer Eigenschaften des DRT-Impedanzspektrums durch Vektoren und Skalare,

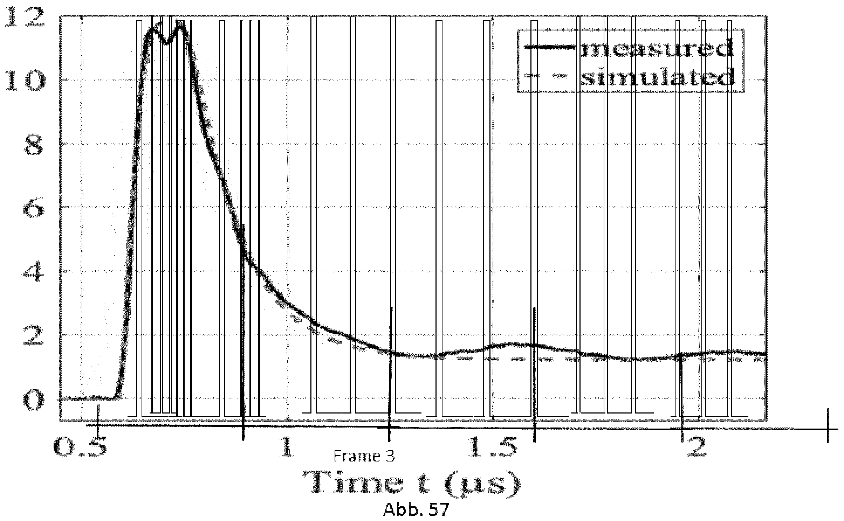

Abb. 57 Äquivalentes Modell eines positiven Trichelpulses,

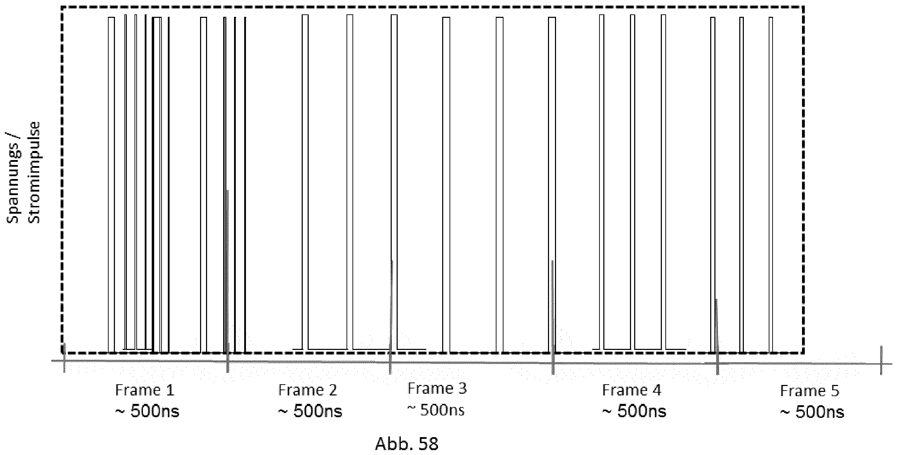

Abb. 58 eine Folge von Nadelimpulsen generiert einen Trichelpuls gemäß Abb. 57,

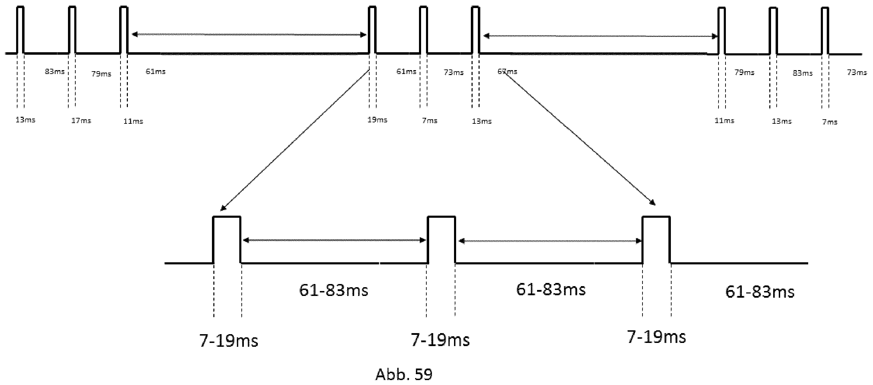

Abb. 59 Puls-Pattern-Signal mit variablen Zeitfenstern,

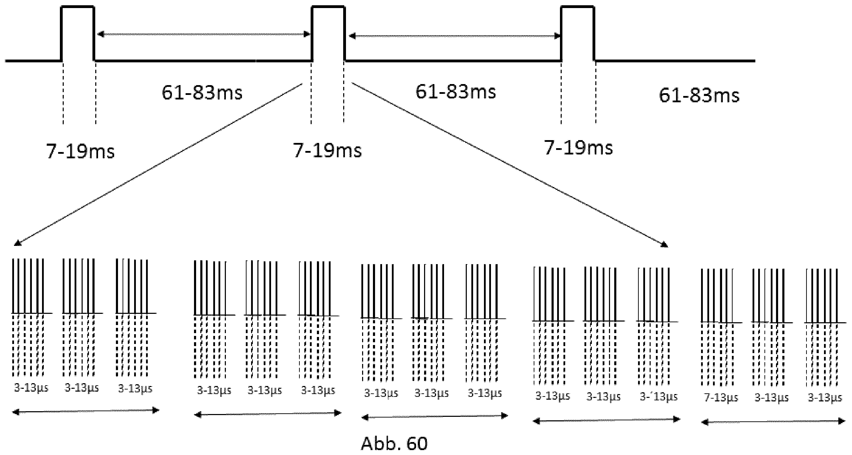

Abb. 60 Puls-Pattern-Signal mit variablen Sub-Zeitfenstern,

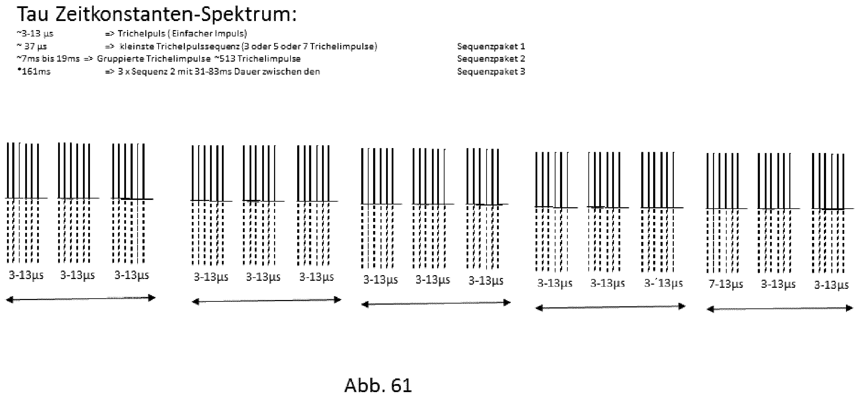

Abb. 61 Tau Zeitkonstanten-Spektrum

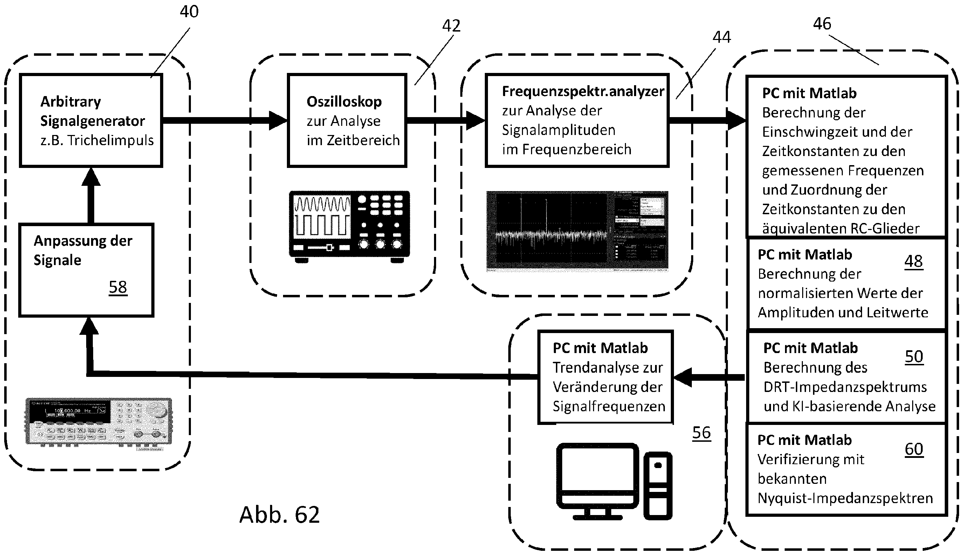

Abb.62 eine schematische Darstellung einer erfindungsgemäßen Vorrichtung Messgeräten und PC mit Matlab

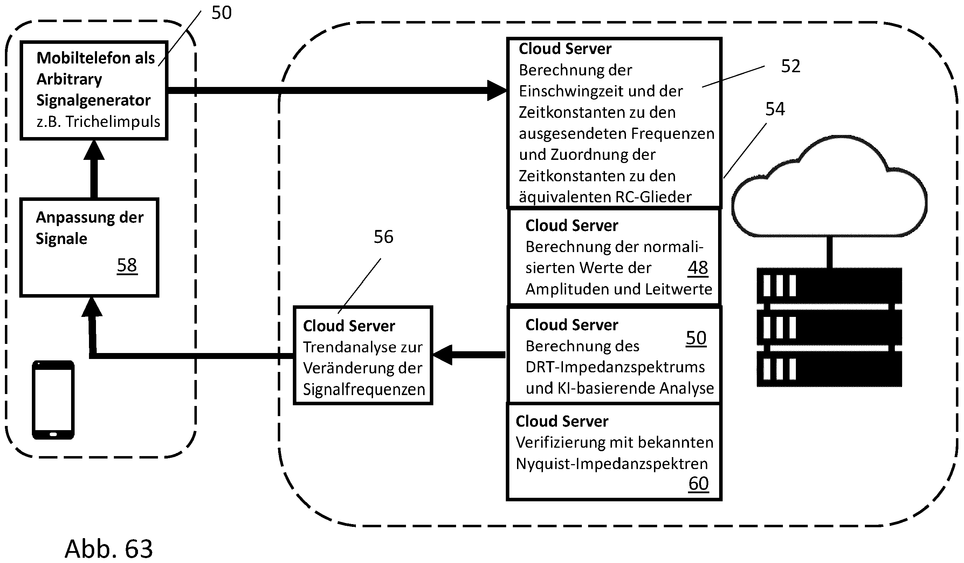

Abb.63 eine schematische Darstellung der Integration einer erfindungsgemäßen Vorrichtung in ein Mobiltelefon.

Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Aus der Biologie ist bekannt, dass sich Sensoreigenschaften von z.B. Gliederfüßern (z.B. Insekten, Spinnen, Raupen) bestimmen lassen. Auch ist eine Lokalisierung von entsprechenden sensorischen Anhängen möglich. Dies wird im Folgenden erläutert:
Die Geruchsreaktionen eines Gliederfüßers werden z.B. durch die Aktivierung von olfaktorischen sensorischen Neuronen (OSNs) ausgelöst, die hauptsächlich z.B. an Antennen, Oberkieferpalpen, Mundwerkzeugen (bestehend aus Rüssel und Labellum) und Tarsen lokalisiert sind. Diese sensorischen Anhänge können sehr unterschiedliche extrinsische Reize wahrnehmen, wie z.B. flüchtige und nichtflüchtige Gerüche oder Pheromone, Temperatur, Luftfeuchtigkeit, unschädliche oder schädliche Berührung sowie Schwerkraft, um eine komplexe Zusammenstellung von unterschiedlichen Wegen der Wahrnehmung von Gliederfüßern zu aktivieren. Die Wahrnehmung chemischer Reize, d.h. die Chemosensorik, beruht auf chemosensorischen Neuronen, die selektiv durch verschiedene flüchtige Verbindungen, wie z.B. Duftstoffmoleküle und Pheromone, aktiviert werden. Die molekularen Komponenten, die der peripheren olfaktorischen Signalübertragung zugrunde liegen, umfassen eine Reihe von intrazellulären und extrazellulären Zusammenhängen. Die Komplexität der olfaktorischen Faktoren zusammen mit unterschiedlichen Auswirkungen und/oder Vielfältigkeit trägt direkt zur Anregung des spezifischen Verhaltens der Gliederfüßerarten bei. Aus rezeptorzentrierter Sicht beruht die Chemosensorik bei Gliederfüßern weitgehend auf verschiedenen Vertretern dreier Genfamilien, die hauptsächlich in OSNs exprimiert werden, welche sich wiederum in speziellen Sensillen auf olfaktorischen Anhängen befinden: z.B. Geruchsrezeptoren (ORs), Geschmacksrezeptoren (GRs) und ionotrope Rezeptoren (IRs). Geruchsstoffe und chemische Verbindungen durchqueren die Kutikula durch Sensillarporen und erreichen so die wässrige Sensillarlymphe.

Damit werden sie erkannt und zu ihren entsprechend spezifischen Rezeptoren auf OSNdendritischen Membranen transportiert. Dies geschieht durch eine vielfältige Anzahl von extrazellulären Riechstoffbindungsproteinen (OBPs) und Pheromonbindungsproteinen (PBPs), die von einem Netzwerk von Nebenzellen abgesondert werden und sich an der Basis der Gliederfüßersensilla befinden. Es gibt verschiedene Arten von chemosensorischen Sensillen, die die OSNs und andere sensorische Neuronen sowie die dazugehörigen Nebenzellen beherbergen, die wiederum auf die sensorischen Anhänge des Gliederfüßers verteilt sind.

Abb. 4 zeigt Beispiele sensorischer Anhänge 16 eines Gliederfüßers 12: die weibliche Antenne, die weiblichen Palpen, der weibliche Körper und der männliche Kopf (aus [1]). Prinzipiell gibt es je nach Gliederfüßer noch andere und/oder weitere sensorische Anhänge 16.

Beispielsweise ist Aedes aegypti ein stark anthropophiler Gliederfüßer, der für die Übertragung von Denguefieber und Gelbfieber auf der ganzen Welt verantwortlich ist. Wie bei anderen Gliederfüßern wird das Beiß- und Wirtspräferenzverhalten dieses Krankheitsüberträgers weitgehend durch den Geruchssinn beeinflusst, der vermutlich durch G-Protein-gekoppelte Rezeptor-Signalkaskaden verbessert wird. Hier spricht man von der Identifizierung und Charakterisierung von AaOr7, dem ersten bzw. wichtigsten Geruchsrezeptor bei Ae. aegypti. Dieser Rezeptor zeigt eine extrem hohe primäre Aminosäurekonservierung mit AgOr7, einem weiteren Geruchsrezeptor, der in Anopheles gambiae (Malariaüberträger der Afrotropis) identifiziert wurde, sowie mehrere zuvor identifizierte Geruchsrezeptoren in Drosophila melanogaster und anderen Gliederfü-ßern. Dies zeigt sich bei ausgewachsenen chemosensorischen Geweben und in mehreren Lebens- und Entwicklungsphasen der Ae. aegypti. Innerhalb des ausgewachsenen Geruchssystems ist das AaOr7-Protein speziell in den meisten Antennen- und Oberkieferpalpen-Sensillen sowie in einem Subset von Rüssel-Sensillen enthalten. Dies stimmt mit der Rolle von AaOr7 als Geruchs- und Geschmackssensor überein, was die Hypothese unterstützt, dass AaOr7 und seine Orthologie für chemosensorische Prozesse während des gesamten Lebenszyklus eines Gliederfüßers von allgemeiner Bedeutung sein können.

In Abb. 6A bis 6E ist eine Antenne eines Weibchens einer Ae. Aegypti dargestellt (siehe [4]), wobei Abb. 6B und 6D eine Kombination aus lichtmikroskopischem Bild, AaOr7, neuronaler und nuklearer spezifischer Markierung und Abb. 6C und 6E ein entsprechendes Einzelbild der AaOr7-spezifischen Markierung darstellen. In Abb. 6A ist das erste Flagellarsegment der weiblichen Antennen gezeigt, wobei sich die AaOr7-spezifische Markierung auf das distale Drittel (rechts, durch Pfeil gekennzeichnet) beschränkt, in dem eine Reihe von markierten neuronalen Zellkörpern und projizierenden Dendriten zu sehen ist. Die AaOr7-spezifische Markierung wurde entlang der gesamten Antenne beobachtet (Abb. 6B, 6C). In Abb. 6D und 6E ist ein Beispiel für ein distales Segment dargestellt. Die AaOr7-Markierung ist in Dendriten sichtbar, die trichodische (leere Pfeile in Abb. 6D, 6E) anregen, aber nicht in Rillenzapfen-Sensillen (gefüllte Pfeile in Abb. 6D, 6E).

Abb. 7A - 7D zeigt ähnlich wie in Abb. 6A - 6E eine weibliche Oberkiefer-Palpe eines Weibchens einer Ae. Aegypti (siehe [4]). Abb. 7A und 7B zeigen die AaOr7-spezifische Markierung auf der weiblichen Oberkiefer-Palpe (Capitate-Peg-Sensilla) und Abb. 6C und 7D auf der Labial-Palpen-T2-Sensilla. Abb. 7A zeigt ein zusammengesetztes Bild mit einer AaOr7, neuronalen und nuklearen Markierung. Abb. 7B zeigt eine vergrößerte Ansicht des Rahmens in Abb. 7A. Abb. 7C zeigt ein zusammengesetztes Bild eines optischen Abschnittes (2μm) der Spitze einer weiblichen Labialpalpe, wo die Markierung, die an dendritische Strukturen in diesen Sensilla erinnert, sehr schwach ist, aber reproduzierbar zu beobachten ist. Abb. 7D zeigt eine vergrößerte Ansicht des Rahmens in Abb. 7C.

Aus den Abb. 6A - 6E und 7A - 7D ergibt sich also eine deutliche Lokalisierung eines Geruchssensors bzw. -rezeptors zu den Antennen bzw. Palpen einer weiblichen Ae. Aegypti. Prinzipiell lassen sich solche Untersuchungen auch bei anderen Gliederfüßern durchführen, sodass aus diesen Untersuchungen ebenfalls eine Zuordnung erfolgen kann.

Mit Hilfe z.B. eines Scoring-Modells lassen sich z.B. geruchsbindende Proteine (OBPs), Geruchsrezeptoren (OR), ionotrope Rezeptoren (IR) analysieren, gruppieren und die Datenmodelle vereinfachen. Mit hohen TPM-Werten ist die Zuordnung der für die Chemosensorik verantwortlichen Proteine und Rezeptoren analysierbar. Abb. 15 zeigt Häufigkeitsprofile sensorischer Gene bei Ae. Albopictus, wobei der Verlauf von dunkel nach hell hohe bis niedrige TPM-Werte anzeigt. Genname und Contig-ID (VectorBase-Codes, falls verfügbar) sind ebenfalls zu erkennen. Mit Hilfe des Scoring-Modells lässt sich somit eine genaue Lokalisierung und Zuordnung der einzelnen sensorischen Anhänge zu den entsprechenden physikalischen und/oder biochemischen Eigenschaften durchführen. Wie aus Abb. 15 ersichtlich, sind beispielsweise die weiblichen Antennen für die Geräuscherkennung verantwortlich im Gegensatz zu den männlichen Antennen, die hier nahezu keine Sensibilität aufweist(vierter "Block" in Abb. 15).

Die sensorischen Fähigkeiten der Gliederfüßer 12 kann man z.B. auch mit diskreten einzelnen Sensoren beschreiben. Physikalisch betrachtet, ist eine Vielzahl von Sensoren mit fusionierten Sensoreigenschaften notwendig, um die komplexen Sensorstrukturen von Gliederfüßern 12 nachzubilden. Die oben genannten biologischen Voruntersuchungen haben gezeigt, dass es eine klare Zuordnung von definierten Sensor- und/oder Rezeptoreigenschaften zu den sensorischen Anhängen 16 der Gliederfüßer 12 gibt. Ebenfalls gibt es mittels der Häufigkeitsprofile sensorischer Gene eine klare Verteilung zwischen weiblich und männlich. Zu den physikalischen Sensoren zählen z.B. Ionisierungssensor der Luft oder Umgebung, Geschmacksensoren, Chemosensoren, Gassensor/Atemsensor, Luftqualitätssensor, $CO_2$-Sensor, Luftdrucksensor, Temperatursensor, Feuchtesensor, Time-of-Flight-Sensor, Infrarotsensor, UV-Sensor, Beschleunigungssensor, Schallsensor, Positions- und Abstandsmessung sowie weitere Sensoren.

Abb. 49 zeigt das grundlegende Funktionsprinzip zum Beeinflussen von Gliederfüßern 12 mittels elektromagnetischer Strahlung 10. Hierbei wird die elektromagnetische Strahlung 10 von einem Sender 14 abgestrahlt. Der Gliederfüßer 12 empfängt die elektromagnetische Strahlung 10, die auf die unterschiedlichen sensorischen Anhänge 16 abgestimmt ist wie z.B. Antennen, Palpen, Kopf und Körper und andere sensorische Anhänge 16 und/oder sensorische Eigenschaften. Die elektromagnetische Strahlung 10 stört bzw. beeinflusst die sensorischen Funktionen der sensorischen Anhänge 16 und damit auch das Verhalten des Gliederfüßers 12. Z.B. werden aus der Biologie zunächst die sensorischen Anhänge 16 des Gliederfüßers 12 lokalisiert, welche unterschiedliche physikalische und/oder biochemische Eigenschaften aufweisen.

Aufgrund der multiplen sensorischen Eigenschaften und deren physikalischen und/oder biochemischen Funktionen sind unterschiedliche Signale und/oder Signalmuster z.B. Frequenzpattern notwendig, um möglichst alle sensorischen Eigenschaften der Gliederfüßer 12 zu stimulieren. Diese Frequenzmuster können z.B. entweder zeitgleich, simultan oder sequenziell nacheinander gesendet werden. Hierbei sind z.B. die Topologie und der physikalische Aufbau des Gliederfüßers 12 entscheidend, welche sensorischen Anhänge 16 und/oder sensorischen Eigenschaften stimuliert werden sollen. Zur Stimulation der unterschiedlichen Arten der Gliederfüßer sind auch unterschiedliche Frequenzmuster/-pattern in Form von unterschiedlichen Charakteristiken 18 der elektromagnetischen Strahlung 10 notwendig, beispielsweise von unterschiedlichen zeitlichen Verläufen der elektromagnetischen Strahlung. Die Charakteristik der elektromagnetischen Strahlung kann dabei von verschiedenen Faktoren abhängen, beispielsweise sind eine zeitliche, eine räumliche oder eine Frequenz-Abhängigkeit denkbar. Prinzipiell sind jedoch weitere Faktoren denkbar, mit denen elektromagnetische Strahlung beschrieben und/oder charakterisiert werden kann.

In Abb. 18 ist das vereinfachte Prinzip bei unterschiedlichen Arten von Gliederfüßern 12 und unterschiedlicher Stimulation der sensorischen Anhänge 16 gezeigt. Hierbei werden z.B. eine beliebige Anzahl n von Charakteristiken 18, beispielsweise ein zeitlicher Verlauf der elektromagnetischen Strahlung 10 mit einer beliebigen Anzahl von Modulationsfrequenzen erzeugt (Abb. 19). Daraus ergeben sich beliebige Möglichkeiten, unterschiedliche Stimulationssignale für die Charakteristik 18 der elektromagnetischen Strahlung 10 zu erzeugen. Prinzipiell denkbar ist auch, dass die Charakteristiken 18 der elektromagnetischen Strahlung 10 nicht moduliert werden. In Abb. 18 wird die entsprechende Charakteristik 18 der elektromagnetischen Strahlung 10 je nach Gliederfüßer bzw. sensorischem Anhang 16 und/oder sensorischer Eigenschaft empfangen und beeinflusst das Verhalten des Gliederfüßers 12.

Mit den vorher aus der Biologie gewonnenen physikalischen und/oder biochemischen Ergebnissen erfolgt die Zerlegung der sensorischen Anhänge 16 z.B. in deren physikalische, biochemische, topographische und tomographische Eigenschaften und nachfolgend die Transformation von physikalischen und/oder biochemischen Vorgängen hin zu äquivalenten Ersatzschaltbildern (ECM). Man ordnet hier jeweils ein ECM z.B. den topologischen, tomographischen, physikalischen und/oder biochemischen Vorgängen innerhalb der Gliederfüßer 12 zu (siehe z.B. Abb.27 und Abb. 27a bis d). Hierzu zählen z.B. poröse Elektroden, poröses Material, Materialparameter von porösen Material, Beschreibung von Elektrodenverhalten, Bürstenelektroden, Diffusion von Stoffen und Vorgängen, Ionisation in Stoffen und Vorgängen oder weitere elektrochemische Prozesse. Abb. 45 zeigt das Impedanzspektrum als auch das DRT-Spektrum bei unterschiedlichen tomographischen und topographischen Eigenschaften, insbesondere die charakteristischen Eigenschaften des Impedanzspektrums bei offenen und geschlossenen Strukturen. Das Ersatzschaltbild kann somit als ein Modell eines Gliederfüßers angesehen werden.

Das Modell wiederum beschreibt wenigstens einen sensorischen Anhang 16 und/oder wenigstens eine sensorische Eigenschaft des Gliederfüßers 12. Mit Hilfe des Modells und/oder des Ersatzschaltbildes lässt sich im Anschluss eine Charakteristik 18 einer elektromagnetischen Strahlung 10 bestimmen, mit welcher sich die Gliederfüßer 12 beeinflussen lassen. Prinzipiell ist es denkbar, dass das Modell auch den kompletten Gliederfüßer 12 bzw. alle sensorischen Anhänge 16 und/oder sensorischen Eigenschaften des Gliederfüßers 12 beschreibt. Auch ist denkbar, dass das Modell zwei oder mehrere z.B. unterschiedliche Gliederfüßer 12 und/oder Gliederfü-ßerarten bzw. deren sensorische Anhänge und/oder sensorischen Eigenschaften beschreibt.

Zur Vereinfachung wird in einem bevorzugten Ausführungsbeispiel das Modell in wenigstens ein Submodell unterteilt, welches wenigstens einen sensorischen Anhang und/oder wenigstens eine sensorische Eigenschaft des Gliederfüßers beschreibt. Beispielsweise lässt sich mit einem Submodell die Antenne des Gliederfüßers 12 beschreiben, während mit einem anderen Submodell die Sensillenhaare des Gliederfüßers 12 beschrieben werden. Prinzipiell lassen sich beliebig viele Submodelle verwenden.

In einem besonders bevorzugten Ausführungsbeispiel wird dem wenigstens einen Modell oder Submodell wenigstens einer der folgenden physikalischen und/oder biochemischen Effekte der sensorischen Anhänge und/oder sensorischen Eigenschaften des Gliederfüßers 12 zugeordnet:

- ein Modell einer Bürstenelektrode, die ein Modell der Antennen des Gliederfüßers ist,
- ein Modell einer porösen Elektrode, die ein Modell der porösen Sensillenhaare des Gliederfüßer ist,
- ein Modell der allgemeinen Diffusion, die die Ionendiffusion beschreibt,
- ein Modell der Diffusion einer nicht-permeablen Wand (NPW),
- ein Modell der Diffusion eines idealen Reservoirs,
- ein Modell zur Berechnung des Tortuositätsfaktors aus tomographischen Daten der Oberfläche und/oder der inneren Struktur des Gliederfüßers,
- ein Modell zur Berechnung des Tortuositätsfaktors aus topographischen Daten der Oberfläche und/oder der inneren Struktur des Gliederfüßers.

Prinzipiell sind jedoch weitere Zuordnungen von physikalischen und/oder biochemischen Effekten der sensorischen Anhänge des Gliederfüßers 12 zu Modellen oder Submodellen denkbar.

In einem weiteren besonders bevorzugten Ausführungsbeispiel wird zur Generierung des Ersatzschaltbildes wenigstens ein Transmission-Line-Modell (TLM) 20 verwendet. Abb. 27 zeigt ein allgemeines TLM 20. Mit der Verwendung von TLM 20 können beliebige äquivalente Ersatzschaltbilder generiert werden, weil z.B. für die einzelnen komplexen Elemente Zx auch Randwertbedingungen angenommen werden können (z.B. Zx = 0 oder Zx = ∞).

Um komplexe Systeme zu modellieren, lassen sich in einem weiteren Ausführungsbeispiel wenigstens zwei oder mehrere Ersatzschaltbilder hintereinander schalten. Durch die Hintereinanderschaltung werden zudem die Ergebnisse der Modelle genauer. Prinzipiell lassen sich beliebig viele Ersatzschaltbilder hintereinander schalten. Beispiele von verdichteten ECM sind konstante Phasenelemente (CPE) und Infinite Voigt Schaltkreise.

In einem bevorzugten Ausführungsbeispiel wird wenigstens eine Randwertbedingung mit dem TLM 20 verwendet, um das Modell des Gliederfüßers 12 zu beschreiben. In der erwähnten Tabelle 4 sind Beispiele für Randwertbedingungen für das TLM in Abb. 27 dargestellt.

Tabelle 4

| x=0 | | | x=$l_{el}$ | | | Physical effect |
|---|---|---|---|---|---|---|
| $I_1$ | $I_2$ | $U_t$ | $I_1$ | $I_2$ | $U_t$ | |
| $I_0$ | 0 | | $0^a$ | $I_0$ | | Porous electrode, e.g. [2,25] |
| $I_0$ | 0 | | $I_0$ | $0^a$ | | Porous material, e.g. [13] |
| $I_0$ | $-I_0$ | | $U_t(l_{el})_t/\underline{Z_{lel}}$ | | | Ion diffusion, electron conduction in cables |
| $I_0$ | $-I_0$ | | 0 | $0^a$ | | Diffusion, non-permeable wall (NPW) |
| $I_0$ | $-I_0$ | | $-I_2{}^a$ | $-I_1{}^a$ | 0 | Diffusion, ideal reservoir (IR) |
| $^a$ This must be the result after calculating the integration constants | | | | | | |

Beispielsweise sind die Randwertbedingungen für eine poröse Elektrode, welche ein Modell der porösen Sensillenhaare ist, für x=0: $I_1=I_0$, $I_2=0$; für x=$l_{el}$: $I_1=0$, $I_2=I_0$. Prinzipiell sind je nach Modell noch weitere Randwertbedingungen denkbar. Es ist zudem auch möglich, die durch das Modell des Gliederfüßers 12 beschriebenen sensorischen Anhänge 16 und/oder sensorischen Eigenschaften mit Randwertbedingungen des TLM 20 zu modellieren.

Ferner kann die Randwertbedingung wenigstens eine Randwertbetrachtung wenigstens einer Impedanz, beispielsweise gegen null und/oder gegen unendlich aufweisen, wodurch das TLM 20 in ein vereinfachtes Ersatzschaltbild überführt wird. So lässt sich z.B. das ansonsten (komplexe) Ersatzschaltbild vereinfachen, wodurch sich schneller und einfacher Lösungen finden lassen.

Mit Hilfe des vereinfachten Ersatzschaltbildes ist es in einem weiteren Ausführungsbeispiel denkbar, wenigstens ein Impedanzspektrum zu ermitteln. Vereinfachte Ersatzschaltbilder wie z.B. Infinite Voigt-Modelle lassen sich dann z.B. zur Bestimmung von Impedanzspektren aus empirischen ermittelten Daten verwenden. Z.B. zeigt Abb. 45 ein Impedanzspektrum als auch ein DRT-Spektrum bei unterschiedlichen tomographischen und topographischen Eigenschaften, insbesondere werden die charakteristischen Eigenschaften des Impedanzspektrums bei offenen und geschlossenen Strukturen gezeigt. Um ein Impedanzspektrum aus einem ECM zu ermitteln, gibt es z.B. die Methode der verteilten Relaxationszeitkonstanten (Distribution of Relaxation Times, DRT). Die DRT-Methode setzt keine Modellannahmen, sondern lediglich ein unendlich langes Voigt-Netzwerk (R parallel C) (Abb.43) zur Abbildung aller Zeitkonstanten voraus. Mit diesem Ansatz ist man in der Lage, alle linearen zeitinvarianten (LTI)-konformen Spektren abzubilden. Bei der DRT-Methode handelt es sich um die Suche nach Korrelationen im Spektrum des Prüflings mit dem Relaxationsverhalten eines RC-Parallelgliedes mit der Zeitkonstante $\tau$=RC. Liegt ein solches Verhalten vor, so würde die DRT-Methode einen Dirac-Impuls bei der zugehörigen Grenzfrequenz anzeigen. Da das Signal allerdings vor der Rücktransformation z.B. mittels schneller Fouriertransformation (Fast Fourier Transform, FFT) aus dem Bildbereich gefiltert werden muss, kommt es auch bei einer perfekten Korrelation in der DRT-Methode zu einer Verteilung der Zeitkonstanten der Relaxationsprozesse. Ist diese Verteilung in einer logarithmischen Auftragung über die Frequenz f=$(2\pi\,\tau)^{-1}$ unsymmetrisch zum Maximum, kann ein weiterer Prozess in der Nähe von f angenommen werden.

In einem weiteren bevorzugten Ausführungsbeispiel wird für genauere Ergebnisse das Impedanzspektrum mit Hilfe von tomographischen und/oder topographischen Daten ermittelt. Beispielsweise können die tomographischen und/oder topographischen Daten aus entsprechenden Veröffentlichungen stammen. Abb. 35 bis 39 zeigen z.B. Impedanzen bei spezifischen tomographischen und topographischen Porenstrukturen. Z.B. können aus empirischen ECM und tomographischen und/oder topographischen Daten Impedanzspektren erstellt werden.

In einem besonders bevorzugten Ausführungsbeispiel ist es für ein vorteilhaftes gezieltes Beeinflussen des Gliederfüßers möglich, mit dem Impedanzspektrum und wenigstens einer Analyse z.B. einer DRT-Analyse (Distribution Relaxation Time Constant), wenigstens einen Parameter der Charakteristik 18 der elektromagnetischen Strahlung 10, z.B. wenigstens eine charakteristische Frequenz und/oder Zeitkonstante, zu ermitteln. In Abb. 29 sind mehrere Zeitkonstanten tau und dazugehörige Frequenzen gezeigt. Prinzipiell sind jedoch auch andere Parameter, wie z.B. Spannung, Strom oder zeitlicher Verlauf denkbar. So ist beispielsweise denkbar, dass aus einem empirischen ECM wie z.B. einem Infinite Voigt-Modell charakteristische Frequenzen zur Beeinflussung des Verhaltens von Gliederfüßern mit Hilfe der Analyse, z.B. der DRT-Analyse bestimmt werden.

Für ein vorteilhaft verbessertes Beeinflussen wird mit Hilfe des wenigstens einen Parameter der Charakteristik (z.B. einer charakteristischen Frequenz und/oder Zeitkonstante), z.B. aus diesem Parameter wenigstens ein neuer Parameter (z.B. Anregefrequenzen) z.B. mit einer DRT-Analyse (Abb. 50) abgeleitet, um wenigstens ein neues Impedanzspektrum zu generieren und um davon wenigstens ein neues TLM abzuleiten. Es ist z.B. möglich, aus dem DRT-Spektrum und dem Relaxationsverhalten mit charakteristischen Einschwingzeiten ein ECM der sensorischen Anhänge der Gliederfüßer zu erstellen und mit Hilfe der DRT-Analyse weitere charakteristische Frequenzen und/oder Zeitkonstanten zu bestimmen, um daraus neue Anregefrequenzen abzuleiten, um hieraus wiederum neue Impedanzspektren zu generieren und um davon neue strukturierte TLM abzuleiten.

Das TLM 20 umfasst in einem weiteren bevorzugten Ausführungsbeispiel wenigstens eines der folgenden unterteilten TLM 20:

- TLM für die poröse Elektrode,
- TLM für poröses Material,
- TLM für die allgemeine Diffusion,
- TLM für die Diffusion in nicht-permeable Wände und ein ideales Reservoir.

Die Abb. 27a - 27d zeigen beispielsweise die jeweiligen TLM für unterschiedliche physikalische und/oder biochemische Effekte. Abb. 27a zeigt das TLM für die poröse Elektrode. Abb. 27b zeigt das TLM für poröses Material. Abb. 27c zeigt das TLM der allgemeinen Diffusion. Abb. 27d zeigt das TLM für die Diffusion der nicht-permeablen Wand und des idealen Reservoirs. Es ist beispielsweise auch möglich mehrere physikalische und/oder biochemische Effekte in einem TLM zusammenzufassen (siehe z.B. Abb. 27d). In Abb. 27d ist die Diffusion der nicht-permeablen Wand und des idealen Reservoirs in einem TLM zusammengefasst.

TLM 20 werden im Allgemeinen z.B. durch eine Differenzialgleichung beschrieben. In einem weiteren bevorzugten Ausführungsbeispiel wird wenigstens eine Differenzialgleichung des TLM 20 zur Bestimmung von Parametern für die Charakteristik 18 der elektromagnetischen Strahlung 10 gelöst. Gleichung 23 zeigt die Lösung des allgemeinen TLM aus Abb. 27.

$$I_1(x) = I_1(x + \Delta x) + U_t(x)\underline{Y}'_t\Delta x$$

$$I_2(x + \Delta x) = I_2(x) + U_t(x)\underline{Y}'_t\Delta x$$

$$0 = U_t(x) + I_2(x)\underline{Z}'_2\Delta x - U_t(x + \Delta x) - I_1(x)\underline{Z}'_1\Delta x$$

Gleichung 23

Mit Gleichung 23 können z.B. die in Gleichung 24 dargestellten Werte des Systems bestimmt werden,

$$I_1(x) = C_1\frac{\underline{Z}'_2}{\underline{Z}'_1} + \frac{C_2 e^{-x\underline{\gamma}} - C_3 e^{x\underline{\gamma}}}{\underline{Z}'_t\,\underline{\gamma}}$$

$$I_2(x) = C_1 - \frac{(C_2 e^{-x\underline{\gamma}} - C_3 e^{x\underline{\gamma}})\,\underline{\gamma}}{\underline{Z}'_1 + \underline{Z}'_2}$$

$$U_t(x) = C_2 e^{-x\underline{\gamma}} + C_3 e^{x\underline{\gamma}}$$

Gleichung 24

wobei in Gleichung 25 eine komplexe Verzögerungskonstante definiert ist.

$$\underline{\gamma} = \sqrt{\frac{\underline{Z}'_1 + \underline{Z}'_2}{\underline{Z}'_t}}$$

Gleichung 25

Die verwendeten Symbole sowie deren Einheit bedeuten.

| Symbol | Unit | Meaning |
|---|---|---|
| $\underline{Z}'_1$, $\underline{Z}'_2$ | [Ω/m] | Complex longitudinal impedance (corresponding admittance: $\underline{Y}'_{1/2} = 1/\underline{Z}'_{1/2}$) |

(fortgesetzt)

| Symbol | Unit | Meaning |
|---|---|---|
| $\underline{Z}'_t$ | [Ω m] | Complex transverse impedance (corresponding admittance: $\underline{Y}'_t = 1/\underline{Z}'_t$) |
| $\underline{Z}1_{el}$ | [Ω] | Resistance at the end of transmission line |
| $l_{el}$ | [m] | Length of electrode or thickness of material |
| $U_t$ | [V] | Voltage between media 1 and media 2 across the transverse impedance |
| $I_1, I_2$ | [A] | Currents in longitudinal direction through media 1 and media 2 |
| $I_0$ | [A] | Current applied to the porous material |
| $\underline{\gamma}$ | [1/m] | Complex propagation constant |
| $C_1$ | [A] | Integration constant |
| $C_2, C_3$ | [V] | Integration constants |

Beispielsweise ist es so möglich, mit den Randwertbedingungen aus Tabelle 4 die unbestimmten Integrationskonstanten $C_1$, $C_2$ und $C_3$ zu bestimmen.

In einem weiteren bevorzugten Ausführungsbeispiel wird die Differenzialgleichung mittels wenigstens einer Randbedingung gelöst. Z.B. lässt sich die Lösung des TLM der porösen Elektrode in Gleichung 26 dadurch erlangen, dass die Randwertbedingungen für die poröse Elektrode aus Tabelle 4 zur Lösung des TLM in Abb. 27 bzw. der Differenzialgleichungen in Gleichung 23 benutzt werden.

$$\underline{Z}_{1,2'} = \frac{l_{el}}{(1/\underline{Z}'_2) + (1/\underline{Z}'_1)} \left( 1 + \frac{2 + ((\underline{Z}'_1/\underline{Z}'_2) + (\underline{Z}'_2/\underline{Z}'_1)) \cosh(l_{el}\underline{\gamma})}{l_{el}\underline{\gamma} \sinh(l_{el}\underline{\gamma})} \right)$$

Gleichung 26

Für die Impedanz erhält man dann die in Abb. 30a - 30d dargestellten graphischen Lösungen für unterschiedliche Integrationskonstanten, wobei in diesem Beispiel $C_2$=1 ist. Entsprechend erhält man für das poröse Material die Lösung der Impedanz in Gleichung 27.

$$\underline{Z}_{1,2'} = \frac{l_{el}}{(1/\underline{Z}'_2) + (1/\underline{Z}'_1)} \left( 1 + \frac{2 + ((\underline{Z}'_1/\underline{Z}'_2) + (\underline{Z}'_2/\underline{Z}'_1)) \cosh(l_{el}\underline{\gamma})}{l_{el}\underline{\gamma} \sinh(l_{el}\underline{\gamma})} \right)$$

Gleichung 27

Für die allgemeine Diffusion erhält man die in Gleichung 28 gezeigte Impedanz,

$$\underline{Z}_{1,2} = \frac{\underline{Z}'_1 \underline{Z}_{l_{el}} + \underline{Z}'_2 \underline{Z}_{l_{el}} + \underline{Z}'_1 \underline{Z}'_t \tanh(l_{el}\underline{\gamma})\underline{\gamma} + \underline{Z}'_2 \underline{Z}'_t \tanh(l_{el}\underline{\gamma})\underline{\gamma}}{\underline{Z}'_1 + \underline{Z}'_2 + \underline{Z}_{l_{el}} \tanh(l_{el}\underline{\gamma})\underline{\gamma}}$$

Gleichung 28 wobei man in diesem Fall mit $Z_2$=0 die in Gleichung 29 gezeigte Lösung der Impedanz erhält.

$$\underline{Z}_{1,2} = \frac{\underline{Z}'_1 \underline{Z}_{l_{el}} + \underline{Z}'_1 \underline{Z}'_t \tanh(l_{el}\underline{\gamma})\underline{\gamma}}{\underline{Z}'_1 + \underline{Z}_{l_{el}} \tanh(l_{el}\underline{\gamma})\underline{\gamma}}$$

Gleichung 29

Für die Diffusion der nicht-permeablen Wand und des idealen Reservoirs erhält man die in den Gleichungen 30 und 31 dargestellten Lösungen der Impedanz,

$$\underline{z}_{1,2,SHORT} = \frac{\underline{Z}_{1,2,SHORT}}{Z_{N,diff}} = \frac{\tanh(\sqrt{j\Omega})}{\sqrt{j\Omega}}$$

$$\underline{z}_{1,2,OPEN} = \frac{\underline{Z}_{1,2,OPEN}}{Z_{N,diff}} = \frac{1}{\sqrt{j\Omega}\,\tanh(\sqrt{j\Omega})}$$

Gleichungen 30, 31

wobei Gleichung 30 den Impedanzverlauf für offene und Gleichung 31 den Impedanzverlauf für geschlossene Ausgänge darstellt, sowie die in Gleichung 32 dargestellten Beziehung.

$$Z_{N,diff} = R_1' \, l_{el}$$

Gleichung 32

Die Abb. 34 a - 34d zeigen eine graphische Lösung der Impedanz gemäß den Gleichungen 30 und 31.

Die gezeigten Verläufe z.B. in Abb. 30a - 30d und Abb. 34a - 34d lassen sich durch geeignete Transformationen z.B. durch Fouriertransformation, Laplacetransformation und/oder deren Rücktransformation erhalten, wodurch eine Analyse z.B. im Bildbereich, Zeitbereich und/oder Frequenzbereich ermöglicht wird. Daher wird die Lösung der Differenzialgleichung z.B. der Gleichungen 26, 30 und/oder 31 in einem bevorzugten Ausführungsbeispiel in einem Impedanzspektrum dargestellt und/oder analysiert. Beispielsweise lässt sich das Impedanzverhalten unterschiedlicher Porengeometrien und Porenstrukturen (offene und/oder geschlossene Porengeometrien) in einem Impedanzspektrum z.B. dem Nyquist-Diagramm klar darstellen und somit mit der Lösung der Differenzialgleichung im Impedanzspektrum vergleichen. Zur TLM-Modellierung der Gliederfüßer 12 und deren Anregungssignale sind diese Erkenntnisse direkt verwendbar. Mit dem Ergebnis im DRT-Spektrum lassen sich direkt Rückschlüsse auf die Anregefrequenzen ziehen. Außerdem sind charakteristische Kurvenverläufe, wie in Abb.38 und Abb. 45 gezeigt, direkt verwendbar. Die DRT-Methode setzt keine Modellannahmen, sondern lediglich ein unendlich langes Voigt-Netzwerk (R parallel C) (Abb.43) zur Abbildung aller Zeitkonstanten voraus. Mit diesem Ansatz ist man in der Lage, alle linearen zeitinvarianten (LTI)-konformen Spektren abzubilden. Bei der DRT handelt es sich um die Suche nach Korrelationen im Spektrum des Prüflings mit dem Relaxationsverhalten eines RC-Parallelgliedes mit der Zeitkonstante $\tau$=RC. Liegt ein solches Verhalten vor, so würde die DRT-Methode einen Dirac-Impuls bei der zugehörigen Grenzfrequenz anzeigen. Da das Signal allerdings vor der Rücktransformation mittels schneller Fouriertransformation (Fast Fourier Transform, FFT) aus dem Bildbereich gefiltert werden muss, kommt es auch bei einer perfekten Korrelation in der DRT-Methode zu einer Verteilung der Zeitkonstanten der Relaxationsprozesse. Ist diese Verteilung in einer logarithmischen Auftragung über die Frequenz f=$(2\pi\,\tau)^{-1}$ unsymmetrisch zum Maximum, kann ein weiterer Prozess in der Nähe von f angenommen werden.

Im DRT-Spektrum sind die Einschwingzeiten (Relaxationszeiten) in Bezug auf das InfiniteVoigt-Netzwerk sichtbar. Über den formalen Zusammenhang f=$(2\pi\,\tau)^{-1}$ lassen sich Rückschlüsse auf die Anregefrequenzen führen. Abb. 38 zeigt z.B. ein Nyquist-Spektrum bei unterschiedlichen porösen Strukturen. Abb. 45 zeigt ebenfalls ein Nyquist-Spektrum und im kleinen quadratischen Bild das dazu korrelierende DRT-Spektrum.

Das Impedanzverhalten zeigt in den Simulationen in den Abb. 35 - 39 bei spezifischen tomographischen und topographischen Porenstrukturen unterschiedliche Ausprägung, wobei Abb. 35 Simulationen einer einfach geschlossenen-Poren-Geometrie darstellt und Abb. 36 Simulationen einer einfach offenen-Poren-Geometrie. Abb. 37 und 38 zeigen jeweils ein simuliertes Impedanzspektrum von 2D Fraktalen. In Abb. 39 ist das Impedanzverhalten einer Serie mit unterschiedlichen Strukturen der Poren gezeigt, wobei I die Länge der Poren und lambda der Formfaktor ist. Aus der Analyse und den Simulationen des Impedanzspektrums und insbesondere des normalisierten Impedanzspektrums ist zu erkennen, dass unterschiedliche Porengeometrien und Porenstrukturen in der graphischen und mathematischen Analyse typische Verhaltensmuster darstellen. Daher ist die Auswertung und Frequenzanpassung an unterschiedlichen Porenstrukturen einfach zu realisieren. Prinzipiell können auch mit Hilfe z.B. der Vektoranalyse parameterabhängige Ortsvektoren bestimmt werden, die z.B. die unterschiedlichen stetigen Funktionen beschreiben. Je nach Porengeometrie des Gliederfüßers kann also die Charakteristik 18 der elektromagnetischen Strahlung 10 angepasst werden.

In einem weiteren bevorzugten Ausführungsbeispiel wird das verwendete TLM 20 mit Hilfe wenigstens eines anderen TLM verifiziert und/oder angepasst. Beispielsweise kann zur Verifikation ein empirisch ermitteltes Modell in Form z.B. eines Frequenzpattern verwendet werden. Wie in Abb. 50 gezeigt, können z.B. aus empirisch ermittelten Frequenzpattern und der Verwendung von Infinite Voigt-Modellen neue TLM-Modelle generiert werden. Beispielsweise ist es auch denkbar, dass ein unterschiedliches TLM-Basismodell aus den vier Modellen in Abb. 27a - 27d für die Modellierung verwendet wird. Gerade in physikalischen und/oder biochemischen Systemen ist die Betrachtung z.B. offener oder geschlossener Strukturen (z.B. offene Poren oder geschlossene Poren) wichtig, um Impedanzmodelle auf Basis von tomographischen und/oder topographischen Daten abzubilden, siehe z.B. Abb. 37.

Das Frequenzspektrum zur Anregung von sensorischen Anhängen 16 und/oder sensorischen Eigenschaften von Gliederfüßern 12 ist sehr groß. Dadurch kann eine Multi-Frequenz-Anregung zu einer Mehrdeutigkeit der Ergebnisse führen. Unterschiedliche physikalische und/oder biochemische Vorgänge sind in unterschiedlichen Frequenzbereichen zu beobachten und zu analysieren. Daher werden in einem weiteren bevorzugten Ausführungsbeispiel Parameter des TLM zur eindeutigen Zuordnung des TLM zu dem entsprechenden sensorischen Anhang des Gliederfüßers bestimmt. Abb.29 zeigt z.B. das DRT-Spektrum mit dem verteilten Spektrum des Relaxationsverhaltens (Verteilung der Einschwingzeiten, DRT) mit den charakteristischen Einschwingzeiten als Abbild der Strukturen der Gliederfüßer. Dieses Spektrum wurde im ersten Schritt in Abb. 50 empirisch so ermittelt, dass der Gliederfüßer bei Anregung mit dem Frequenzpattern ein passives Verhalten (kein Stechen, Ruhezustand) zeigte. Aufgrund der topographischen und/oder tomographischen Anatomie und Struktur der Gliederfüßer, können spezifische Frequenzen zugeordnet werden. Abb. 50 zeigt den vereinfachten Modellierungsprozess. Aus empirischen Untersuchungen werden vereinfachte Ersatzschaltbilder und Frequenzpattern ermittelt. Diese Frequenzpattern können ein breitbandiges Spektrum aufweisen. Hieraus wird ein Impedanzspektrum abgeleitet. Mit Hilfe der DRT-Analyse werden charakteristische Frequenzen und Zeitkonstanten bestimmt. Aus diesem DRT-Spektrum werden neue Anregefrequenzen abgeleitet. Diese wiederum dienen der Bestimmung eines neuen Impedanzspektrums und davon abgeleitet eines neuen strukturierten Transmission Line-Modells.

Ist eine eindeutige Zuordnung nicht möglich, können in einem besonders bevorzugten Ausführungsbeispiel z.B. bestimmte Parameter des TLM durch die Verwendung von beispielsweise topographischen und/oder tomographischen Daten des Gliederfüßers vereinfacht und/oder direkt bestimmt werden. Beispielsweise lassen sich mittels topographischer Daten des Gliederfüßers und Impedanzsimulationen verschiedener Porengeometrien entsprechende Parameter bestimmen. Beispielsweise können mit Hilfe von Kurvendiskussionen und/oder Differenzialgleichungen die unterschiedlichen Poreneigenschaften (siehe z.B. Abb. 38) zugeordnet werden.

In einem bevorzugten Ausführungsbeispiel werden die Parameter normalisiert. Mit Hilfe von normalisierten Parametern z.B. Impedanz-Parametern lassen sich allgemein gültige Modelle für jede Art von Gliederfüßern definieren. Mit der Normalisierung z.B. des Impedanzspektrums auf den Bezugsfaktor 1, lassen sich relative Abweichungen oder Veränderungen gut bestimmen und sind damit bei der Analyse gut erkennbar.

Zusammen mit einer Grenzwertbetrachtung z.B. gegen null und/oder gegen unendlich wird die Parameteranpassung z.B. in einer verwendeten Software vereinfacht, da die Anpassungen nur relativ zu einem vorher ermittelten Wert sind. Daher werden in einem weiteren Ausführungsbeispiel die Parameter mit einer Grenzwertbetrachtung angepasst. Mit der Grenzwertbetrachtung vereinfachen sich z.B. die Terme innerhalb der Differenzialgleichungen. Dies ist wichtig bei der Umsetzung der Algorithmen in einem Mikrokontroller.

In einem besonders bevorzugten Ausführungsbeispiel werden durch ein Substitutionsverfahren in Kombination mit wenigstens einer Datenbank z.B. einer Funktions-Library beliebige nichtlineare Funktionen modelliert. Für das Substitutionsverfahren werden abschnittsweise graphische Funktionen z.B. durch e-Funktionen, Gauss'sche Funktionen und/oder lineare Funktionen ersetzt. Diese Teilfunktion als Abschnittsfunktion kann wiederum als ECM dargestellt werden z.B. als Kombination aus Widerstand und Kondensator. Somit lassen sich z.B. bei einer Implementation des Verfahrens in ein Mikrokontroller-basierendes System Differenzialgleichungen vermeiden, indem nichtlineare Funktionsverläufe z.B. in Look-Up-Tabellen in einem Mikrokontroller gespeichert werden und so Speicherplatz reduzieren. Auch ist z.B. denkbar, dass eine diskrete Fourier-Transformation (DFT) zur speichereffizienten Nutzung der Algorithmen auf Basis eines Mikrokontrollers unter Einbindung eines Goertzel-Algorithmus für die Signalauswertung, insbesondere bei Verwendung von mehr als einer Anregefrequenz verwendet wird.

In einem weiteren Ausführungsbeispiel wird für eine vorteilhaft speichereffiziente Nutzung des Verfahrens auf Basis eines Mikrokontrollers wenigstens eine Diskrete Fourier-Transformation (DFT) unter Einbindung eines Goertzel-Algorithmus verwendet. Es ist damit möglich, das Verfahren und/oder den daraus resultierenden Algorithmus speicherplatzsparend auf einem Mikrokontroller zu implementieren, sodass keine großen und leistungsstarken Recheneinheiten verwendet werden müssen.

In einem bevorzugten Ausführungsbeispiel wird die Lösung der Differenzialgleichung mittels eines auf wenigstens einem Referenzmodell basierenden adaptiven Regelungssystems 50 z.B. eines sich selbstanpassenden Regelungssystems 50 überprüft und/oder angepasst. Abb. 47 zeigt ein allgemeines Blockschaltbild eines Regelungssystems 50 zum Anlernen unterschiedlicher Referenzmodelle. Die Anpassung kann z.B. auf Basis der vorigen Ergebnisse und/oder über die Beobachtung der Gliederfüßer und deren Verhaltensmuster durchgeführt werden. Die Gliederfüßer werden z.B.durch die mittels der Lösung der Differenzialgleichung gewonnene Charakteristik der elektromagnetischen Strahlung angeregt. Diese Lösung dient als Referenzmodell. Mit der Anregung wird das Aktivitätsverhalten der Gliederfüßer beeinflusst, das final z.B. über eine menschliche Beobachtung oder eine Kamera oder andere geeignete optische Sensoren z.B.

Infrarot oder FIR -Time-of-flight-Sensoren detektiert wird. Das System umfasst einen inneren, geschlossenen Feedback-Regelkreis und einen für die Adaption zuständigen äußeren Kreis. Die Adaption der Regler-Parameter erfolgt z. B. auf Basis eines Gütekriteriums unter Verwendung eines Gradientenverfahrens oder auf anderen bekannten mathematischen Verfahren. Bei der Gliederfüßer-Referenzmodellierung wird mit Hilfe des Referenzmodells das gewünschte Übertragungsverhalten des geschlossenen Regelkreises vorgegeben. Das erste Referenzmodell kann z.B. auch auf empirischen Untersuchungen basieren. Abb. 47 beschreibt ein Modell der adaptiven Regelung, die auf einem Satz veränderlicher Regelparameter $\Theta$ beruht. Die wird durch das Adaptionsgesetz (Regelparameteradaption) so angepasst, dass das Ein-/Ausgangsverhalten des geregelten Systems einem Referenzmodell des Gliederfüßers entspricht. Die Stellgröße ist z.B. das Frequenzpattern $\omega$. Der Regler passt dabei z.B. den zeitlichen Verlauf des Anregesignals an.

Das Referenzmodell z.B. das erste Referenzmodell kann beispielsweise auf empirischen Daten und/oder Daten eines bereits ermittelten Modells des Gliederfüßers basieren. Somit können die Referenzmodelle frühere ermittelte Modelle des Gliederfüßers sein und/oder Modelle aus empirischen Daten, welche nun angepasst werden.

In einem bevorzugten Ausführungsbeispiel wird die Charakteristik der elektromagnetischen Strahlung in einem Speicher z.B. einer Datenbank oder einer Funktions-Library abgelegt. Beispielsweise kann die Charakteristik drahtlos an den Speicher gesendet und dort abgelegt werden. Später kann die Charakteristik aus dem Speicher z.B. drahtlos übermittelt werden.

Im Ausführungsbeispiel in Abb. 18 wird die Charakteristik 18 der elektromagnetischen Strahlung 10 mit wenigstens einem Trägersignal 22 moduliert. Prinzipiell sind unterschiedlichste Modulationsarten möglich, z.B. PWM, FM, AM, PFM, TDM, FDM. Abb. 25 (links und rechts) zeigt jeweils ein PWM Signal. Auch können mehrere Modulationsarten kombiniert werden. Beispielsweise können alle Modulationsfrequenzen Primzahl basierend sein und/oder weisen keine ganzzahligen harmonischen und subharmonischen Teiler und/oder Vielfache auf. Die Frequenzen können z.B. im Sub-GHz-, MHz- oder GHz-Bereich liegen.

Besonders bevorzugt wird in einem weiteren Ausführungsbeispiel die Charakteristik 18 der elektromagnetischen Strahlung 10 mit wenigstens einem Dithersignal moduliert. Somit ist es möglich, vorteilhaft eine erhöhte Reichweite und/oder Sendeleistung der Charakteristik der elektromagnetischen Strahlung zu erhalten und somit Strom zu sparen. Weiter bevorzugt wird das Trägersignal 22 zusätzlich mit wenigstens einem Dithersignal moduliert. In Abb. 25 (links) ist als Beispiel ein PWM Signal mit aufmoduliertem Dithersignal zu sehen.

In einem weiteren Ausführungsbeispiel in Abb. 23 wird die Charakteristik der elektromagnetischen Strahlung mit einem kombinierten Multi-Frequenz-Pattern-Generator 24 erzeugt, welcher auf einem Frequenz-Division-Multiplexing-Signal (FDM) (Abb. 20) und einem Time-Division-Multiplexing-Signal (TDM) (Abb. 21) basiert. Es ist somit möglich, beliebige Charakteristiken der elektromagnetischen Strahlung zu erzeugen, sowohl im Frequenz- als auch im Zeitbereich. Hingegen erlaubt ein Frequenz-Division-Multiplexing-Signal (FDM) in Abb. 20 bzw. ein Time-Division-Multiplexing-Signal (TDM) in Abb. 21 lediglich einen bestimmten Frequenzbereich über die gesamte Zeit bzw. mehrere Frequenzen über lediglich einen bestimmten Zeitbereich zu erzeugen.

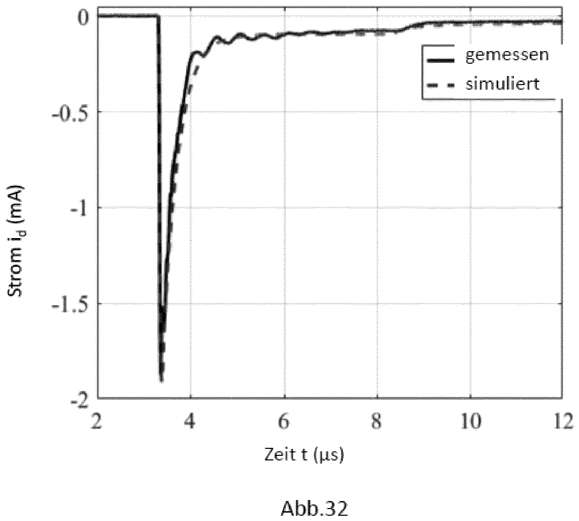

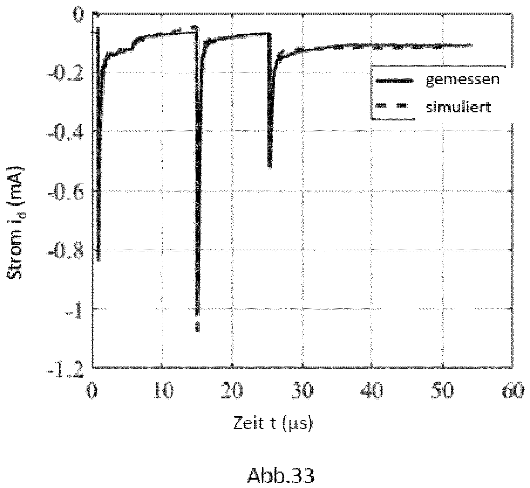

Zur genaueren und effektiveren Beeinflussung der Gliederfüßer 12 weist die Charakteristik 18 der elektromagnetischen Strahlung 10 in einem weiteren Ausführungsbeispiel wenigstens einen Burstimpuls, welcher wenigstens eine Corona-Entladung in der Luft simuliert, dessen zeitlicher Verlauf wenigstens einen positiven und/oder negativen Trichelpuls aufweist. In Abb. 31 und 32 sind positive bzw. negative Trichelpulse dargestellt. Corona-Entladungen sind stromschwache Gasentladungen bei Atmosphärendruck und lokal hoher elektrischer Feldstärke, z.B. an Elektroden oder Drähten. Abb. 31 zeigt am Beispiel den zeitlichen Verlauf eines positiven Trichelpuls (gemessener und simulierter Stromstoß) und Abb. 32 zeigt den zeitlichen Verlauf eines negativen Trichelpuls (gemessener und simulierter Stromstoß). Empirische Untersuchungen an Gliederfüßern haben gezeigt, dass solche Pattern, die Corona-Entladungen in der Luft simulieren, das Verhalten von Gliederfüßern signifikant beeinflussen. Abb. 33 zeigt den zeitlichen Verlauf einer Trichelpuls-Sequenz als gemessene und simulierte Stromstöße.

Für eine vorteilhaft erhöhte Effektivität der Beeinflussung weist die Charakteristik 18 keine harmonischen und/oder subharmonischen Beziehungen auf. Somit unterscheiden sich die Oberwellenanteile und subharmonische Anteile z.B. im Frequenzspektrum bei allen Sequenzen, welche simultan gleichzeitig ausgesendet werden. Z.B. weist die Charakteristik gleichzeitig ausgesendeter Frequenzen im Zeitbereich und/oder im Frequenzbereich keine harmonischen und/oder subharmonischen Beziehungen auf.

Für eine weitere gesteigerte Effektivität der Beeinflussung ist die Charakteristik 18 Primzahl basierend. Somit weist die Charakteristik 18 keine ganzzahlige harmonische und/oder subharmonische Vielfache und/oder Teile auf.

Für eine besonders gesteigerte Effektivität basiert die Charakteristik 18 auf dem Dirichletschen Primzahlsatz über arithmetische Verläufe. Der Dirichletsche Primzahlsatz ist eine Aussage aus dem mathematischen Teilgebiet der Zahlentheorie, der besagt, dass eine arithmetische Folge unendlich viele Primzahlen enthält, wenn dies nicht aus trivialen Gründen unmöglich ist.

In einem weiteren Ausführungsbeispiel in Abb. 49 ist eine Vorrichtung 100 zum Beeinflussen von Gliederfüßern 12 mittels elektromagnetischer Strahlung 10 dargestellt, wobei die Vorrichtung 100 wenigstens einen Sender 14 aufweist, welcher eine Charakteristik 18 der elektromagnetischen Strahlung 10 abstrahlt, wobei die Charakteristik 18 der elektromagnetischen Strahlung 10 mit Hilfe wenigstens eines äquivalenten elektronischen Ersatzschaltbildes erstellt ist, wobei das Ersatzschaltbild ein Modell eines Gliederfüßers 12 ist.

Das Modell beschreibt in einem weiteren Ausführungsbeispiel wenigstens einen sensorischen Anhang 16 und/oder wenigstens eine sensorischen Eigenschaft des Gliederfüßers 12.

In einem bevorzugten Ausführungsbeispiel ist das Ersatzschaltbild mit Hilfe wenigstens eines TLM 20 generiert. Für TLM existieren allgemein gültige Lösungen und es lassen sich ebenfalls mit TLM z.B. beliebige physikalische und/oder biochemische Effekte beschreiben.

Die Vorrichtung 100 kann wie z.B. im Ausführungsbeispiel in Abb. 49 noch einen Multi-Frequenz-Pattern-Generator 24 aufweisen, der die Charakteristik der elektromagnetischen Strahlung 10 erzeugt. Optional kann die Vorrichtung zusätzlich einen Modulator 26, einen Verstärker 28, einen Oszillator 30 und eine Antenne 32 aufweisen. Der Multi-Frequenz-Pattern-Generator 24 erzeugt die elektromagnetische Strahlung 10, wobei das Signal im Anschluss mit dem Modulator 26 und/oder Oszillator 30 moduliert wird, z.B. mittels PWM, FM, AM, PFM, TDM, FDM oder anderen Modulationsarten. Danach wird das Signal in dem Verstärker 28 verstärkt und dann von der Antenne 32 abgestrahlt.

Weiterhin sind in einem bevorzugten Ausführungsbeispiel in Abb. 49 Mittel 34 vorgesehen, mit denen die Charakteristik der elektromagnetischen Strahlung aus einem Speicher z.B. aus einer Datenbank oder einer Cloud auf die Vorrichtung übertragbar ist. Prinzipiell kommen dabei beliebige Übertragungsmittel und/oder-arten in Betracht, z.B. drahtlose Übertragungsarten wie z.B. Wifi, Bluetooth, Infrarot oder andere Datennetze.

In einem weiteren Ausführungsbeispiel in Abb. 49 sind Mittel 36 vorgesehen sind, mit denen die Charakteristik der elektromagnetischen Strahlung 10 in der Vorrichtung 100 erstellt, z.B.berechnet werden kann, beispielsweise mit einem Mikrokontroller oder einer Recheneinheit.

Die Charakteristik 18 kann zusätzlich für eine stärkere und effizientere Beeinflussung der Gliederfüßer 12 noch wenigstens eine Trichelpulssequenz (Abb. 33), (Abb. 31), (Abb. 32) zur Simulation von einer Corona-Entladung in der Atmosphäre aufweisen.

Zusammengefasst untersucht ein Biologe zunächst ein Insekt auf seine Sinnesorgane und klassifiziert diese. Diese Sinnesorgane bzw. sensorische Anhänge können sehr unterschiedliche Reize wahrnehmen z.B. flüchtige und nichtflüchtige Gerüche, Duftstoffmoleküle, Temperatur, Luftfeuchtigkeit oder Geschmack. Der Biologe weiß genau, wo sich die jeweiligen Sinnesorgane mit den Rezeptoren im Gliederfüßer befinden.

Außerdem ist dem Biologen durch Untersuchungen umfänglich bekannt, wie die Zellstruktur aussieht und wie die genauen Zusammenhänge zur Signalübertragung im Innern des Gliederfüßers stattfinden. Mikroskopische Untersuchungen und andere bildgebende Analyseverfahren haben dem Biologen umfänglich und eindeutige Informationen geliefert zum strukturellen Aufbau des Gliederfüßers. Außerdem ist dem Biologen bekannt, welche Gene, Genfamilien und chemosensorische Neuronen für die jeweilige Sinneswahrnehmung verantwortlich sind.

Der Biologe zeichnet damit ein umfängliches Bild des Gliederfüßers und bestimmt alle sensorischen Strukturen. Dem Biologen ist damit auch bekannt, wo sich genau Zellverzweigungen, poröse Strukturen, durchlässige und halbdurchlässige Schichten und Membranen, Verdickungen, Engstellen im Signalübertragungsweg befinden und wo Diffusion stattfinden kann. Hieraus kennt der Biologe die Signalübertragungswege von Reizen und die topologischen Eigenschaften, die für die Signalübertragung verantwortlich sind.

Dem Biologen ist auch bekannt, dass elektromagnetische Strahlung in der Therapie von Säugetieren verwendet wird und dass elektromagnetische Strahlung und Lichtsignale im Nanometerbereich das Verhalten von Gliederfüßern beeinflussen.

Aufgrund des Kenntnisstandes des Biologen, dass elektromagnetische Strahlung das Verhalten von Gliederfüßern direkt und indirekt beeinflusst, ergibt sich die erfindungsgemäße Schlussfolgerung, dass sich die sensorischen Eigenschaften mit elektrischen Ersatzschaltbildern modellieren lassen, um die komplexe Topologie des Gliederfüßers mit Hilfe elektrischer Ersatzschaltbilder zu abstrahieren.

Hieraus ergibt sich ein, dass die Verwendung von Ersatzschaltbildern zur Beeinflussung von Gliederfüßern hilfreich ist.

Aufgrund der Ähnlichkeit mancher Sinnesorgane zu Bauelementen in der Elektrotechnik, wie z.B. Antenne und Fühler, wurde erkannt, dass eine Nähe zu Lösungen in der Elektrotechnik besteht. Hieraus ergibt sich die Annahme, dass es hilfreich ist, die Sinnesorgane konkret mit Elementen der Elektrotechnik direkt zu ersetzen. So haben z.B. die Antennenfühler die gleiche biomechanisehe und optische Struktur wie eine Bürstenelektrode in der Elektrotechnik. Basierend auf diesem Ansatz wird eine Auswahl von Ersatzschaltbildern zur Verfügung gestellt und es werden die Ersatzschaltbilder ausgewählt, die den Sinnesorganen am ehesten entsprechen.

Es erfolgt so eine Zuordnung der Topologie des Gliederfüßers zu Ersatzschaltbildern.

In den Abb. 51 - 54 sind Ersatzschaltbilder verschiedener sensorischer Anhänge eines Gliederfüßers mit entsprechend zugeordneten Ersatzschaltbildern gelistet. Die Zuordnung der biologischen Erkenntnisse zum Ersatzschaltbild erfolgt aus dem aktuellen Stand der Medizintechnik. Die Darstellung der elektrischen Leitfähigkeit und damit auch des elektrischen Leitwertes sowie die daraus resultierenden Impedanzverläufe bilden eine weitere hilfreiche Annahme.

Zu diesem Zeitpunkt sind jedoch die Werte der Widerstände und Kapazitäten im Ersatzschaltbild (Abb. 51 - 54) unbekannt.

Es erfolgt eine Transformation der (eventuell in Reihe geschalteten) Ersatzschaltbilder zu beispielsweise einem Voigt-, Maxwell-, Ladder/Leiter-, erweitertes Leiter- oder TLM-Modell (Abb. 55). Alle Modelle der Abb. 55 sind gleichwertig anwendbar. Das TLM-Modell ist jedoch universell einsetzbar. Universell einsetzbar bedeutet, dass alle Ersatzschaltbilder bzw. alle irgendwie zusammengeschalteten Ersatzschaltbilder mit einem TLM beschrieben werden können.

Zur Analyse und Bestimmung von Leitfähigkeit, Impedanz und Leitwert von unbekannten Systemen sind z.B. Voigt-Modelle und TLM-Modelle geeignet.

Auch an dieser Stelle sind die Werte der Widerstände und Kapazitäten nicht bekannt.

Unabhängig von den bis hierhin ermittelten Ersatzschaltbildern und Annahmen wird nun ein bekannter Trichelpuls (oder ein beliebiger anderer Puls) ausgesendet bzw. wird dieser zur Bestrahlung des Gliederfüßers anfänglich verwendet.

Trichelpulse sind Signale im Zeitbereich, die in der Natur vielfach vorhanden sind. Insbesondere die Sonne erzeugt elektromagnetische Strahlung, die zu Stoßentladungen in der Luft führen und die der Gliederfüßer insbesondere als Änderung in seinem atmosphärischen Umfeld wahrnehmen kann. Der Trichelpuls ist damit ein natürlicher Puls, den die Gliederfüßer grundsätzlich wahrnehmen, und simuliert eine natürliche Veränderung. Der Trichelpuls ist vereinfacht gesagt die Sprache bzw. das Signal, mit der bzw. mit dem mit dem Gliederfüßer - auch im Rahmen der Erfindung - kommuniziert wird. Die Verwendung eines Pulses und insbesondere eines Trichelpulses ist damit eine weitere hilfreiche Annahme zur Beeinflussung von Gliederfüßern.

Der ausgesandte Trichelpuls liefert ein Frequenzspektrum. Zur Analyse eines Frequenzspektrums von Signalen im Zeitbereich wird z.B. die Fouriertransformation verwendet. Mit Hilfe der Fouriertransformation werden nun auch die Frequenzanteile der Trichelpulse ermittelt. Die Frequenzanteile von Stoßentladungen wie eines Trichelpulses sind charakteristisch im Frequenzspektrum zu ermitteln.

Jeder ermittelte charakteristische Frequenzanteil im Trichelpuls wird dann in eine Einschwingzeit T (Tau) umgerechnet. Diese Einschwingzeit korrespondiert mit den Zeitkonstanten eines RC-Gliedes im Ersatzschaltbild z.B. des Voigt-Modells (Abb. 29). Das bedeutet, dass an dieser Stelle die Verbindung zum Gliederfüßer über das wenigstens eine Ersatzschaltbild hergestellt wird. Damit können unter Verwendung der ermittelten Einschwingzeiten Tau vorzugsweise alle Zeitkonstanten aller RC-Glieder im Ersatzschaltbild aufgelöst werden. Jede signifikante Frequenz im Frequenzspektrum steht dabei stellvertretend für eine Einschwingzeit eines RC-Gliedes. Damit ist dies eine weitere hilfreiche Annahme.

Wie bereits oben beschrieben, werden zur Darstellung der elektrischen Leitfähigkeit und damit auch des elektrischen Leitwertes und der Impedanz von biologischen Strukturen Ersatzschaltbilder aus Widerständen und Kondensatoren verwendet. Über das Ohm'sche Gesetz und die Kirchhoff'schen Regeln besteht ein direkter Zusammenhang zwischen Strom, Spannung, Leitfähigkeit und Leitwert. Diese Darstellung ist äußerst hilfreich, wenn es darum geht, die maßgeblichen Einflussgrößen zu ermitteln, nämlich eine Darstellung der normalisierten Amplituden (Spannung) im Frequenzspektrum (y-Achse) in Abhängigkeit der Einschwingzeiten der RC-Glieder (x-Achse).

Durch den direkten Zusammenhang von Strom, Spannung und Leitwert wird nun die normalisierte Darstellung des Leitwertes (y-Achse) in Abhängigkeit der Einschwingzeiten der RC-Glieder verwendet. Diese Darstellung nennt man DRT-Analyse oder DRT-Impedanzspektrum. In der DRT-Analyse werden die Leitwerte (Kehrwert der komplexen Impedanz) der RC-Glieder in das Verhältnis gesetzt zu den Einschwingzeiten der einzelnen RC-Glieder. Aus diesem Grund verwendet man die DRT-Analyse zur graphischen Darstellung und ggf. Analyse. Durch die unterschiedlichen komplexen Leitwerte im DRT-Impedanzspektrum erkennt man direkt die signifikanten und die weniger signifikanten RC-Glieder und damit Einflussgrößen zur Beeinflussung des Gliederfüßers.

Damit ist das DRT-Impedanzspektrum das erste Signal in der Kommunikation bzw. Beeinflussung des Verhaltens des Gliederfüßers und die graphische Darstellung der Impedanz des Gliederfüßers.

Durch gezielte Variation der Zeitkonstanten des Frequenz/Puls-Musters kann ein Anlernen des Gliederfüßers erfolgen.

Mit Hilfe einer graphischen Analyse des DRT-Impedanzspektrums basierend auf Algorithmen der Künstlichen Intelligenz lassen sich durch gezielte Variation der ermittelten signifikanten Zeitkonstanten die Frequenz/Puls-Muster anpassen. Dies entspricht in der Praxis der Variation des Trichelpulses, bis die richtige Frequenz gefunden wurde, bei der der Gliederfüßer reagiert.

Somit können die charakteristischen Eigenschaften eines Gliederfüßers auch ergänzend oder alternativ durch eine graphische Lösung dargestellt werden. Durch die alleinige Beobachtung der Höhe der Spitzenwerte der Leitwerte $G_{R/Q}$ im DRT-Spektrum lassen sich die signifikanten Frequenzen direkt ableiten. Eine weitere mathematische Möglichkeit ist die Verwendung von Skalar- und Vektorfeldern oder Liniensuchverfahren im graphischen DRT-Impedanzspektrum. Damit ist die Verwendung von handelsüblichen Microcontrollern und Lookup-Tabellen zur Analyse möglich. Eine derart vereinfachte Analyse kann innerhalb weniger Sekunden auch auf einem mobilen Kommunikationsgerät wie einem Handy erfolgen, das auch in der Lage ist, die ermittelten Frequenzanteile anschließend auszusenden.

Ausgehend von diesem DRT-Impedanzspektrum werden nun die RC-Zeitkonstanten angepasst und damit die Frequenzen.

Als optionalen Schritt zur Plausibilitätsprüfung und zur Verifizierung des Vorhergehenden kann zusätzlich eine graphische Analyse mittels des Nyquist-Impedanzspektrums (Ortskurvendarstellung) und Verifizierung der Ortskurven mit dem Ersatzschaltbild erfolgen.

Die Analyse von elektrischen komplexen Netzwerken im Bildbereich (Ortskurven) des sog. Nyquist-Impedanzspektrums bietet viele Vorteile bei der Verifizierung, Verprobung von Ersatzschaltbildern mit den topologischen Strukturen von Systemen wie den Gliederfüßern und dient vor allem, aber nicht nur der Plausibilitätsprüfung. Sind die oben erläuterten Schritte nämlich bekannt, kann auch umgekehrt von der graphischen Darstellung des Frequenzmusters auf die Topologie des Gliederfüßers und umgekehrt geschlossen werden. Dies kann über Mustererkennungsverfahren ggf. unter Einsatz künstlicher Intelligenz erfolgen.

Unterschiedliche geometrische Formen von Zellstrukturen bzw. topologische Eigenschaften von Gliederfüßern können direkt unterschiedliche Kurven im Nyquist-Impedanzspektrum zugeordnet werden. Abb.36 - 39 zeigen Kurvenschare, Halbkreise, Gerade und Wendepunkte, die sich je nach geometrischem Aufbau oder porösen Eigenschaften in der graphischen Analyse eindeutig zuordnen lassen. Die "richtige" Charakteristik bzw. die "richtigen" Frequenzen können anstatt in einem DRT-Spektrum wie in Abb.29 auch als Nyquist-Darstellung (Abb. 36ff) dargestellt werden.

Die Nyquist-Darstellung erlaubt eine Identifizierung der Topologie des Insekts anhand der Zuordnung des Nyquist-Impedanzspektrums. Sie dient dazu die Erkenntnisse und das Wissen des Biologen mit den Erkenntnissen des Elektrotechnikers zu verproben. Im Ergebnis kann damit optional eine Trendanalyse zur Anpassung der Frequenz/Puls-Musters durch Vergrößern oder Verkleinern der Zeitkonstanten bestimmt werden.

Die Grundlagen der biologischen und biochemischen Analyse sind die Voraussetzung zum Verständnis der Ersatzschaltbilder. Unterschiedliche Attribute bzw. topologische Eigenschaften werden in einzelne Ersatzschaltbilder zerlegt und analysiert. Ein poröses Sensillenhaar hat dabei z.B. andere elektrische Eigenschaften wie ein verzweigtes Axon. Eigenschaften wie Porosität, durchlässige oder halbdurchlässige Membrane, Diffusion, Bürstenelektroden oder Ionentransport haben eindeutige Eigenschaften und signifikante Merkmale im Nyquist-Impedanzspektrum.

Bürstenelektroden (de Levie-Verhalten) oder eine große Anzahl von Sensillenhärchen besitzen die Eigenschaft eines konstanten Phasenelements CPE, wie es bei einem Doppelschichtkondensator vorhanden ist. Aufgrund dieser bekannten Eigenschaften (Abb.41) kann die Zuordnung von Ersatzschaltbildern vereinfacht werden.

Das gleiche gilt für die Struktur von Soma und Axon des Gliederfüßers. Im Nyquist-Impedanzspektrum sind Eigenschaften von konstanten Phasenelementen direkt zuordenbar (Abb. 38 und Abb. 39).

Abb. 62 zeigt den vorrichtungsgemäßen Aufbau mit Messgeräten und PC mit Matlab, wie er im Labor, grundsätzlich aber auch in der Praxis eingesetzt wird.

Die Vorrichtung weist Mittel zum Aussenden 40 wenigstens eines Pulses, vorzugsweise eines Trichelpulses auf. Das kann ein beliebiger Signalgenerator sein. Der Puls wird dann durch Mittel zum Erfassen 42 des Frequenzspektrums des ausgesandten Pulses erfasst, im Ausführungsbeispiel ein Oszilloskop. Die so ermittelte Analyse im Zeitbereich wird dann einem Frequenzspektrumanalysierer als Mittel zum Ermitteln 44 wenigstens eines Frequenzanteils des Frequenzspektrums des ausgesandten Pulses zugeleitet. Sind die Frequenzanteile ermittelt, kann durch Rechenmittel 46 der wenigstens eine Frequenzanteil in eine Einschwingzeit umgerechnet werden, um dadurch ggf. mit denselben Rechenmitteln 46 das wenigstens eine unbekannte RC-Glied anhand der mit den Zeitkonstanten des RC-Glieds korrespondierenden Einschwingzeit zu bestimmen. Dies setzt zuvor die Anwendung der Erkenntnisse aus der Biologie, also die Erkenntnis der Analogie zwischen dem Aufbau sensorischer Anhänge 16 und sensorischer Eigenschaften mit elektronischen Ersatzschaltbildern voraus.

Durch Auswahlmittel 62 kann vorzugsweise nach Normierung der Spannungsamplitude in Abhängigkeit der wenigstens einen Einschwingzeit mittels Normierungsmittel 48 durch die Mittel zum Ermitteln das wenigstens eine signifikante RC-Glied ausgewählt werden. Eingesetzt werden kann dazu z.B. ein DRT-Impedanzspektrum und eine Analyse basierend auf künstlicher Intelligenz. Die Mittel zum Ermitteln 44 identifizieren so wenigstens ein für die Beeinflussung des Gliederfüßers 12 signifikantes RC-Glied. Diese Auswahl kann über eine Verifizierung 60 bedarfsweise verifiziert werden, z.B. durch das Nyquist-Diagramm mit bekannten Impedanzspektren.

Das Mittel zum Aussenden des Pulses 40 ist dazu eingerichtet, wenigstens einen positiven und/oder negativen Trichelpuls auszusenden.

Alternativ oder ergänzend können auch Mittel zum Erkennen und Mittel zum graphischen Darstellen 56 eines Frequenzverhaltens des wenigstens einen Elements aus der Gruppe umfassend den sensorischen Anhang 16 und die sensorische Eigenschaft des Gliederfüßers 12 bei Aussenden wenigstens eines Pulses vorgesehen sind, die mit Mitteln zum Erkennen und Mitteln zum graphischen Darstellen 54 eines Frequenzverhaltens von Ersatzschaltbildern bei Aussenden wenigstens eines Pulses z.B. über eine Cloud-Lösung gemäß Abb. 63 gekoppelt sind. Durch Mittel zum Vergleichen, die auch in der Cloud oder den Mitteln zum Erkennen 56 enthalten sein können, werden die graphisch dargestellten Frequenzverhalten der Ersatzschaltbilder mit den graphisch dargestellten Frequenzverhalten des wenigstens einen Elements des Gliederfüßers 12 verglichen und Ähnlichkeiten graphischer Muster bestimmt. Die Auswahlmittel 62 zum Auswählen des wenigstens einen elektronischen Ersatzschaltbilds, das zu dem wenigstens einen Element aus der Gruppe umfassend den sensorischen Anhang 16 und die sensorische Eigenschaft des Gliederfüßers 12 äquivalent ist, entscheiden dann anhand der bestimmten Ähnlichkeit.

Auch hier kann eine Verifizierung 60 als auch der Vergleich in einem Nyquist-Diagramm erfolgen.

Während eine Trendanalyse in Abb. 62 über den Microcontroller oder PC erfolgt, kann dies in der Praxis gemäß Abb. 63 auch Cloud-basiert erfolgen. Die Signale werden in beiden Fällen einer Anpassung unterzogen und der Signalgenerator entsprechend angesteuert. In Abb. 63 wird ein Mobiltelefon 50 al Signalgenerator eingesetzt.

Bezugszeichenliste

| | |
|---|---|
| 10 | elektromagnetische Strahlung |
| 12 | Gliederfüßer |
| 14 | Sender |
| 16 | sensorischer Anhang |
| 18 | Charakteristik |
| 22 | Trägersignal |
| 24 | Multi-Frequenz-Pattern-Generator |
| 26 | Modulator |
| 28 | Verstärker |
| 30 | Oszillator |
| 32 | Antenne |
| 34 | Mittel |
| 36 | Mittel |
| 40 | Mittel zum Aussenden |
| 42 | Mittel zum Erfassen |
| 44 | Mittel zum Ermitteln |
| 46 | Rechenmittel |
| 48 | Normierungsmittel |
| 50 | Mobiltelefon |
| 52 | Mittel zum Bestimmen RC-Glied |
| 54 | Mittel zum Erkennen und graphischen Darstellen |
| 56 | Vergleichsmittel |
| 58 | Anpassung |
| 60 | Verifizierung |
| 62 | Auswahlmittel |
| 100 | Vorrichtung |

**Patentansprüche**

1. Verfahren zum Beeinflussen von Gliederfüßern (12) mittels elektromagnetischer Strahlung (10), wobei von wenigstens einem Sender (14) elektromagnetische Strahlung (10) mit einer Charakteristik abgestrahlt wird, **dadurch gekennzeichnet, dass** die Charakteristik (18) der elektromagnetischen Strahlung (10) mit Hilfe wenigstens eines äquivalenten elektronischen Ersatzschaltbildes ermittelt wird, wobei das Ersatzschaltbild ein Modell wenigstens eines sensorischen Anhangs (16) und/oder wenigstens einer sensorischen Eigenschaft eines Gliederfüßers ist.

2. Verfahren nach Anspruch 1, **gekennzeichnet durch** die Schritte:

   - Aussenden wenigstens eines Pulses,
   - Erfassen des Frequenzspektrums des ausgesandten Pulses,
   - Ermitteln wenigstens eines Frequenzanteils des Frequenzspektrums des ausgesandten Pulses und Umrechnen des Frequenzanteils in eine Einschwingzeit,
   - Bestimmen wenigstens eines Elements aus der Gruppe umfassend den sensorischen Anhang (16) und die sensorische Eigenschaft des Gliederfüßers (12),
   - Auswählen des wenigstens einen elektronischen Ersatzschaltbilds, das zu dem wenigstens einen bestimmten Element aus der Gruppe umfassend den sensorischen Anhang (16) und die sensorische Eigenschaft des Gliederfüßers (12) äquivalent ist und das wenigstens ein unbekanntes RC-Glied aufweist mit einem Widerstand R von $0 \leq R$ und einer Kapazität C von $0 \leq C$,
   - Bestimmen des wenigstens einen unbekannten RC-Glieds anhand der mit den Zeitkonstanten des RC-Glieds korrespondierenden Einschwingzeit, die aus dem Frequenzanteil des Frequenzspektrums des ausgesandten Pulses umgerechnet ist, als wenigstens ein nun bekanntes RC-Glied,
   - Ermitteln wenigstens eines für die Beeinflussung des Gliederfüßers (12) signifikanten RC-Glieds, wobei dazu vorzugsweise die Spannungsamplitude in Abhängigkeit der wenigstens einen Einschwingzeit, die mit dem bekannten RC-Glied bestimmt ist, normiert wird, vorzugsweise mittels einer DRT-Analyse normiert wird, und anhand der normierten Spannungsamplitude ermittelt wird.

3. Verfahren nach Anspruch 2, **dadurch gekennzeichnet, dass** der zeitliche Verlauf des Pulses wenigstens einen positiven und/oder negativen Trichelpuls aufweist.

4. Verfahren nach Anspruch 2 oder 3, **gekennzeichnet durch** den Schritt eines Anlernens des Gliederfüßers (12) durch Variation der Zeitkonstanten des wenigstens einen signifikanten RC-Glieds.

5. Verfahren nach einem der vorhergehenden Ansprüche, **gekennzeichnet durch** die Schritte:

   - Bestimmen wenigstens eines Elements aus der Gruppe umfassend den sensorischen Anhang (16) und die sensorische Eigenschaft des Gliederfüßers (12),
   - Erkennen und graphisches Darstellen eines Frequenzverhaltens des wenigstens einen Elements aus der Gruppe umfassend den sensorischen Anhang (16) und die sensorische Eigenschaft des Gliederfüßers (12) bei Aussenden wenigstens eines Pulses,
   - Erkennen und graphisches Darstellen eines Frequenzverhaltens von Ersatzschaltbildern beim Aussenden wenigstens eines Pulses,
   - Vergleichen der graphisch dargestellten Frequenzverhalten der Ersatzschaltbilder mit den graphisch dargestellten Frequenzverhalten des wenigstens einen Elements aus der Gruppe umfassend den sensorischen Anhang (16) und die sensorische Eigenschaft des Gliederfüßers (12) und Bestimmen einer Ähnlichkeit graphischer Muster,
   - Auswählen des wenigstens einen elektronischen Ersatzschaltbilds, das zu dem wenigstens einen Element aus der Gruppe umfassend den sensorischen Anhang (16) und die sensorische Eigenschaft des Gliederfüßers (12) äquivalent ist, anhand der bestimmten Ähnlichkeit,
   - wobei vorzugsweise die graphische Darstellung in einem Nyquist-Diagramm erfolgt.

6. Verfahren nach einem der vorhergehenden Ansprüche, **dadurch gekennzeichnet, dass** dem Modell wenigstens einer der folgenden physikalischen und/oder biochemischen Effekte der sensorischen Anhänge (16) und/oder sensorischen Eigenschaften des Gliederfüßers (12) zugordnet wird:

   - ein Modell einer Bürstenelektrode, die ein Modell der Antennen des Gliederfüßers ist,
   - ein Modell einer porösen Elektrode, die ein Modell der porösen Sensillenhaare des Gliederfüßer ist,
   - ein Modell der allgemeinen Diffusion, die die Ionendiffusion beschreibt,
   - ein Modell der Diffusion einer nicht-permeablen Wand (NPW),
   - ein Modell der Diffusion eines idealen Reservoirs,
   - ein Modell zur Berechnung des Tortuositätsfaktors aus tomographischen Daten der Oberfläche und/oder der inneren Struktur des Gliederfüßers,
   - ein Modell zur Berechnung des Tortuositätsfaktors aus topographischen Daten der Oberfläche und/oder der inneren Struktur des Gliederfüßers.

7. Verfahren nach einem der vorhergehenden Ansprüche, **dadurch gekennzeichnet, dass** zur Bestimmung des wenigstens einen RC-Glieds des Ersatzschaltbildes wenigstens ein Transmission-Line-Modell (20) verwendet wird, das vorzugsweise in wenigstens eines der folgenden Transmission-Line-Modelle unterteilt wird:

   - Transmission-Line-Modell für eine poröse Elektrode,
   - Transmission-Line-Modell für poröses Material,
   - Transmission-Line-Modell für allgemeine Diffusion,
   - Transmission-Line-Modell für Diffusion in nicht-permeable Wände und ein ideales Reservoir.

8. Verfahren nach einem der vorhergehenden Ansprüche, **dadurch gekennzeichnet, dass** mehrere Ersatzschaltbilder hintereinander geschaltet werden.

9. Verfahren nach einem der vorhergehenden Ansprüche, **dadurch gekennzeichnet, dass** mit Hilfe des elektronischen Ersatzschaltbildes wenigstens ein Impedanzspektrum ermittelt wird, das vorzugsweise mit Hilfe von tomographischen und/oder topographischen Daten des Gliederfüßers (12) ermittelt wird.

10. Verfahren nach einem der Ansprüche 7 bis 9, **dadurch gekennzeichnet, dass** wenigstens eine Differenzialgleichung des Transmission-Line-Modells (20) zur Bestimmung von weiteren Parametern für die Charakteristik (18) der elektromagnetischen Strahlung (10) gelöst wird und/oder das verwendete Transmission-Line-Modell (20) mit Hilfe wenigstens eines anderen Transmission-Line-Modells und/oder eines vereinfachten Ersatzschaltbilds verifiziert und/oder angepasst wird.

11. Verfahren nach einem der vorhergehenden Ansprüche, **dadurch gekennzeichnet, dass** durch ein Substitutionsverfahren in Kombination mit wenigstens einer Datenbank beliebige nichtlineare Funktionen modelliert werden.

12. Verfahren nach einem der vorhergehenden Ansprüche, **dadurch gekennzeichnet, dass** zur speichereffizienten Nutzung des Verfahrens auf Basis eines Mikrokontrollers wenigstens eine Diskrete Fourier-Transformation (DFT) unter Einbindung eines Goertzel-Algorithmus verwendet wird.

13. Verfahren nach einem der Ansprüche 10 bis 12, **dadurch gekennzeichnet, dass** die Lösung der Differenzialgleichung mittels eines auf wenigstens einem Referenzmodell basierenden Regelungssystem (50) überprüft und/oder angepasst wird, wobei das Referenzmodell vorzugsweise aus empirischen Daten und/oder aus Daten eines bereits ermittelten Modells ermittelt wird.

14. Verfahren nach einem der vorhergehenden Ansprüche, **dadurch gekennzeichnet, dass** die Charakteristik (18) der elektromagnetischen Strahlung (10) wenigstens eines der folgenden Merkmale aufweist:

   - die Charakteristik (18) wird mit wenigstens einem Trägersignal (22) oder wenigstens einem Dithersignal oder mit wenigstens einem Trägersignal (22) moduliert, das zusätzlich mit wenigstens einem Dithersignal moduliert wird,
   - die Charakteristik (18) wird mit einem kombinierten Multi-Frequenz-Pattern-Generator (24), welcher auf einem Frequenz-Division-Multiplexing-Signal (FDM) und einem Time-Division-Multiplexing-Signal (TDM) basiert, erzeugt und weist wenigstens einen Burstimpuls auf, welcher wenigstens eine Corona-Entladung in der Luft simuliert und dessen zeitlicher Verlauf wenigstens einen positiven und/oder negativen Trichelpuls aufweist,
   - , die Charakteristik (18) weist keine harmonischen und/oder subharmonischen Beziehungen auf und/oder ist Primzahl basierend ist und/oder weist keine ganzzahlige harmonische und/oder subharmonische Vielfache oder Teile auf.

15. Vorrichtung (100) zum Beeinflussen von Gliederfüßern (12) mittels elektromagnetischer Strahlung (10), wobei die Vorrichtung (100) wenigstens ein Sender (14) aufweist, welcher die elektromagnetische Strahlung (10) mit einer Charakteristik abstrahlt, **dadurch gekennzeichnet, dass** als Mittel zur Ermittlung der Charakteristik (18) der elektromagnetischen Strahlung (10) wenigstens ein äquivalentes elektronisches Ersatzschaltbild vorgesehen ist, wobei das Ersatzschaltbild ein Modell wenigstens eines sensorischen Anhangs (16) und/oder wenigstens einer sensorischen Eigenschaft eines Gliederfüßers ist.

16. Vorrichtung nach Anspruch 15, **dadurch gekennzeichnet, dass** sie aufweist:

   - Mittel zum Aussenden (40) wenigstens eines Pulses,
   - Mittel zum Erfassen (42) des Frequenzspektrums des ausgesandten Pulses,
   - Mittel zum Ermitteln (44) wenigstens eines Frequenzanteils des Frequenzspektrums des ausgesandten Pulses und Rechenmittel (46) zum Umrechnen des Frequenzanteils in eine Einschwingzeit,
   - Mittel zum Bestimmen wenigstens eines Elements aus der Gruppe umfassend den sensorischen Anhang (16) und die sensorische Eigenschaft des Gliederfüßers (12),
   - Auswahlmittel (50) zum Auswählen des wenigstens einen elektronischen Ersatzschaltbilds, das zu dem wenigstens einen bestimmten Element aus der Gruppe umfassend den sensorischen Anhang (16) und die sensorische Eigenschaft des Gliederfüßers (12) äquivalent ist und das wenigstens ein unbekanntes RC-Glied aufweist mit einem Widerstand R von $0 \leq R$ und einer Kapazität C von $0 \leq C$,
   - Mittel zum Bestimmen (52) des wenigstens einen unbekannten RC-Glieds anhand der mit den Zeitkonstanten des RC-Glieds korrespondierenden Einschwingzeit, die aus dem Frequenzanteil des Frequenzspektrums des ausgesandten Pulses umgerechnet ist, als wenigstens ein nun bekanntes RC-Glied,
   - Mittel zum Ermitteln wenigstens eines für die Beeinflussung des Gliederfüßers (12) signifikanten RC-Glieds, wobei die Mittel zum Ermitteln des wenigstens einen signifikanten RC-Glieds vorzugsweise Normierungsmittel (48) der Spannungsamplitude in Abhängigkeit der wenigstens einen Einschwingzeit umfassen, die mit dem bekannten RC-Glied bestimmt ist.

17. Vorrichtung nach Anspruch 16, **dadurch gekennzeichnet, dass** das Mittel zum Aussenden des Pulses (40) dazu eingerichtet ist, wenigstens einen positiven und/oder negativen Trichelpuls auszusenden.

**18.** Vorrichtung nach einem der Ansprüche 15 bis 17, **dadurch gekennzeichnet, dass** sie ferner aufweist:

- Mittel zum Bestimmen wenigstens eines Elements aus der Gruppe umfassend den sensorischen Anhang (16) und die sensorische Eigenschaft des Gliederfüßers (12),
- Mittel zum Erkennen und Mittel zum graphischen Darstellen eines Frequenzverhaltens des wenigstens einen Elements aus der Gruppe umfassend den sensorischen Anhang (16) und die sensorische Eigenschaft des Gliederfüßers (12) bei Aussenden wenigstens eines Pulses,
- Mittel zum Erkennen und Mittel zum graphischen Darstellen (54) eines Frequenzverhaltens von Ersatzschaltbildern bei Aussenden wenigstens eines Pulses,
- Mittel zum Vergleichen (56) der graphisch dargestellten Frequenzverhalten der Ersatzschaltbilder mit den graphisch dargestellten Frequenzverhalten des wenigstens einen Elements aus der Gruppe umfassend den sensorischen Anhang (16) und die sensorische Eigenschaft des Gliederfüßers (12) und zum Bestimmen einer Ähnlichkeit graphischer Muster,
- Auswahlmittel zum Auswählen des wenigstens einen elektronischen Ersatzschaltbilds, das zu dem wenigstens einen Element aus der Gruppe umfassend den sensorischen Anhang (16) und die sensorische Eigenschaft des Gliederfüßers (12) äquivalent ist, anhand der bestimmten Ähnlichkeit,
- wobei vorzugsweise die Mittel zum graphischen Darstellen dazu eingerichtet sind, die graphische Darstellung in einem Nyquist-Diagramm vorzunehmen.

**19.** Vorrichtung nach einem der Ansprüche 15 bis 18, **dadurch gekennzeichnet, dass** ein kombinierter Multi-Frequenz-Pattern-Generator (24) vorgesehen ist, welcher auf einem Frequenz-Division-Multiplexing-Signal (FDM) und einem Time-Division-Multiplexing-Signal (TDM) basiert, der die Charakteristik (18) der elektromagnetischen Strahlung (10) erzeugt.

**20.** Vorrichtung nach einem der Ansprüche 15 bis 19, **dadurch gekennzeichnet, dass** die Charakteristik (18) wenigstens einen Burstimpuls aufweist, welcher wenigstens eine Corona-Entladung in der Luft simuliert und dessen zeitlicher Verlauf wenigstens einen positiven und/oder negativen Trichelpuls aufweist.

**Claims**

**1.** A method for influencing arthropods (12) by means of electromagnetic radiation (10), wherein electromagnetic radiation (10) with a characteristic is radiated by at least one transmitter (14), **characterized in that** the characteristic (18) of the electromagnetic radiation (10) is determined with the aid of at least one equivalent electronic circuit, wherein the equivalent circuit is a model of at least one sensory appendage (16) and/or at least one sensory property of an arthropod.

**2.** A method according to claim 1, **characterized by** the following steps:

- transmitting at least one pulse,
- detecting the frequency spectrum of the transmitted pulse,
- determining at least one frequency component of the frequency spectrum of the transmitted pulse and converting the frequency component into a settling time,
- determining at least one element from the group comprising the sensory appendage (16) and the sensory property of the arthropod (12),
- selecting the at least one electronic equivalent circuit that is equivalent to the at least one determined element from the group comprising the sensory appendage (16) and the sensory property of the arthropod (12) and that has at least one unknown RC element with a resistance R of $0 \leq R$ and a capacitance C of $0 \leq C$,
- determining the at least one unknown RC element on the basis of the settling time, calculated from the frequency component of the frequency spectrum of the transmitted pulse, corresponding with the time constants of the RC element, as at least one now known RC element,
- determining at least one RC element significant for influencing the arthropod (12), wherein therefor preferably the voltage amplitude is normalized depending on the at least one settling time determined with the known RC element, preferably is normalized by means of a DRT analysis, and is determined on the basis of the normalized voltage amplitude.

**3.** A method according to claim 2, **characterized in that** the time progression of the pulse has at least one positive and/or negative Trichel pulse.

**4.** A method according to claim 2 or 3, **characterized by** the step of training the arthropod (12) by varying the time constants of the at least one significant RC element.

**5.** A method according to one of the preceding claims, **characterized by** the following steps:

- determining at least one element from the group comprising the sensory appendage (16) and the sensory property of the arthropod (12),
- identifying and graphically representing a frequency behavior of the at least one element from the group comprising the sensory appendage (16) and the sensory property of the arthropod (12) when transmitting at least one pulse,
- identifying and graphically representing a frequency behavior of equivalent circuits when transmitting at least one pulse,
- comparing the graphically represented frequency behavior of the equivalent circuits with the graphically represented frequency behavior of the at least one element from the group comprising the sensory appendage (16) and the sensory property of the arthropod (12) and determining a similarity of graphical patterns,
- selecting the at least one electronic equivalent circuit that is equivalent to the at least one element from the group comprising the sensory appendage (16) and the sensory property of the arthropod (12) on the basis of the determined similarity,
- wherein preferably the graphical representation is provided in a Nyquist plot.

**6.** A method according to one of the preceding claims, **characterized in that** the model is associated with at least one of the following physical and/or biochemical effects of the sensory appendages (16) and/or sensory properties of the arthropod (12):

- a model of a brush electrode, which is a model of the antennae of the arthropod,
- a model of a porous electrode, which is a model of the porous sensilla hairs of the arthropod,
- a model of general diffusion, which describes the ion diffusion,
- a model of the diffusion of a non-permeable wall (NPW),
- a model of the diffusion of an ideal reservoir,
- a model for calculating the tortuosity factor from tomographic data of the surface and/or the inner structure of the arthropod,
- a model for calculating the tortuosity factor from topographic data of the surface and/or the inner structure of the arthropod.

**7.** A method according to one of the preceding claims, **characterized in that** to determine the at least one RC element of the equivalent circuit at least one transmission line model (20) is used, which is preferably is divided into at least one of the following transmission line models:

- transmission line model for a porous electrode,
- transmission line model for porous material,
- transmission line model for general diffusion,
- transmission line model for diffusion in non-permeable walls and an ideal reservoir.

**8.** A method according to one of the preceding claims, **characterized in that** a plurality of equivalent circuits are connected in series.

**9.** A method according to one of the preceding claims, **characterized in that** at least one impedance spectrum is determined with the aid of the electronic equivalent circuit, which is preferably determined with the aid of tomographic and/or topographic data of the arthropod (12).

**10.** A method according to one of claims 7 to 9, **characterized in that** at least one differential equation of the transmission line model (20) is solved to determine further parameters for the characteristic (18) of the electromagnetic radiation (10) and/or the used transmission line model (20) is verified and/or adapted with the aid of at least one other transmission line model and/or a simplified equivalent circuit.

**11.** A method according to one of the preceding claims, **characterized in that** arbitrary nonlinear functions are modeled by a substitution method in combination with at least one database.

**12.** A method according to one of the preceding claims, **characterized in that** at least one discrete Fourier transform (DFT) with incorporation of a Goertzel algorithm is used for storage-efficient use of the method on the basis of a microcontroller.

**13.** A method according to one of claims 10 to 12, **characterized in that** the solving of the differential equation by means of a control system (50) based on at least one reference model is checked and/or adapted, wherein the reference model is preferably determined from empirical data and/or from data of an already determined model.

**14.** A method according to one of the preceding claims, **characterized in that** the characteristic (18) of the electromagnetic radiation (10) comprises at least one of the following features:

- the characteristic (18) is modulated with at least one carrier signal (22) or at least one dither signal or with at least one carrier signal (22) which is additionally modulated with at least one dither signal,
- the characteristic (18) is generated with a combined multi-frequency pattern generator (24), which is based on a frequency division multiplexing signal (FDM) and a time division multiplexing signal (TDM) and has at least one burst pulse which simulates at least one corona discharge in the air and the time progression of which has at least one positive and/or negative Trichel pulse,
- the characteristic (18) does not have any harmonic and/or subharmonic correlations and/or is prime-number-based and/or does not have any integer harmonic and/or subharmonic multiples or factors.

**15.** A device (100) for influencing arthropods (12) by means of electromagnetic radiation (10), wherein the device (100) has at least one transmitter (14), which radiates the electromagnetic radiation (10) with a characteristic, **characterized in that** at least one equivalent electronic circuit is provided as means for determining the characteristic (18) of the electromagnetic radiation (10), wherein the equivalent circuit is a model of at least one sensory appendage (16) and/or at least one sensory property of an arthropod.

**16.** A device according to claim 15, **characterized in that** it has:

- means (40) for transmitting at least one pulse,
- means (42) for detecting the frequency spectrum of the transmitted pulse,
- means (44) for determining at least one frequency component of the frequency spectrum of the transmitted pulse and computing means (46) for converting the frequency component into a settling time,
- means for determining at least one element from the group comprising the sensory appendage (16) and the sensory property of the arthropod (12),
- selection means (50) for selecting the at least one electronic equivalent circuit that is equivalent to the at least one determined element from the group comprising the sensory appendage (16) and the sensory property of the arthropod (12) and that comprises at least one unknown RC element with a resistance R of $0 \leq R$ and a capacitance C of $0 \leq C$,
- means (52) for determining the at least one unknown RC element on the basis of the settling time, calculated from the frequency component of the frequency spectrum of the transmitted pulse, corresponding with the time constants of the RC element as at least one now known RC element,
- means for determining at least one RC element, significant for influencing the arthropod (12), wherein the means for determining the at least one significant RC element comprise preferably normalization means (48) for normalizing the voltage amplitude depending on the at least one settling time determined with the known RC element.

**17.** A device according to claim 16, **characterized in that** the means (40) for transmitting the pulse is arranged to transmit at least one positive and/or negative Trichel pulse.

**18.** A device according to one of the claims 15 to 17, **characterized in that** it further comprises:

- means for determining at least one element from the group comprising the sensory appendage (16) and the sensory property of the arthropod (12),
- means for identifying and means for graphically representing a frequency behavior of the at least one element from the group comprising the sensory appendage (16) and the sensory property of the arthropod (12) when transmitting at least one pulse,
- means for identifying and means for graphically representing (54) a frequency behavior of equivalent circuits when transmitting at least one pulse,
- means (56) for comparing the graphically represented frequency behavior of the equivalent circuits with the graphically represented frequency behavior of the at least one element from the group comprising the sensory appendage (16) and the sensory property of the arthropod (12) and for determining a similarity of graphical patterns,
- selection means for selecting the at least one electronic equivalent circuit that is equivalent to the at least one element from the group comprising the sensory appendage (16) and the sensory property of the arthropod (12) on the basis of the determined similarity,
- wherein preferably the graphical representation means are configured to provide the graphical representation in a Nyquist plot.

**19.** A device according to one of claims 15 to 18, **characterized in that** a combined multi-frequency pattern generator (24) which is based on a frequency division multiplexing signal (FDM) and a time division multiplexing signal (TDM) is provided and generates the characteristic (18) of the electromagnetic radiation (10).

**20.** A device according to one of claims 15 to 19, **characterized in that** the characteristic (18) has at least one burst pulse, which simulates at least one corona discharge in the air and the time progression of which has at least one positive and/or negative Trichel pulse.

**Revendications**

**1.** Procédé pour influencer des arthropodes (12) au moyen d'un rayonnement électromagnétique (10), dans lequel un rayon électromagnétique (10) avec une caractéristique est émis par au moins un émetteur (14), **caractérisé en ce que** la caractéristique (18) du rayonnement électromagnétique (10) est déterminée à l'aide d'au moins un schéma de circuit équivalent, ce schéma de circuit équivalent étant un modèle d'au moins un appendice sensoriel (16) et/ou d'au moins une propriété sensorielle d'un arthropode.

**2.** Procédé selon la revendication 1, **caractérisé par** les étapes suivantes :

- émission d'au moins une impulsion,
- capture du spectre de fréquences de l'impulsion émise,
- détermination d'au moins une fraction de fréquences du spectre de fréquences de l'impulsion émise et calcul de la fraction de fréquences dans une période de stabilisation,
- détermination d'au moins un élément du groupe comprenant l'appendice sensoriel (16) et la propriété sensorielle de l'arthropode (12),
- sélection du ou des schéma(s) de circuit(s) équivalent(s) qui est/sont équivalent(s) à l'élément ou aux éléments déterminé(s) du groupe comprenant l'appendice sensoriel (16) et la propriété sensorielle de l'arthropode (12) et qui présente au moins un membre RC inconnu avec une résistance R supérieure ou égale à 0 et une capacité C supérieure ou égale à 0,
- détermination du ou des membre(s) RC inconnu(s) à l'aide de la période de stabilisation correspondant à la constante de temps du membre RC et qui est calculée à partir de la fraction de fréquences du spectre de fréquences de l'impulsion émise, en tant que membre(s) RC connu(s) maintenant,
- détermination d'au moins un membre RC significatif pour influencer l'arthropode (12), l'amplitude de tension étant pour cela de préférence mise à l'échelle en fonction d'au moins la ou les période(s) de stabilisation qui est/sont déterminée(s) avec le membre RC connu, de préférence mise à l'échelle au moyen d'une analyse DRT, et est déterminée à l'aide de l'amplitude de tension mise à l'échelle.

**3.** Procédé selon la revendication 2, **caractérisé en ce que** l'évolution dans le temps de l'impulsion présente une impulsion de Trichel positive et/ou négative.

**4.** Procédé selon la revendication 2 ou 3, **caractérisé par** l'étape d'entraînement de l'arthropode (12) par variation des constantes de temps du ou des membre(s) RC significatif(s).

**5.** Procédé selon l'une des revendications précédentes, **caractérisé par** les étapes suivantes :

- détermination d'au moins un élément du groupe comprenant l'appendice sensoriel (16) et la propriété sensorielle de l'arthropode (12),
- reconnaissance et représentation graphique d'une réponse en fréquence d'un ou de plusieurs éléments du groupe comprenant l'appendice sensoriel (16) et la propriété sensorielle de l'arthropode (12) lors de l'émission d'au moins une impulsion,
- comparaison et représentation graphique d'une réponse en fréquence de schémas de circuit équivalents lors de l'émission d'au moins une impulsion,
- comparaison des réponses en fréquence représentées graphiquement des schémas de circuit équivalents avec les réponses en fréquence représentées graphiquement du ou des élément(s) du groupe comprenant l'appendice sensoriel (16) et la propriété sensorielle de l'arthropode (12) et détermination d'un modèle graphique de similitude,
- sélection du ou des schéma(s) de circuit équivalent(s) qui est/sont équivalent(s) à ou aux élément(s) du groupe comprenant l'appendice sensoriel (16) et la propriété sensorielle de l'arthropode (12), à l'aide de la similitude déterminée,
- dans lequel la représentation graphique s'effectue de préférence dans un diagramme de Nyquist.

6. Procédé selon l'une ou plusieurs des revendications précédentes, **caractérisé en ce qu'**on associe au modèle au moins l'un des effets suivants physiques et/ou biochimiques des appendices sensoriels (16) et/ou des propriétés sensorielles de l'arthropode (12) :

- un modèle d'une électrode à brosse, qui est un modèle des antennes de l'arthropode,
- un modèle d'une électrode poreuse, qui est un modèle des poils sensoriels de l'arthropode,
- un modèle de la diffusion générale, qui décrit la diffusion ionique,
- un modèle de la diffusion d'une paroi non perméable (PNP),
- un modèle de la diffusion d'un réservoir idéal,
- un modèle de calcul du facteur de tortuosité à partir de données tomographiques de la surface et/ou de la structure interne de l'arthropode,
- un modèle de calcul du facteur de tortuosité à partir de données topographiques de la surface et/ou de la structure interne de l'arthropode.

7. Procédé selon l'une des revendications précédentes, **caractérisé en ce que**, pour la détermination du ou des membre(s) RC du schéma de circuit équivalent, au moins un modèle de transmission de ligne (20) est utilisé, lequel est subdivisé de préférence en au moins l'un des modèles de transmission de ligne suivants :

- modèle de transmission de ligne pour une électrode poreuse,
- modèle de transmission de ligne pour un matériau poreux,
- modèle de transmission de ligne pour une diffusion générale,
- modèle de de transmission de ligne pour une diffusion dans des parois non-perméables et dans un réservoir idéal.

8. Procédé selon l'une ou plusieurs des revendications précédentes, **caractérisé en ce que** que plusieurs schémas de circuit équivalents sont connectés en série.

9. Procédé selon l'une des revendications précédentes, **caractérisé en ce qu'**à l'aide du schéma de circuit équivalent, au moins un spectre d'impédance est déterminé, lequel est déterminé de préférence à l'aide de données tomographiques et/ou topographiques de l'arthropode (12).

10. Procédé selon l'une des revendications 7 à 9, **caractérisé en ce qu'**au moins une équation différentielle du modèle de transmission de ligne (20) est résolue pour la détermination d'autres paramètres pour la caractéristique (18) du rayonnement électromagnétique (10) et/ou le modèle de transmission de ligne (20) utilisé est vérifié et/ou adapté à l'aide d'au moins un autre modèle de transmission de ligne et/ou d'un schéma de circuit équivalent simplifié.

11. Procédé selon l'une des revendications précédentes, **caractérisé en ce que**, grâce à un procédé de substitution en combinaison avec au moins une banque de données, n'importe quelle fonction non linéaire est modélisée.

12. Procédé selon l'une des revendications précédentes, **caractérisé en ce que**, pour l'utilisation avec un stockage efficace du procédé sur la base d'un microcontrôleur, au moins une transformation de Fourier discrète (DFT) est utilisée avec intégration d'un algorithme de Goertzel.

**13.** Procédé selon l'une des revendications 10 à 12, **caractérisé en ce que** la résolution de l'équation différentielle est vérifiée et/ou adaptée au moyen d'un système de réglage (50) basé sur au moins un modèle de référence, ce modèle de référence étant déterminé de préférence à partir de données empiriques et/ou de données d'un modèle déjà déterminé.

**14.** Procédé selon l'une des revendications précédentes, **caractérisé en ce que** la caractéristique (18) du rayonnement électromagnétique (10) présente au moins l'une des caractéristiques suivantes :

- la caractéristique (18) est modulée avec au moins un signal porteur (22) ou au moins un signal de Dither ou avec au moins un signal porteur (22) qui est en outre modulé avec au moins un signal de Dither,
- la caractéristique (18) est produite avec un générateur de motifs multifréquence (24) combiné, lequel est basé sur un signal de multiplexage de division de fréquence (FDM) et un signal de multiplexage temporel (TDM) et présente au moins un signal du type Burst qui simule au moins une décharge corona dans l'atmosphère et dont l'évolution dans le temps présente au moins une impulsion de Trichel positive et/ou négative,
- la caractéristique (18) ne présente aucune relation harmonique et/ou sous-harmonique et/ou est basée sur un nombre primaire et/ou ne présente aucune multiplicité ou partie harmonique et/ou sous-harmonique de nombre entier.

**15.** Dispositif (100) pour influencer des arthropodes (12) au moyen d'un rayonnement électromagnétique (10), dans lequel le dispositif (100) présente au moins un émetteur (14) qui envoie le rayonnement électromagnétique (10) avec une caractéristique, **caractérisé en ce qu'**il est prévu comme moyen pour la détermination de la caractéristique (18) du rayonnement électromagnétique (10) au moins un schéma de circuit équivalent, ce schéma de circuit équivalent étant au moins un modèle d'au moins un appendice sensoriel (16) et/ou au moins une propriété sensorielle d'un arthropode.

**16.** Dispositif selon la revendication 15, **caractérisé en ce qu'**il présente :

- des moyens (40) d'émission d'au moins une impulsion,
- des moyens (42) de capture du spectre de fréquences de l'impulsion émise,
- des moyens (44) de détermination d'au moins une fraction de fréquences du spectre de fréquences de l'impulsion émise et des moyens de calcul (46) pour calculer la fraction de fréquences dans une période de stabilisation,
- des moyens de détermination d'au moins un élément du groupe comprenant l'appendice sensoriel (16) et la propriété sensorielle de l'arthropode (12),
- des moyens de sélection (50) pour la sélection du ou des schéma(s) de circuit(s) équivalent(s), qui est/sont équivalente(s) à ou aux élément(s) déterminé(s) du groupe comprenant l'appendice sensoriel (16) et la propriété sensorielle de l'arthropode (12) et qui présente(nt) au moins un membre RC inconnu avec une résistance R supérieure ou égale à 0 et une capacité C supérieure ou égale à 0,
- des moyens de détermination (52) du ou des membre(s) RC inconnu(s) à l'aide de la période de stabilisation correspondant à la constante de temps du membre RC et qui est calculée à partir de la fraction de fréquences du spectre de fréquences de l'impulsion émise, en tant que membre(s) RC maintenant connu(s),
- des moyens de détermination d'au moins un membre RC significatif pour influencer l'arthropode (12), les moyens de détermination du ou des membre(s) RC significatifs) comprenant de préférence des moyens de mise à l'échelle (48) de l'amplitude de tension en fonction d'au moins une période de stabilisation, laquelle est déterminée avec le membre RC connu.

**17.** Dispositif selon la revendication 16, **caractérisé en ce que** le moyen pour l'émission de l'impulsion (40) est équipé pour émettre au moins une impulsion de Trichel positive et/ou négative.

**18.** Dispositif selon l'une des revendications 15 à 17, **caractérisé en ce qu'**il comprend en outre :

- des moyens de détermination d'au moins un élément du groupe comprenant l'appendice sensoriel (16) et la propriété sensorielle de l'arthropode (12),
- des moyens de reconnaissance et des moyens de représentation graphique d'une réponse en fréquence d'au moins un élément du groupe comprenant l'appendice sensoriel (16) et la propriété sensorielle de l'arthropode (12) lors de l'émission d'au moins une impulsion,
- des moyens de reconnaissance et des moyens de représentation graphique (54) d'une réponse en fréquence du schéma de circuit équivalent lors de l'émission d'au moins une impulsion,

- des moyens de comparaison (56) de la réponse en fréquence représentée graphiquement des schémas de circuit équivalents avec la réponse en fréquence représentée du ou des éléments du groupe comprenant l'appendice sensoriel (16) et la propriété sensorielle de l'arthropode (12) et de détermination d'un modèle graphique de similitude,
- des moyens de sélection pour la sélection du ou des schéma(s) de circuit équivalent(s), qui est/sont équivalent(s) au ou auxdits élément(s) du groupe comprenant l'appendice sensoriel (16) et la propriété sensorielle de l'arthropode (12), à l'aide de la similitude déterminée,
- dans lequel de préférence les moyens pour la représentation graphique sont équipés pour réaliser la représentation graphique dans un diagramme de Nyquist.

19. Dispositif selon l'une des revendications 15 à 18, **caractérisé en ce qu'**est prévu un générateur de motifs multifréquence combiné (24) qui est basé sur un signal de multiplexage de division de fréquence (FDM) et un signal de multiplexage temporel (TDM) qui produit la caractéristique (18) du rayonnement électromagnétique (10).

20. Dispositif selon l'une des revendications 15 à 19, **caractérisé en ce que** la caractéristique (18) présente au moins un signal du type Burst, lequel simule au moins une décharge corona dans l'espace et dont l'évolution dans le temps présente au moins une impulsion de Trichel positive et/ou négative.

Abb. 1

Abb. 2

Abb. 3

Weibliche Antenne (FA)

Weibliche Maxillar Palpe (FP)

16

16

16

16

12

Männlicher Kopf ( MH)

Gesamter Weibliche Körper (FB)

Abb. 4

FA UP 620

457

44    116

3

MH UP 171

118    6    143

FP UP 268

Abb. 5

Abb. 7

Abb. 6

Abb. 8

Abb. 9

Abb. 10

Abb. 11

Abb. 12

Abb. 13

EP 3 784 036 B1

FA= Weibliche Antenne
FP = Weibliche Palpe
MH = Männlicher Kopf
FB = Weiblicher Körper

| FA | FP | MH | FB | GR name |
|---|---|---|---|---|
| | | | | AalbGr6 |
| | | | | AalbGr64e |
| | | | | AalbGr4 |
| | | | | AalbGr7 |
| | | | | AalbGr9 |
| | | | | AalbGr10 |
| | | | | AalbGr34 |
| | | | | AalbGr2 |
| | | | | AalbGr1 |
| | | | | AalbGr45 |
| | | | | AalbGr41 |
| | | | | AalbGr64 |
| | | | | AalbGr20 |
| | | | | AalbGr76 |
| | | | | AalbGr3 |
| | | | | AalbGr53 |
| | | | | AalbGr73 |
| | | | | AalbGr11 |
| | | | | AalbGr14 |
| | | | | AalbGr25 |
| | | | | AalbGr26 |
| | | | | AalbGr23 |
| | | | | AalbGr46 |
| | | | | AalbGr61 |
| | | | | AalbGr61-N1 |
| | | | | AalbGr71 |
| | | | | AalbGr78 |
| | | | | AalbGr58 |
| | | | | AalbGr35 |
| | | | | AalbGr63 |

TPM

0    5  300

Abb. 14

Abb. 15

EP 3 784 036 B1

## Antenne

Spearman $r = 0.8455$
Pearson $r = 0.8060$
$R^2 = 0.6496$
$P < 0.01$

RNA-seq (mean FC over median expression, log2)

qPCR (mean FC over median expression, log2)

## Palpe

Spearman $r = 0.7927$
Pearson $r = 0.8249$
$R^2 = 0.6804$
$P < 0.01$

RNA-seq (mean FC over median expression, log2)

qPCR (mean FC over median expression, log2)

Abb. 16

Funktionsprinzip

Gliederfüßer

Algorithmus → Frequenz-Pattern-Signal → Modulator → Leistungsendstufe → Antenne

HF-Oszillator → Modulator

Bandpass-Filter → Demodulator → Frequenz-Pattern-Sensierung

Abb. 17

Abb. 18

Abb. 19

Channel 1
Channel 2
Channel 3
Channel 4
Channel 5
Channel 6
Channel 1
Channel 2
Channel 3
Channel 4
Channel 5
etc.

Frequenz

Zeit

TDM = Zeit Division Multiplexer

Abb. 21

Channel 6
Channel 5
Channel 4
Channel 3
Channel 2
Channel 1

$f_6$
$f_5$
$f_4$
$f_3$
$f_2$
$f_1$

Frequenz

Zeit

FDM = Frequenz Division Multiplexer

Abb. 20

Spektrum eines kombinierten Basisband modulierten Signals

Abb. 22

Abb. 23

PWM Amplitude

Eingeprägtes Dither Signal

Signal Amplitude

Eingeprägtes Dither Signal

t

Abb. 24

PWM
Amplitude

PWM Signal mit Dithering

PWM Signal ohne Dithering

Abb. 25

EP 3 784 036 B1

Abb. 26

Abb. 27

EP 3 784 036 B1

Abb. 27a

Poröse Elektrode

$I_0 \rightarrow$

$\circ$ 1

$I = 0$ 2 $\rightarrow$ $\circ$

TLM

$\circ$ 1'

$\circ$ 2' $\rightarrow I_0$

Abb. 27b

Poröses Material

$I_0 \rightarrow$

$\circ$ 1

$I = 0$ 2 $\rightarrow$ $\circ$

TLM

$\circ$ 1' $\rightarrow I_0$

$\circ$ 2'

Ionen-Diffusion    Allgemeine Diffusion

$I_0 \rightarrow$

$\circ$ 1

$-I_0$ 2 $\rightarrow$ $\circ$

TLM

$\circ$ 1'

$\circ$ 2'

$\underline{Z}_{l_{el}}$

Abb. 27c

IR / NPW Diffusion

$I_0 \rightarrow$

$\circ$ 1

$-I_0$ 2 $\rightarrow$ $\circ$

TLM

$\circ$ 1'

$\circ$ 2'

Diffusion , nicht-permeable Wand (NPW)
Diffusion , ideales reservoir (IR)

Abb. 27d

$j_{electron}(x)$  $j_{surface}$  $j_{ion}(x+dx)$

$\sigma$

$\kappa$

$j_{Ion}(x)$  $j_{electron}(x+dx)$

$\Phi_{ion}(x)$  $\Phi_{electron}(x)$

$K$ : Effektive Ionische Leitfähigkeit
$\sigma$ : Effektive elektrische Leitfähigkeit
$\Phi$ : Potenzial der elektrischen und ionischen Phase
$j$ : elektrische und ionische Stromdichte

Oberfläche pro Volumen
$a = A_{Partikel} / V_{Elektrode}$

Abb. 28

EP 3 784 036 B1

$$f_1 = \frac{1}{2\pi\,\tau_1}$$

$$f_2 = \frac{1}{2\pi\,\tau_2}$$

$$f_3 = \frac{1}{2\pi\,\tau_3}$$

$$f_4 = \frac{1}{2\pi\,\tau_4}$$

$$f_n = \frac{1}{2\pi\,\tau_n}$$

$\Delta\tau_4$ $\Delta\tau_3$ $\Delta\tau_2$ $\Delta\tau_1$

$G_{R/Q}(\tau)$

$\tau/s$

$10^{-10}$ $10^{-9}$ $10^{-8}$ $10^{-7}$ $10^{-6}$ $10^{-5}$ $10^{-4}$ $10^{-3}$ $10^{-2}$ $10^{-1}$ $10^{0}$ $10^{+1}$ $10^{+2}$

Abb.29

Abb. 30a

Abb. 30b

Abb. 30c

Abb. 30d

Abb.31

Abb.32

Abb.33

Abb. 34a

Abb. 34b

Abb. 34c

Abb. 34d

Abb. 34

EP 3 784 036 B1

Abb. 35

Abb. 36

Abb. 37

Abb. 38

EP 3 784 036 B1

Abb. 39

$$t = \frac{z}{\left(\omega\frac{RC}{2}\right)^{1/2}}$$

Abb. 40

**V/E or i/I**

1.0   0   -1.0

0   1   2   3   4

**t**

Abb. 41

Abb. 42

Abb. 43

log($\tau_{R/Q}$)

log $\tau$

Abb. 44

$G(\tau)$

$G_p$

0

Abb. 45

Abb. 46

Abb. 47

EP 3 784 036 B1

Gliederfu Ber

Rezeptoren Location

FA
FP
MH
FB
......

Rezeptor

OBP
OR
IR
GR
......

Neuronales Netzwerk

Basis Biochemisc he Daten

Datensatz

Labormodell - Parameter

Transformation in Elektrochemische Ersatzschaltbildmodelle

Poröse Elektrode

Beschreibung des Elektroden Verhaltens

Materialparameter - bestimmung der porösen Elektroden

Poröses Material

Diffusion

Bürstenelektrode
..........

Transmission Line Modelle

$TLM_{FA}$
$TLM_{FP}$
$TLM_{MH}$
$TLM_{FB}$
......

Differenzial Gleichungen

Allgemeine Lösung

Randwertbedingung und physikalische Interpretation

Lösung für poröse Elektroden

Lösung für Diffusion
......

Abkürzungen und Begriffe:

ECM = Equivalent Circuit Models
FA = Weibliche Antennen
FP = Weibliche Palpe
MH = Männlicher Kopf
FB = Weiblicher Körper

OBP = Duftbindende Proteine
OR = Duftrezeptoren
IR = Inotropische Rezeptoren
GR = Geruchsrezeptoren

$TLM_{FA}$ = Transmission Line Model FA
$TLM_{FP}$ = Transmission Line Model FP
$TLM_{MH}$ = Transmission Line Model MH
$TLM_{FB}$ = Transmission Line Model FB

Abb. 48a

Abb. 48b

Topographische und Tomographische Daten des Gliederfüßer → Rezeptor Location (FA, FP, MH, FB, ......) → Rezeptor (OBP, OR, IR, GR, ......) → Selektion der Simulationsmethoden → Simulierte Impedanz der Porengeometrie → Berechnung des Tortuositätsfaktor → Bestimmung der Penetrierungstiefe des Frequenzpatter-Signals → Verwendung der Ergebnisse in Prozessschritt 2 zur Reduktion der Parameter

Selektion der Simulationsmethoden: 2D Modell e.g. KNN, 3D Modell e.g. OLAP (Offene Randwertbedingungen, Geschlossene Randwertbedingungen)

Simulierte Impedanz der Porengeometrie: 2D Modell, 3D Modell (Geschlossene Randwertbedingungen, Offene Randwertbedingungen)

Ergebnisse der topographischen und tomographischen Impedanzmodellierung basierend auf der Tau-Faktor-Analyse

Abkürzungen und Begriffe:

ECM = Equivalent Circuit Models
FA = Weibliche Antennen
FP = Weibliche Palpe
MH = Männlicher Kopf
FB = Weiblicher Körper

OBP = Odorant Binding Proteins
OR = Odorant Receptors
IR = Inotropic Receptors
GR = Gustatory Receptors

TLM$_{FA}$ = Transmission Line Model FA
TLM$_{FP}$ = Transmission Line Model FP
TLM$_{MH}$ = Transmission Line Model MH
TLM$_{FB}$ = Transmission Line Model FB

Abb. 48c

Normalisiertes Frequenzspektrum

Regel-Parameter zur Adaption des Frequenzpattern-generators

Anpassung des Referenz ECM Modells

Anpassung der extrahierten Modellparameter

Beobachtung des Verhalltens der Gliederfüßer

Hinzufügen eines neuen Referenzmodels mit den neuen Parametern in der Frequenzpattern Library

Abb. 48d

Abb. 49

Abb.50

Weibliche Antenne (FA)
= ECM einer Bürstenelektrode

Weibliche Maxillar
Palpe (FP)
= ECM einer porösen Elektrode

Männlicher Kopf
( MH)
=ECM flächige Membran

Gesamter
Weibliche Körper (FB)
= ECM flächige Membran

Abb. 51

sacculus

olfactory sensilla

// basiconic

/ trichoid

ʅ coeloconic

Axon

Dendrite

Soma

Inneres
Segment

Äußeres
Segment

Verzweigtes Cilium

Übertragungszone

Poröses
Sensillenhaar

ECM Olfaktorische Sensillenhäarchen
(Anordnung wie bei einer Bürste)  =>

ECM Verzweigtes poröses Sensillenhaar
(Verzweigtes Cilium)
mit porösen Eigenschaften
zur Weiterleitung der Signale
in das äußere und innere Segment

Abb. 52

Abb. 53

Abb. 54

ECM nach Voigt  =>

ECM nach Maxwell  =>

ECM  Ladder / Leiternetzwerk  =>

ECM  Erweitertes Leiternetzwerk  =>

ECM  Transmission Line Model  =>

Abb. 55

Abb. 56

measured
— simulated

Frame 3

Time t (μs)

Abb. 57

Abb. 58

Abb. 59

Abb. 60

# Tau Zeitkonstanten-Spektrum:

~3-13 µs   => Trichelpuls ( Einfacher Impuls)
~ 37 µs   => kleinste Trichelpulssequenz (3 oder 5 oder 7 Trichelimpulse)   Sequenzpaket 1
~7ms bis 19ms => Gruppierte Trichelimpulse ~513 Trichelimpulse   Sequenzpaket 2
*161ms   => 3 x Sequenz 2 mit 31-83ms Dauer zwischen den   Sequenzpaket 3

3-13µs   3-13µs   3-13µs    3-13µs   3-13µs   3-13µs    3-13µs   3-13µs   3-13µs    3-13µs   3-13µs   3-´13µs    7-13µs   3-13µs   3-13µs

Abb. 61

```
┌─────────────────┐      ┌─────────────────┐      ┌──────────────────────┐      ┌──────────────────────────┐
│ 40              │      │ 42              │      │ 44                   │      │ 46                       │
│                 │      │                 │      │                      │      │                          │
│ Arbitrary       │      │ Oszilloskop     │      │ Frequenzspektr.      │      │ PC mit Matlab            │
│ Signalgenerator │─────▶│ zur Analyse     │─────▶│ analyzer             │─────▶│ Berechnung der           │
│ z.B. Trichelimp.│      │ im Zeitbereich  │      │ zur Analyse der      │      │ Einschwingzeit und der   │
│                 │      │                 │      │ Signalamplituden     │      │ Zeitkonstanten zu den    │
│                 │      │                 │      │ im Frequenzbereich   │      │ gemessenen Frequenzen    │
│                 │      │                 │      │                      │      │ und Zuordnung der        │
│                 │      │                 │      │                      │      │ Zeitkonstanten zu den    │
│                 │      │                 │      │                      │      │ äquivalenten RC-Glieder  │
│ Anpassung der   │      │                 │      │                      │      ├──────────────────────────┤
│ Signale         │      │                 │      │                      │      │ PC mit Matlab         48 │
│            58   │      │                 │      │                      │      │ Berechnung der           │
│                 │      │                 │      │                      │      │ normalisierten Werte der │
│                 │      │                 │      │                      │      │ Amplituden und Leitwerte │
│                 │      │   PC mit Matlab  │     │                      ├──────────────────────────┤
│                 │      │   Trendanalyse zur    │                      │      │ PC mit Matlab         50 │
│                 │◀─────│   Veränderung der │◀───│                      │      │ Berechnung des           │
│                 │      │   Signalfrequenzen│    │                      │      │ DRT-Impedanzspektrums    │
│                 │      │            56   │      │                      │      │ und KI-basierende Analyse│
│                 │      │                 │      │                      │      ├──────────────────────────┤
│                 │      │                 │      │                      │      │ PC mit Matlab         60 │
│                 │      │                 │      │                      │      │ Verifizierung mit        │
│                 │      │                 │      │                      │      │ bekannten                │
│                 │      │                 │      │                      │      │ Nyquist-Impedanzspektren │
└─────────────────┘      └─────────────────┘      └──────────────────────┘      └──────────────────────────┘
```

Abb. 62

**50**

**Mobiltelefon als Arbitrary Signalgenerator**
z.B. Trichelimpuls

**Anpassung der Signale**
**58**

**Cloud Server**
Berechnung der Einschwingzeit und der Zeitkonstanten zu den ausgesendeten Frequenzen und Zuordnung der Zeitkonstanten zu den äquivalenten RC-Glieder

**52**

**54**

**Cloud Server**
Berechnung der normalisierten Werte der **48** Amplituden und Leitwerte

**Cloud Server**
Trendanalyse zur Veränderung der Signalfrequenzen

**56**

**Cloud Server** **50**
Berechnung des DRT-Impedanzspektrums und KI-basierende Analyse

**Cloud Server**
Verifizierung mit bekannten Nyquist-Impedanzspektren
**60**

Abb. 63

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012094768 A1, Kurt Stoll
- WO 2016165035 A1, Kurt Stoll
- WO 2018104135 A1, Kurt Stoll
- WO 9955151 A, Kurt Stoll
- WO 9955151 A1

**In der Beschreibung aufgeführte Nicht-Patentliteratur**

- **FABRIZIO LOMBARDO1\* ; MARCO SALVEMINI2 ; CARMINE FIORILLO1 ; TONY NOLAN3 ; LAURENCE J. ZWIEBEL4 ; JOSE M. RIBEIRO5 ; BRUNO ARCÀ1.** *Deciphering the olfactory repertoire of the tiger mosquito Aedes albopictus,* 2017
- **LILIANE ABUIN1 ; LUCIA L. PRIETO-GODINO1 ; HAIYUN PAN2 ; CRAIG GUTIERREZ2 ; LAN HUANG2 ; RONGSHENG JIN2 ; RICHARD BENTON1.** In vivo assembly and trafficking of olfactory Ionotropic Receptors. Center for Integrative Genomics; Genopode Building; Faculty of Biology and Medicine; University of Lausanne, Oktober 2018
- Neuroscience, Invertebrate Neurobiology, Molecular and Cellular Systems. **MONIKA STENGL.** The Oxford Handbook of Invertebrate Neurobiology. Februar 2017
- Identification of a Chemosensory Receptor from the Yellow Fever Mosquito, Aedes aegypti, that is Highly Conserved and Expressed in Olfactory and Gustatory Organs. **ANA CLAUDIA A. MELO1,2\* ; MICHAEL RÜTZLER1\* ; R. JASON PITTS1\* ; LAURENCE J. ZWIEBEL1.** Chem. Senses. 1Department of Biological Sciences, Center for Molecular Neuroscience and Program in Developmental Biology, Vanderbilt University, 2004, vol. 29, 403-410
- **S.J. COOPERA ; A. BERTEIA ; P.R. SHEARINGB ; J.A. KILNERC ; N.P. BRANDONA.** a Electrochemical Science and Engineering. Earth Science and Engineering Department, Imperial College London, 05. Juli 2016
- **UWE TRÖLTZSCH ; OLFA KANOUN.** Generalization of transmission line models for deriving the impedance of diffusion and porous media. Chemnitz University of Technology, Chair for Measurement and Sensor Technology, 2012
- **ANDREAS MANGLER ; JIL JASMIN EHNIS.** Robust and Universal Modeling Algorithm for Impedance Spectroscopy in Embedded Systems. *Germany IWIS Conference 2017 Chemnitz,* 2017
- Extension of Pulsewidth Modulation From Carrier-Based to Dither-Based. **SHIANG-HWUA YU ; TING-YU WU ; SING-HAN WANG.** IEEE Transactions on Industrial Informatics. IEEE, 24. September 2012, vol. 9, 1029-1036
- **J.P. MEYERS ; M. DOYLE ; R.M. DARLING ; J. NEWMAN.** *Journal of the Electrochemical,* 2000, vol. 2930
- **SAMUEL J. COOPERA ; ANTONIO BERTEIB ; DONAL P. FINEGANC ; NIGEL P. BRANDONB.** *Electrochimica Acta,* 27. Juli 2017, vol. 251, 681-689
- **E. BARSOUKOV ; J.R. MACDONALD.** Impedance Spectroscopy: Theory, Experiment,and Applications. 2005
- **H. KEISER ; K.D. BECCU ; M.A. GUTJAHR.** Abschätzung der porenstruktur poröser elektroden aus impedanzmessungen. *Electrochimica Acta,* 1976, vol. 21, 539-543
- **ALFAIFI, BANDAR et al.** Computer simulation analyses to improve radio frequency (RF) heating uniformity in dried fruits for insect control. *Innovative Food Science & Emerging Technologies,* 2016, vol. 37, 125-137
- **WANG, SHAOJIN et al.** Dielectric Properties of Fruits and Insect Pests as related to radio frequency and Microwave treatments. *Biosystems Engineering,* 2003, vol. 85 (2), 201-212